(19) Europäisches Patentamt
European Patent Office
Office européen des brevets

(11) EP 4 586 522 A1

(12) EUROPEAN PATENT APPLICATION
published in accordance with Art. 153(4) EPC

(43) Date of publication:
**16.07.2025 Bulletin 2025/29**

(21) Application number: **23869812.0**

(22) Date of filing: **28.06.2023**

(51) International Patent Classification (IPC):
***H04J 13/00*** *(2011.01)*

(52) Cooperative Patent Classification (CPC):
**H04J 13/00**

(86) International application number:
**PCT/CN2023/103487**

(87) International publication number:
**WO 2024/066564 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.09.2022 CN 202211217062**

(71) Applicant: **Huawei Technologies Co., Ltd.**
**Shenzhen, Guangdong 518129 (CN)**

(72) Inventors:
- **ZHOU, Zhengchun**
  **Chengdu, Sichuan 611756 (CN)**
- **YE, Zhifan**
  **Chengdu, Sichuan 611756 (CN)**
- **LIU, Chenchen**
  **Shenzhen, Guangdong 518129 (CN)**
- **PENG, Xiaohui**
  **Shenzhen, Guangdong 518129 (CN)**
- **QIAN, Bin**
  **Shenzhen, Guangdong 518129 (CN)**
- **WANG, Fan**
  **Shenzhen, Guangdong 518129 (CN)**
- **TANG, Xiaohu**
  **Chengdu, Sichuan 611756 (CN)**

(74) Representative: **Körber, Martin Hans**
**Mitscherlich PartmbB**
**Patent- und Rechtsanwälte**
**Karlstraße 7**
**80333 München (DE)**

# (54) ULTRA-WIDEBAND-BASED SENSING METHOD AND APPARATUS

(57) This application may be applied to an ultra-wideband UWB-based wireless local area network system, for example, a system supporting IEEE 802.15 series protocols, and may be further applied to a system supporting IEEE 802.11 series protocols. This application provides an ultra-widebandbased sensing method and an apparatus. The method includes: A transmitting end determines a transmitted waveform sequence set, where the transmitted waveform sequence set includes N sequences, the transmitted waveform sequence set includes a sequence having an aperiodic ZCZ, and a sequence length of the sequence is Q; and the transmitting end sends Q pulse bursts to a receiving end based on the N sequences, where each pulse burst includes N pulses, a $j^{th}$ pulse in an $i^{th}$ pulse burst in the Q pulse bursts corresponds to an $i^{th}$ element in a $j^{th}$ sequence in the N sequences, $1 \leq i \leq Q$, and $1 \leq j \leq N$. The foregoing transmitted waveform sequence set is used, so that no cyclic prefix or cyclic suffix is used, sensing performance of a transmitted waveform sequence can be ensured, and air interface time can be reduced.

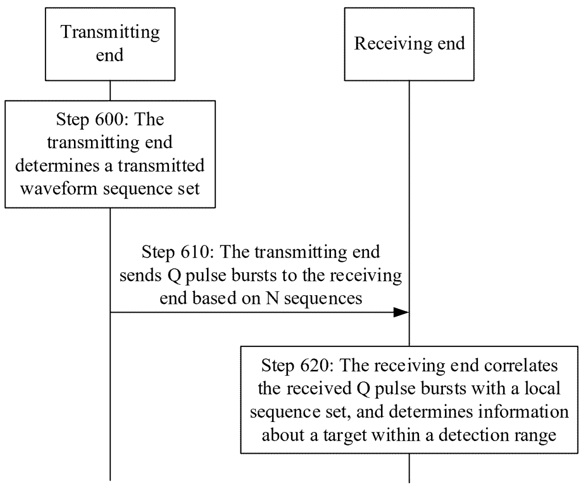


FIG. 6

EP 4 586 522 A1

## Description

### CROSS-REFERENCE TO RELATED APPLICATIONS

This application claims priority to Chinese Patent Application No. 202211217062.9, filed with the China National Intellectual Property Administration on September 30, 2022 and entitled "ULTRA-WIDEBAND-BASED SENSING METHOD AND APPARATUS", which is incorporated herein by reference in its entirety.

### TECHNICAL FIELD

Embodiments of this application relate to the field of wireless communication, and in particular, to an ultra-wideband-based sensing method and an apparatus.

### BACKGROUND

An ultra-wideband (ultra-wideband, UWB) technology is a wireless carrier communication technology, which uses nanosecond-level narrow pulses to transmit data. The narrow pulses occupy a wide spectrum range and have extremely low radiation spectrum density. A UWB system has advantages such as high multi-path resolution capacity, low power consumption, and high confidentiality. As the UWB technology is applied to the civil field, ultra-wideband wireless communication has become one of popular physical layer technologies for short-range and highspeed wireless networks.

To avoid a carrier frequency offset and interference between a plurality of devices, the UWB system usually uses a single-base-station mode or a multi-base-station mode for sensing. In a single-base-station sensing scenario, operating modes of a transmitter and a receiver may be classified into a full-duplex mode and a half-duplex mode. In the full-duplex mode, the transmitter and the receiver operate simultaneously. In this case, the transmitter causes severe interference to the receiver. For example, an echo of a weak target is submerged by a transmitted signal. In the half-duplex mode, interference caused by the transmitter to the receiver is greatly reduced, and only during detection of a near-distance target, an echo of a target may return before the transmitter switches to the receiver. In a multi-base-station sensing scenario, a target reflection path may be submerged by a direct path.

In a sensing scenario, as shown in the first row in FIG. 1, a high pulse repetition frequency (pulse repetition frequency, PRF) results in high transmit power, but an unambiguous range R decreases significantly. The unambiguous range R may also be referred to as a maximum unambiguous range, where R=0.5 c/PRF, and c is the speed of light. As shown in the second row in FIG. 1, a low PRF results in a decrease in transmit power and an increase in an unambiguous range.

As shown in the third row in FIG. 1, a transmission manner using a plurality of pulse bursts results in transmit power and a maximum unambiguous range. Each pulse burst (pulse burst) includes a plurality of pulses. A high PRF of the pulses can ensure the transmit power. In addition, periodic transmission of the pulse bursts can increase the unambiguous range.

A quantity of pulses included in each pulse burst is the same as a quantity of sequences included in a transmitted waveform sequence set. Currently, the transmitted waveform sequence set includes an Ipatov sequence and a cyclic shift sequence of the Ipatov sequence. The Ipatov sequence has a complete periodic autocorrelation characteristic, and a sequence set having a periodic zero correlation zone (zero correlation zone, ZCZ) may be generated through a cyclic shift. Using a sequence in the sequence set having the ZCZ as a transmitted waveform sequence can reduce interference between different sequences in the sequence set. However, to achieve a periodic correlation characteristic, a cyclic prefix and a cyclic suffix need to be added to the transmitted waveform sequence. This increases an actual length of the transmitted waveform sequence, and increases time required for sensing measurement, causing interference to another device or application (such as ranging and communication).

### SUMMARY

This application provides an ultra-wideband-based sensing method and an apparatus, to resolve a problem that time required for sensing measurement is increased due to a long length of a transmitted waveform sequence.

According to a first aspect, this application provides an ultra-wideband-based sensing method. The method includes:

A transmitting end determines a transmitted waveform sequence set, where the transmitted waveform sequence set includes N sequences, N is a positive integer, the transmitted waveform sequence set includes a sequence having an aperiodic zero correlation zone ZCZ, a sequence length of the sequence is Q, and Q is a positive integer; and the transmitting end sends Q pulse bursts to a receiving end based on the N sequences, where each pulse burst includes N pulses, a $j^{th}$ pulse in an $i^{th}$ pulse burst in the Q pulse bursts corresponds to an $i^{th}$ element in a $j^{th}$ sequence in the N sequences, i and j are positive integers, $1 \leq i \leq Q$, and $1 \leq j \leq N$.

The foregoing transmitted waveform sequence set is used, so that no cyclic prefix or cyclic suffix is used, sensing performance of a transmitted waveform sequence can be ensured, and air interface time can be reduced.

In a possible design, the transmitted waveform sequence set includes P sequences, where $P \geq N$, and P is a positive integer.

The transmitted waveform sequence set may include a plurality of sequences, and a transmitted waveform sequence set currently used by the transmitting end may include some or all of the plurality of sequences.

In a possible design, the transmitted waveform sequence set is constructed based on a first matrix, a second matrix, and a third matrix, where the first matrix, the second matrix, and the third matrix are all Hadamard matrices.

In a possible design, an order of the first matrix is the same as an order of the second matrix. The transmitted waveform sequence set is constructed by performing the following steps: constructing, based on the first matrix and the third matrix, a sequence set having a sequence length of M(Z+C), where M, Z, and C are positive integers, M is the order of the first matrix and the second matrix, Z is an order of the third matrix, and C is a preset value; and constructing, based on the second matrix and the sequence set having the sequence length of M(Z+C) through n iterations, a sequence set having a sequence length of $M^{n+1}(Z+C)$ as the transmitted waveform sequence set. For example, the sequence set having the sequence length of $M^{n+1}(Z+C)$ includes $M \times Z$ sequences, where when the transmitting end sends the Q pulse bursts to the receiving end based on the N sequences, $N \leq M \times Z$, $P = M \times Z$, and $Q = M^{n+1}(Z+C)$.

In a possible design, when the sequence set having the sequence length of M(Z+C) is constructed based on the first matrix and the third matrix, each element in a column with a sequence number s in the third matrix is multiplied by elements in a column with a sequence number t in the first matrix, and C columns of elements that are all 0s are added, to obtain a first to-be-processed matrix with a sequence number $M \times s+t$, where the first to-be-processed matrix with the sequence number $M \times s+t$ has M(Z+C) columns, $0 \leq s \leq Z-1$, and $0 \leq t \leq M-1$; and the first to-be-processed matrix with the sequence number $M \times s+t$ is output by row, to obtain a first sequence with a sequence number $M \times s + t$ in the sequence set having the sequence length of M(Z+C).

In a possible design, when the sequence set having the sequence length of $M^{n+1}(Z+C)$ is constructed based on the second matrix and the sequence set having the sequence length of M(Z+C) through the n iterations, a sequence set having a sequence length of $M^2(Z+C)$ is constructed based on the second matrix and the sequence set having the sequence length of M(Z+C) through one iteration.

In a possible design, when the sequence set having the sequence length of $M^2(Z+C)$ is constructed based on the second matrix and the sequence set having the sequence length of M(Z+C) through one iteration, an element with a sequence number w in a column with a sequence number t in the second matrix is multiplied by a first sequence with a sequence number $M \times s+w$, to obtain a second to-be-processed matrix with a sequence number $M \times s+t$, where w is 0 to M-1, and w is a positive integer; and the second to-be-processed matrix with the sequence number $M \times s+t$ is output by row, to obtain a second sequence with a sequence number $M \times s + t$ in the sequence set having the sequence length of $M^2(Z+C)$.

In a possible design, the transmitted waveform sequence set is constructed based on a sequence family, the sequence family includes a plurality of sequence sets, all of the sequence sets include a same quantity of sequences, and all of the sequences have a same sequence length. For all sequences in any sequence set in the sequence family, a sum of values of aperiodic autocorrelation functions respectively corresponding to all the sequences at a delay $\tau$ equal to 0 is a product of the quantity of sequences and the sequence length, and a sum of values of the aperiodic autocorrelation functions respectively corresponding to all the sequences at the delay $\tau$ not equal to 0 is zero. For all sequence groups determined based on any two sequence sets in the sequence family, each sequence group includes two sequences with a same sequence number, a sum of values of aperiodic cross-correlation functions respectively corresponding to all the sequence groups at the delay $\tau$ equal to 0 is zero, and a sum of values of the aperiodic cross-correlation functions respectively corresponding to all the sequence groups at the delay $\tau$ not equal to 0 is zero.

In a possible design, the transmitted waveform sequence set is constructed by performing the following step: adding K zero elements between two sequences in each sequence set in the sequence family, to obtain a sequence in the transmitted waveform sequence set, where K is a positive integer.

The foregoing method for constructing the transmitted waveform sequence set is simple, and a transmitted waveform sequence has better sensing performance than an Ipatov sequence.

In a possible design, the transmitted waveform sequence set includes:

$s_1$=(1, 1, 1, 1, 1, 1, 1, 1, 0, 0, 0, 0, -1, -1, 1, 1, -1, -1, 1, 1, 0, 0, 0, 0, -1, 1, -1, 1, -1, 1, -1, 1, 0, 0, 0, 0, -1, 1, 1, -1, -1, 1, 1, -1, 0, 0, 0, 0);

$s_2$=(-1, -1, 1, 1, -1, -1, 1, 1, 0, 0, 0, 0, 1, 1, 1, 1, 1, 1, 1, 1, 0, 0, 0, 0, 1, -1, -1, 1, 1, -1, -1, 1, 0, 0, 0, 0, 1, -1, 1, 1, -1, 1, -1, 0, 0, 0, 0);

$s_3$=(-1, 1, -1, 1, -1, 1, -1, 1, 0, 0, 0, 0, 1, -1, -1, 1, 1, -1, -1, 1, 0, 0, 0, 0, 1, 1, 1, 1, 1, 1, 1, 1, 0, 0, 0, 0, 1, 1, -1, -1, 1, 1, -1, -1, 0, 0, 0, 0);

$s_4$=(-1, 1, 1, -1, -1, 1, 1, -1, 0, 0, 0, 0, 1, -1, 1, -1, 1, -1, 1, -1, 0, 0, 0, 0, 1, 1, -1, -1, 1, 1, - --> 1, -1, 0, 0, 0, 0, 1, 1, 1, 1, 1, 1, 1, 1, 0, 0, 0, 0);

$s_5$=(1, 1, 1, 1, -1, -1, -1, -1, 0, 0, 0, 0, -1, -1, 1, 1, 1, 1, -1, -1, 0, 0, 0, 0, -1, 1, -1, 1, 1, -1, 1, -1, 0, 0, 0, 0, -1, 1, 1, -1, 1, -1, -1, 1, 0, 0, 0, 0);

$s_6$=(-1, -1, 1, 1, 1, 1, -1, -1, 0, 0, 0, 0, 1, 1, 1, 1, -1, -1, -1, -1, 0, 0, 0, 0, 1, -1, -1, 1, -1, 1, 1, -1, 0, 0, 0, 0, 1, -1, 1, -1, -1, 1, -1, 1, 0, 0, 0, 0);

$s_7$=(-1, 1, -1, 1, 1, -1, 1, -1, 0, 0, 0, 0, 1, -1, -1, 1, -1, 1, 1, -1, 0, 0, 0, 0, 1, 1, 1, 1, -1, -1, - 1, -1, 0, 0, 0, 0, 1, 1, -1, -1, -1, -1, 1, 1, 0, 0, 0, 0); and

$s_8$=(-1, 1, 1, -1, 1, -1, -1, 1, 0, 0, 0, 0, 1, -1, 1, -1, -1, 1, -1, 1, 0, 0, 0, 0, 1, 1, -1, -1, -1,-1, 1, 1, 0, 0, 0, 0, 1, 1, 1, 1, -1, -1, -1, -1, 0, 0, 0, 0).

For example, when the transmitting end sends the Q pulse bursts to the receiving end based on the N sequences, N≤8, P=8, and Q=48.

In a possible design, the transmitted waveform sequence set includes:

$s_1$=(1, 1, 1, 1, 1, 1, 1, 1, 1, 1, 1, 1, 1, 1, 1, 1, 0, 0, 0, 0, 0, 0, 0, 0, 1, -1, 1, -1, 1, -1, 1, -1, 1, - 1, 1, -1, 1, -1, 1, -1, 0, 0, 0, 0, 0, 0, 0, 0, 1, 1, -1, -1, 1, 1, -1, -1, 1, 1, -1, -1, 1, 1, -1, -1, 0, 0, 0, 0, 0, 0, 0, 0, 1, -1, -1, 1, 1, -1, -1, 1, 1, -1, -1, 1, 1, -1, -1, 1, 0, 0, 0, 0, 0, 0, 0, 0, 1, 1, 1, 1, -1, - 1, -1, -1, 1, 1, 1, 1, -1, -1, -1, -1, 0, 0, 0, 0, 0, 0, 0, 0, 1, -1, 1, -1, -1, 1, -1, 1, 1, -1, 1, -1, -1, 1, -1, 1, 0, 0, 0, 0, 0, 0, 0, 0, 1, 1, -1, -1, -1, -1, 1, 1, 1, 1, -1, -1, -1, -1, 1, 1, 0, 0, 0, 0, 0, 0, 0, 0, 1, -1, -1, 1, -1, 1, 1, -1, 1, -1, -1, 1, -1, 1, 1, -1, 0, 0, 0, 0, 0, 0, 0, 0);

$s_2$=(1, -1, 1, -1, 1, -1, 1, -1, 1, -1, 1, -1, 1, -1, 1, -1, 0, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0, 0, 1, -1, -1, 1, 1, -1, -1, 1, 1, -1, -1, 1, 1, -1, -1, 1, 0, 0, 0, 0, 0, 0, 0, 0, 1, 1, -1, -1, 1, 1, -1, -1, 1, 1, -1, -1, 1, 1, -1, -1, 0, 0, 0, 0, 0, 0, 0, 0, 1, -1, 1, -1, -1, 1, -1, 1, 1, -1, 1, -1, -1, 1, -1, 1, 0, 0, 0, 0, 0, 0, 0, 0, 1, 1, 1, 1, -1, -1, -1, -1, 1, 1, 1, 1, -1,-1, -1, -1, 0, 0, 0, 0, 0, 0, 0, 0, 1, -1, -1, 1, -1, 1, 1, -1, 1, -1, -1, 1, -1, 1, 1, -1, 0, 0, 0, 0, 0, 0, 0, 0, 1, 1, -1, -1, -1, -1, 1, 1, 1, 1, -1, -1, -1, -1, 1, 1, 0, 0, 0, 0, 0, 0, 0, 0);

$s_3$=(1, 1, -1, -1, 1, 1, -1, -1, 1, 1, -1, -1, 1, 1, -1, -1, 0, 0, 0, 0, 0, 0, 0, 0, 1, -1, -1, 1, 1, -1, -1, 1, 1, -1, -1, 1, 1, -1, -1, 1, 0, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0, 0, 1, -1, 1, -1, 1, -1, 1, -1, 1, -1, 1, -1, 1, -1, 1, -1, 0, 0, 0, 0, 0, 0, 0, 0, 1, 1, -1, -1, - 1, -1, 1, 1, 1, 1, -1, -1, -1, -1, 1, 1, 0, 0, 0, 0, 0, 0, 0, 0, 1, -1, -1, 1, -1, 1, 1, -1, 1, -1, -1, 1, -1, 1, 1, -1, 0, 0, 0, 0, 0, 0, 0, 0, 1, 1, 1, 1, -1, -1, -1, -1, 1, 1, 1, 1, -1, -1, -1, -1, 0, 0, 0, 0, 0, 0, 0, 0, 1, -1, 1, -1, -1, 1, -1, 1, 1, -1, 1, -1, -1, 1, -1, 1, 0, 0, 0, 0, 0, 0, 0, 0);

$s_4$=(1, -1, -1, 1, 1, -1, -1, 1, 1, -1, -1, 1, 1, -1, -1, 1, 0, 0, 0, 0, 0, 0, 0, 0, 1, 1, -1, -1, 1, 1,-1, -1, 1, 1, -1, -1, 1, 1, -1, -1, 0, 0, 0, 0, 0, 0, 0, 0, 1, -1, 1, -1, 1, -1, 1, -1, 1, -1, 1, -1, 1, -1, 1, -1, 0, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0, 0, 1, -1, -1, 1, - 1, 1, 1, -1, 1, -1, -1, 1, -1, 1, 1, -1, 0, 0, 0, 0, 0, 0, 0, 0, 1, 1, -1, -1, -1, -1, 1, 1, 1, -1, -1, -1, -1, 1, 1, 0, 0, 0, 0, 0, 0, 0, 0, 1, -1, 1, -1, -1, 1, -1, 1, 1, -1, 1, -1, -1, 1, -1, 1, 0, 0, 0, 0, 0, 0, 0, 0, --> 1, 1, 1, 1, -1, -1, -1, -1, 1, 1, 1, 1, -1, -1, -1, -1, 0, 0, 0, 0, 0, 0, 0, 0);

$s_5$=(1, 1, 1, 1, -1, -1, -1, -1, 1, 1, 1, 1, -1, -1, -1, -1, 0, 0, 0, 0, 0, 0, 0, 0, 1, -1, 1, -1, -1, 1, -1, 1, 1, -1, 1, -1, -1, 1, -1, 1, 0, 0, 0, 0, 0, 0, 0, 0, 1, 1, -1, -1, -1, -1, 1, 1, 1, 1, -1, -1, -1, -1, 1, 1, 0, 0, 0, 0, 0, 0, 0, 0, 1, -1, -1, 1, -1, 1, 1, -1, 1, -1, -1, 1, -1, 1, 1, -1, 0, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0, 0, 1, -1, 1, -1, 1, -1, 1, -1, 1, -1, 1, -1, 1, - 1, 1, -1, 0, 0, 0, 0, 0, 0, 0, 0, 1, 1, -1, -1, 1, 1, -1, -1, 1, 1, -1, -1, 1, 1, -1, -1, 0, 0, 0, 0, 0, 0, 0, 0, 1, -1, -1, 1, 1, -1, -1, 1, 1, -1, -1, 1, 1, -1, -1, 1, 0, 0, 0, 0, 0, 0, 0, 0);

$s_6$=(1, -1, 1, -1, -1, 1, -1, 1, 1, -1, 1, -1, -1, 1, -1, 1, 0, 0, 0, 0, 0, 0, 0, 0, 1, 1, 1, 1, -1, -1, - 1, -1, 1, 1, 1, 1, -1, -1, -1, -1, 0, 0, 0, 0, 0, 0, 0, 0, 1, -1, -1, 1, -1, 1, 1, -1, 1, -1, -1, 1, -1, 1, 1, -1, 0, 0, 0, 0, 0, 0, 0, 0, 1, 1, -1, -1, -1, -1, 1, 1, 1, 1, -1, -1, -1, -1, 1, 1, 0, 0, 0, 0, 0, 0, 0, 0, 1, - 1, 1, -1, 1, -1, 1, -1, 1, -1, 1, -1, 1, -1, 1,-1, 0, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0, 0, 1, -1, -1, 1, 1, -1, -1, 1, 1, -1, -1, 1, 1, -1, -1, 1, 0, 0, 0, 0, 0, 0, 0, 0, 1, 1, -1, -1, 1, 1, -1, -1, 1, 1, -1, -1, 1, 1, -1, -1, 0, 0, 0, 0, 0, 0, 0, 0);

$s_7$=(1, 1, -1, -1, -1, -1, 1, 1, 1, 1, -1, -1, -1, -1, 1, 1, 0, 0, 0, 0, 0, 0, 0, 0, 1, -1, -1, 1, -1, 1, 1, -1, 1, -1, -1, 1, -1, 1, 1, -1, 0, 0, 0, 0, 0, 0, 0, 0, 1, 1, 1, 1, -1, -1, -1, -1, 1, 1, 1, 1, -1, -1, -1, -1, 0, 0, 0, 0, 0, 0, 0, 0, 1, -1, 1, -1, -1, 1, -1, 1, 1, -1, 1, -1, -1, 1, -1, 1, 0, 0, 0, 0, 0, 0, 0, 0, 1, 1, -1, -1, 1, 1, -1, -1, 1, 1, -1, -1, 1, 1, -1, -1, 0, 0, 0, 0, 0, 0, 0, 0, 1, -1, -1, 1, 1, -1, -1, 1, 1, -1, - 1, 1, 1, -1, -1, 1, 0, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0, 0, 1, -1, 1, -1, 1, -1, 1, -1, 1, -1, 1, -1, 1, -1, 1, -1, 0, 0, 0, 0, 0, 0, 0, 0);

$s_8$=(1, -1, -1, 1, -1, 1, 1, -1, 1, -1, -1, 1, -1, 1, 1, -1, 0, 0, 0, 0, 0, 0, 0, 0, 1, 1, -1, -1, -1, - 1, 1, 1, 1, 1, -1, -1, -1, -1, 1, 1, 0, 0, 0, 0, 0, 0, 0, 0, 1, -1, 1, -1, -1, 1, -1, 1, 1, -1, 1, -1, 1, - 1, 1, 0, 0, 0, 0, 0, 0, 0, 0, 1, 1, 1, 1, -1, -1, -1, -1, 1, 1, 1, 1, -1, -1, -1, -1, 0, 0, 0, 0, 0, 0, 0, 0, 1, -1, -1, 1, 1, -1, -1, 1, 1, -1, -1, 1, 1, -1, -1, 1, 0, 0, 0, 0, 0, 0, 0, 0, 1, 1, -1, -1, 1, 1, -1, -1, 1, 1, -1, -1, 1, 1, -1, -1, 0, 0, 0, 0, 0, 0, 0, 0, 1, -1, 1, -1, 1, -1, 1, -1, 1, -1, 1, -1, 1, -1, 1, -1, 0, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0, 0);

$s_9$=(1, 1, 1, 1, 1, 1, 1, 1, -1, -1, -1, -1, -1, -1, -1, -1, 0, 0, 0, 0, 0, 0, 0, 0, 1, -1, 1, -1, 1, -1, 1, -1, -1, 1, -1, 1, -1, 1, -1, 1, 0, 0, 0, 0, 0, 0, 0, 0, 1, 1, -1, -1, 1, 1, -1, -1, -1, -1, 1, 1, -1, -1, 1, 1, 0, 0, 0, 0, 0, 0, 0, 0, 1, -1, -1, 1, 1, -1, -1, 1, -1, 1, 1, -1, -1, 1, 1, -1, 0, 0, 0, 0, 0, 0, 0, 0, 1, 1, 1, 1, -1, -1, -1, -1, -1, -1, -1, -1, 1, 1, 1, 1, 0, 0, 0, 0, 0, 0, 0, 0, 1, -1, 1, -1, -1, 1, -1, 1, -1, 1, - 1, 1, 1, -1, 1, -1, 0, 0, 0, 0, 0, 0, 0, 0, 1, 1, -1, -1, -1, -1, 1, 1, -1, -1, 1, 1, 1, 1, -1, -1, 0, 0, 0, 0, 0, 0, 0, 0, 1, -1, -1, 1, -1, 1, 1, -1, -1, 1, 1, -1, 1, -1, -1, 1, 0, 0, 0, 0, 0, 0, 0, 0);

$s_{10}$=(1, -1, 1, -1, 1, -1, 1, -1, -1, 1, -1, 1, -1, 1, -1, 1, 0, 0, 0, 0, 0, 0, 0, 0, 1, 1, 1, 1, 1, 1, 1, 1, -1, -1, -1, -1, -1, -1, -1, -1, 0, 0, 0, 0, 0, 0, 0, 0, 1, -1, -1, 1, 1, -1, -1, 1, -1, 1, 1, -1, -1, 1, 1, -1, 0, 0, 0, 0, 0, 0, 0, 0, 1, 1, -1, -1, 1, 1, -1, -1, -1, -1, 1, 1, -1, -1, 1, 1, 0, 0, 0, 0, 0, 0, 0, 0, 1, - 1, 1, -1, -1, 1, -1, 1, -1, 1, -1, 1, 1, -1, 1, -1, 0, 0, 0, 0, 0, 0, 0, 0, 1, 1, 1, 1, -1, -1, -1, -1, -1,-1, --> -1, -1, 1, 1, 1, 1, 0, 0, 0, 0, 0, 0, 0, 0, 1, -1, -1, 1, -1, 1, 1, -1, -1, 1, 1, -1, 1, -1, -1, 1, 0, 0, 0, 0, 0, 0, 0, 0, 1, 1, -1, -1, -1, -1, 1, 1, -1, -1, 1, 1, 1, 1, -1, -1, 0, 0, 0, 0, 0, 0, 0, 0);

$s_{11}$=(1, 1, -1, -1, 1, 1, -1, -1, -1, -1, 1, 1, -1, -1, 1, 1, 0, 0, 0, 0, 0, 0, 0, 0, 1, -1, -1, 1, 1, -1, -1, 1, -1, 1, 1, -1, -1, 1, 1, -1, 0, 0, 0, 0, 0, 0, 0, 0, 1, 1, 1, 1, 1, 1, 1, 1, -1, -1, -1, -1, -1, -1, -1, -1, 0, 0, 0, 0, 0, 0, 0, 0, 1, -1, 1, -1, 1, -1, 1, -1, -1, 1, -1, 1, -1, 1, -1, 1, 0, 0, 0, 0, 0, 0, 0, 0, 1, 1, -1, -1, -1, -1, 1, 1, -1, -1, 1, 1, 1, 1, -1, -1, 0, 0, 0, 0, 0, 0, 0, 0, 1, -1, -1, 1, -1, 1, 1, -1, -1, 1, 1, -1, 1, -1, -1, 1, 0, 0, 0, 0, 0, 0, 0, 0, 1, 1, 1, 1, -1, -1, -1, -1, -1, -1, -1, -1, 1, 1, 1, 1, 0, 0, 0, 0, 0, 0, 0, 0, 1, -1, 1, -1, -1, 1, -1, 1, -1, 1, -1, 1, 1, -1, 1, -1, 0, 0, 0, 0, 0, 0, 0, 0);

$s_{12}$=(1, -1, -1, 1, 1, -1, -1, 1, -1, 1, 1, -1, -1, 1, 1, -1, 0, 0, 0, 0, 0, 0, 0, 0, 1, 1, -1, -1, 1, 1, -1, -1, -1, -1, 1, 1, -1, -1, 1, 1, 0, 0, 0, 0, 0, 0, 0, 0, 1, -1, 1, -1, 1, -1, 1, -1, -1, 1, -1, 1, -1,1,-1, 1, 0, 0, 0, 0, 0, 0, 0, 0, 1, 1, 1, 1, 1, 1, 1, 1, -1, -1, -1, -1, -1, -1, -1, -1, 0, 0, 0, 0, 0, 0, 0, 0, 1, -1, -1, 1, -1, 1, 1, -1, -1, 1, 1, -1, 1, -1, -1, 1, 0, 0, 0, 0, 0, 0, 0, 0, 1, 1, -1, -1, -1, -1, 1, 1, -1, - 1, 1, 1, 1, 1, -1, -1, 0, 0, 0, 0, 0, 0, 0, 0, 1, -1, 1, -1, -1, 1, -1, 1, -1, 1, -1, 1, 1, -1, 1, 0, 0, 0, 0, 0, 0, 0, 0, 1, 1, 1, 1, -1, -1, -1, -1, -1, -1, -1, -1, 1, 1, 1, 1, 0, 0, 0, 0, 0, 0, 0, 0);

$s_{13}$=(1, 1, 1, 1, -1, -1, -1, -1, -1, -1, -1, -1, 1, 1, 1, 1, 0, 0, 0, 0, 0, 0, 0, 0, 1, -1, 1, -1, -1, 1, -1, 1, -1, 1, -1, 1, 1, -1, 1, -1, 0, 0, 0, 0, 0, 0, 0, 0, 1, 1, -1, -1, -1, -1, 1, 1, -1, -1, 1, 1, 1, 1, -1, -1, 0, 0, 0, 0, 0, 0, 0, 0, 1, -1, -1, 1, -1, 1, 1, -1, -1, 1, 1, -1, 1, -1, -1, 1, 0, 0, 0, 0, 0, 0, 0, 0, 1, 1, 1, 1, 1, 1, 1, 1, -1, -1, -1, -1, -1, -1, -1, -1, 0, 0, 0, 0, 0, 0, 0, 0, 1, -1, 1, -1, 1, -1, 1, -1, 1, -1, -1, 1, - 1, 1, - 1, 1, -1, 1, 0, 0, 0, 0, 0, 0, 0, 0, 1, 1, -1, -1, 1, 1, -1, -1, -1, -1, 1, 1, -1, -1, 1, 1, 0, 0, 0, 0, 0, 0, 0, 0, 1, -1, -1, 1, 1, -1, -1, 1, -1, 1, 1, -1, -1, 1, 1, -1, 0, 0, 0, 0, 0, 0, 0, 0);

$s_{14}$=(1, -1, 1, -1, -1, 1, -1, 1, -1, 1, -1, 1, 1, -1, 1, -1, 0, 0, 0, 0, 0, 0, 0, 0, 1, 1, 1, 1, -1, -1, -1, -1, -1, -1, -1, -1, 1, 1, 1, 1, 0, 0, 0, 0, 0, 0, 0, 0, 1, -1, -1, 1, -1, 1, 1, -1, -1, 1, 1, -1, 1, -1,-1, 1, 0, 0, 0, 0, 0, 0, 0, 0, 1, 1, -1, -1, -1, -1, 1, 1, -1, -1, 1, 1, 1, 1, -1, -1, 0, 0, 0, 0, 0, 0, 0, 0, 1, -1, 1, -1, 1, -1, 1, -1, 1, -1, -1, 1, -1, 1, -1, 1, -1, 1, 0, 0, 0, 0, 0, 0, 0, 0, 1, 1, 1, 1, 1, 1, 1, 1, 1, -1, -1, - 1, -1, -1, -1, -1, -1, -1, 0, 0, 0, 0, 0, 0, 0, 0, 1, -1, -1, 1, 1, -1, -1, 1, -1, 1, 1, 1, -1, -1, 1, 1, -1, 0, 0, 0, 0, 0, 0, 0, 0, 1, 1, -1, -1, 1, 1, -1, -1, -1, -1, 1, 1, -1, -1, 1, 1, 0, 0, 0, 0, 0, 0, 0, 0);

$s_{15}$=(1, 1, -1, -1, -1, -1, 1, 1, -1, -1, 1, 1, 1, 1, -1, -1, 0, 0, 0, 0, 0, 0, 0, 1, -1, -1, 1, -1, 1, 1, -1, -1, 1, 1, -1, 1, -1, -1, 1, 0, 0, 0, 0, 0, 0, 0, 1, 1, 1, 1, -1, -1, -1, -1, -1, -1, -1, -1, 1, 1, 1, 1, 0, 0, 0, 0, 0, 0, 0, 1, -1, 1, -1, -1, 1, -1, 1, -1, 1, -1, 1, 1, -1, 1, -1, 0, 0, 0, 0, 0, 0, 0, 1, 1, -1, -1, 1, 1, -1, -1, -1, -1, 1, 1, -1, -1, 1, 1, 0, 0, 0, 0, 0, 0, 0, 1, -1, -1, 1, 1, -1, -1, 1, -1, 1, 1, -1, -1, 1, 1, -1, 0, 0, 0, 0, 0, 0, 0, 1, 1, 1, 1, 1, 1, 1, -1, -1, -1, -1, -1, -1, -1, -1, 0, 0, 0, 0, 0, 0, 0, 1, -1, 1, -1, 1, -1, 1, -1, -1, 1, -1, 1, -1, 1, -1, 1, 0, 0, 0, 0, 0, 0, 0); and

$s_{16}$=(1, -1, -1, 1, -1, 1, 1, -1, -1, 1, 1, -1, 1, -1, -1, 1, 0, 0, 0, 0, 0, 0, 0, 1, 1, -1, -1, -1, - 1, 1, 1, -1, -1, 1, 1, 1, 1, -1, -1, 0, 0, 0, 0, 0, 0, 0, 1, -1, 1, -1, -1, 1, -1, 1, -1, 1, -1, 1, 1, -1, 1, -1, 0, 0, 0, 0, 0, 0, 0, 1, 1, 1, 1, -1, -1, -1, -1, -1, -1, -1, -1, 1, 1, 1, 1, 0, 0, 0, 0, 0, 0, 0, 1, - --> 1, -1, 1, 1, -1, -1, 1, -1, 1, 1, -1, -1, 1, 1, -1, 0, 0, 0, 0, 0, 0, 0, 1, 1, -1, -1, 1, 1, -1, -1, -1, - 1, 1, 1, -1, -1, 1, 1, 0, 0, 0, 0, 0, 0, 0, 1, -1, 1, -1, 1, -1, 1, -1, -1, 1, -1, 1, -1, 1, -1, 1, 0, 0, 0, 0, 0, 0, 0, 1, 1, 1, 1, 1, 1, 1, 1, -1, -1, -1, -1, -1, -1, -1, -1, 0, 0, 0, 0, 0, 0, 0).

For example, when the transmitting end sends the Q pulse bursts to the receiving end based on the N sequences, N≤16, P=16, and Q=192.

In a possible design, the transmitted waveform sequence set includes:

$s_1$ = (-1, -1, -1, 1, 1, -1, 1, 1, 0, 0, 0, 0, 0, 0, 0, 1, 1, 1, -1, 1, -1, 1, 1, 0, 0, 0, 0, 0, 0, 0, 1, -1, 1, 1, -1, -1, -1, 1, 0, 0, 0, 0, 0, 0, 0, -1, 1, -1, -1, -1, -1, -1, 1);

$s_2$ = (1, 1, 1, -1, 1, -1, 1, 1, 0, 0, 0, 0, 0, 0, 0, -1, -1, -1, 1, 1, -1, 1, 1, 0, 0, 0, 0, 0, 0, 0, -1, 1, -1, -1, -1, -1, -1, 1, 0, 0, 0, 0, 0, 0, 0, 1, -1, 1, 1, -1, -1, -1, 1);

$s_3$ = (1,1, -1, 1, -1, 1, 1, 1, 0, 0, 0, 0, 0, 0, 0, -1, -1, 1, -1, -1, 1, 1, 1, 0, 0, 0, 0, 0, 0, 0, -1, 1, 1, 1, 1, 1, -1, 1, 0, 0, 0, 0, 0, 0, 0, 1, -1, -1, -1, 1, 1, -1, 1); and

$s_4$ = (-1, -1, 1, -1, -1, 1, 1, 1, 0, 0, 0, 0, 0, 0, 0, 1, 1, -1, 1, -1, 1, 1, 1, 0, 0, 0, 0, 0, 0, 0, 1, -1, -1, -1, 1, 1, -1, 1, 0, 0, 0, 0, 0, 0, 0, -1, 1, 1, 1, 1, 1, -1, 1).

For example, when the transmitting end sends the Q pulse bursts to the receiving end based on the N sequences, N≤4, P=4, and Q=56.

In a possible design, the transmitted waveform sequence set includes:

$$s_1 = \begin{pmatrix} 1,1,-1,1,-1,1,-1,-1,1,1,0,0,0,0,0,0,0,0,0,1,1,-1,1,-1,1,-1,-1,1,1,0,0,0,0,0, \\ 0,0,0,0,0,1,1,-1,1,1,1,1,1,-1,-1,0,0,0,0,0,0,0,0,0,1,1,-1,1,1,1,1,1,-1,-1 \end{pmatrix}$$

$$s_2 = \begin{pmatrix} 1,1,-1,1,-1,1,-1,-1,1,1,0,0,0,0,0,0,0,0,0,-1,-1,1,-1,1,-1,1,1,-1,-1,0,0,0,0,0, \\ 0,0,0,0,0,1,1,-1,1,1,1,1,1,-1,-1,0,0,0,0,0,0,0,0,0,-1,-1,1,-1,-1,-1,-1,-1,1,1 \end{pmatrix}$$

$$s_3 = \begin{pmatrix} -1,-1,1,1,1,1,1,-1,1,1,0,0,0,0,0,0,0,0,0,-1,-1,1,1,1,1,1,-1,1,1,0,0,0,0,0,0, \\ 0,0,0,0,-1,-1,1,1,-1,1,-1,1,-1,-1,0,0,0,0,0,0,0,0,0,-1,-1,1,1,-1,1,-1,1,-1,-1 \end{pmatrix}$$

$$s_4 = \begin{pmatrix} -1,-1,1,1,1,1,1,-1,1,1,0,0,0,0,0,0,0,0,0,1,1,-1,-1,-1,-1,-1,1,-1,-1,0,0,0,0,0, \\ 0,0,0,0,0,-1,-1,1,1,-1,1,-1,1,-1,-1,0,0,0,0,0,0,0,0,0,1,1,-1,-1,1,-1,1,-1,1,1 \end{pmatrix}.$$

For example, when the transmitting end sends the Q pulse bursts to the receiving end based on the N sequences, N≤4, P=4, and Q=70.

In a possible design, the transmitted waveform sequence set includes:

$$s_1=\begin{pmatrix}1,1,-1,-1,1,-1,1,-1,1,-1,-1,1,-1,-1,-1,-1,0,0,0,0,0,0,0,0,0,0,0,0,0,0,0,0,1,1,-1,-1,1,-1,\\ 1,-1,-1,1,1,-1,1,1,1,1,0,0,0,0,0,0,0,0,0,0,0,0,0,0,0,0,1,-1,-1,1,1,1,1,1,1,1,-1,-1,-1,1,\\ -1,1,0,0,0,0,0,0,0,0,0,0,0,0,0,0,0,0,1,-1,-1,1,1,1,1,1,-1,-1,1,1,1,-1,1,-1\end{pmatrix}$$

$$s_2=\begin{pmatrix}1,1,-1,-1,1,-1,1,-1,-1,1,1,-1,1,1,1,1,0,0,0,0,0,0,0,0,0,0,0,0,0,0,0,0,1,1,-1,-1,1,-1,1,\\ -1,1,-1,-1,1,-1,-1,-1,-1,0,0,0,0,0,0,0,0,0,0,0,0,0,0,0,0,1,-1,-1,1,1,1,1,1,-1,-1,1,1,1,\\ -1,1,-1,0,0,0,0,0,0,0,0,0,0,0,0,0,0,0,0,1,-1,-1,1,1,1,1,1,1,-1,-1,-1,1,-1,1\end{pmatrix}$$

$$s_3=\begin{pmatrix}1,1,1,1,1,-1,-1,1,1,-1,1,-1,-1,-1,1,1,0,0,0,0,0,0,0,0,0,0,0,0,0,0,0,0,1,1,1,1,1,-1,-1,1,\\ -1,1,-1,1,1,1,-1,-1,0,0,0,0,0,0,0,0,0,0,0,0,0,0,0,0,1,-1,1,-1,1,1,-1,-1,1,1,1,1,-1,1,1,\\ -1,0,0,0,0,0,0,0,0,0,0,0,0,0,0,0,0,1,-1,1,-1,1,1,-1,-1,-1,-1,-1,-1,1,-1,-1,1\end{pmatrix}$$

$$s_4=\begin{pmatrix}1,1,1,1,1,-1,-1,1,-1,1,-1,1,1,1,-1,-1,0,0,0,0,0,0,0,0,0,0,0,0,0,0,0,0,1,1,1,1,1,-1,-1,1,\\ 1,-1,1,-1,-1,-1,1,1,0,0,0,0,0,0,0,0,0,0,0,0,0,0,0,0,1,-1,1,-1,1,1,-1,-1,-1,-1,-1,-1,1,-1,\\ -1,1,0,0,0,0,0,0,0,0,0,0,0,0,0,0,0,0,1,-1,1,-1,1,1,-1,-1,1,1,1,1,-1,1,1,-1\end{pmatrix}.$$

For example, when the transmitting end sends the Q pulse bursts to the receiving end based on the N sequences, N≤4, P=4, and Q=112.

In a possible design, the transmitted waveform sequence set includes:

$$s_1=\begin{pmatrix}1,1,-1,1,-1,1,-1,-1,1,1,1,1,-1,1,1,1,1,-1,-1,0,0,0,0,0,0,0,0,0,0,0,0,0,0,0,0,0,0,0,0,\\ 1,1,-1,1,-1,1,-1,-1,1,1,1,1,-1,1,1,1,1,-1,-1,0,0,0,0,0,0,0,0,0,0,0,0,0,0,0,0,0,0,0,0,\\ 1,1,-1,1,-1,1,-1,-1,1,1,-1,-1,1,-1,-1,-1,-1,-1,1,1,0,0,0,0,0,0,0,0,0,0,0,0,0,0,0,0,0,0,\\ 0,0,1,1,-1,1,-1,1,-1,-1,1,1,-1,-1,1,-1,-1,-1,-1,-1,1,1\end{pmatrix}$$

$$s_2=\begin{pmatrix}1,1,-1,1,-1,1,-1,-1,1,1,1,1,-1,1,1,1,1,-1,-1,0,0,0,0,0,0,0,0,0,0,0,0,0,0,0,0,0,0,0,0,\\ -1,-1,1,-1,1,-1,1,1,-1,-1,-1,-1,1,-1,-1,-1,-1,-1,1,1,0,0,0,0,0,0,0,0,0,0,0,0,0,0,0,0,0,\\ 0,0,0,1,1,-1,1,-1,1,-1,-1,1,1,-1,-1,1,-1,-1,-1,-1,-1,1,1,0,0,0,0,0,0,0,0,0,0,0,0,0,0,0,\\ 0,0,0,0,0,-1,-1,1,-1,1,-1,1,1,-1,-1,1,1,-1,1,1,1,1,1,-1,-1\end{pmatrix}$$

$$s_3=\begin{pmatrix}1,1,-1,-1,-1,-1,-1,1,-1,-1,1,1,-1,-1,1,-1,1,-1,1,1,0,0,0,0,0,0,0,0,0,0,0,0,0,0,0,0,0,0,0,\\ 0,1,1,-1,-1,-1,-1,-1,1,-1,-1,1,1,-1,-1,1,-1,1,-1,1,1,0,0,0,0,0,0,0,0,0,0,0,0,0,0,0,0,0,0,\\ 0,0,1,1,-1,-1,-1,-1,-1,1,-1,-1,-1,-1,1,1,-1,1,-1,1,-1,-1,0,0,0,0,0,0,0,0,0,0,0,0,0,0,0,0,\\ 0,0,0,0,1,1,-1,-1,-1,-1,-1,1,-1,-1,-1,-1,1,1,-1,1,-1,1,-1,-1\end{pmatrix}$$

$$s_4=\begin{pmatrix}1,1,-1,-1,-1,-1,-1,1,-1,-1,1,1,-1,-1,1,-1,1,-1,1,1,0,0,0,0,0,0,0,0,0,0,0,0,0,0,0,0,0,0,0,\\ 0,-1,-1,1,1,1,1,1,-1,1,1,-1,-1,1,1,-1,1,-1,1,-1,-1,0,0,0,0,0,0,0,0,0,0,0,0,0,0,0,0,0,0,\\ 0,1,1,-1,-1,-1,-1,-1,1,-1,-1,-1,-1,1,1,-1,1,-1,1,-1,-1,0,0,0,0,0,0,0,0,0,0,0,0,0,0,0,0,0,\\ 0,0,0,-1,-1,1,1,1,1,1,-1,1,1,1,1,-1,-1,1,-1,1,-1,1,1\end{pmatrix}.$$

For example, when the transmitting end sends the Q pulse bursts to the receiving end based on the N sequences, N≤4, P=4, and Q=140.

According to a second aspect, this application provides an ultra-wideband-based sensing method. The method includes:

A receiving end receives Q pulse bursts from a transmitting end, where each pulse burst includes N pulses, a $j^{th}$ pulse in an $i^{th}$ pulse burst in the Q pulse bursts corresponds to an $i^{th}$ element in a $j^{th}$ sequence in a transmitted waveform sequence set, i and j are positive integers, the transmitted waveform sequence set includes N sequences, N is a positive integer, the transmitted waveform sequence set includes a sequence having an aperiodic ZCZ, a sequence length of the sequence is Q, Q is a positive integer, 1≤i≤Q, and 1≤j≤N; and the receiving end correlates the Q pulse bursts with a local sequence set, and determines information about a target within a detection range, where the local sequence set is the same as the transmitted waveform sequence set, and the detection range is related to a size of the ZCZ and a repetition period of the pulse burst.

The foregoing transmitted waveform sequence set is used, so that no cyclic prefix is cyclic suffix is used, sensing performance of a transmitted waveform sequence can be ensured, and air interface time can be reduced.

In a possible design, the detection range is a half of a product of the size of the ZCZ, the repetition period of the pulse burst, and the speed of light.

In a possible design, the information about the target includes distance information of the target or speed information of the target.

In a possible design, the transmitted waveform sequence set includes P sequences, where P≥N, and P is a positive integer.

In a possible design, the transmitted waveform sequence set is constructed based on a first matrix, a second matrix, and a third matrix, where the first matrix, the second matrix, and the third matrix are all Hadamard matrices.

In a possible design, an order of the first matrix is the same as an order of the second matrix.

The transmitted waveform sequence set is constructed by performing the following steps:

constructing, based on the first matrix and the third matrix, a sequence set having a sequence length of M(Z+C), where M, Z, and C are positive integers, M is the order of the first matrix and the second matrix, Z is an order of the third matrix, and C is a preset value; and

constructing, based on the second matrix and the sequence set having the sequence length of M(Z+C) through n iterations, a sequence set having a sequence length of $M^{n+1}(Z+C)$ as the transmitted waveform sequence set, where n is a positive integer. For example, the sequence set having the sequence length of $M^{n+1}(Z+C)$ includes M×Z sequences, where N≤M×Z, P=M×Z, and Q=$M^{n+1}(Z+C)$.

In a possible design, the transmitted waveform sequence set is constructed based on a sequence family, the sequence family includes a plurality of sequence sets, all of the sequence sets include a same quantity of sequences, and all of the sequences have a same sequence length.

For all sequences in any sequence set in the sequence family, a sum of values of aperiodic autocorrelation functions respectively corresponding to all the sequences at a delay $\tau$ equal to 0 is a product of the quantity of sequences and the sequence length, and a sum of values of the aperiodic autocorrelation functions respectively corresponding to all the sequences at the delay $\tau$ not equal to 0 is zero.

For all sequence groups determined based on any two sequence sets in the sequence family, each sequence group includes two sequences with a same sequence number, a sum of values of aperiodic cross-correlation functions respectively corresponding to all the sequence groups at the delay $\tau$ equal to 0 is zero, and a sum of values of the aperiodic cross-correlation functions respectively corresponding to all the sequence groups at the delay $\tau$ not equal to 0 is zero.

In a possible design, the transmitted waveform sequence set is constructed by performing the following step: adding K zero elements between two sequences in each sequence set in the sequence family, to obtain a sequence in the transmitted waveform sequence set, where K is a positive integer.

In a possible design, the transmitted waveform sequence set includes:

$s_1$=(1, 1, 1, 1, 1, 1, 1, 1, 0, 0, 0, 0, -1, -1, 1, 1, -1, -1, 1, 1, 0, 0, 0, 0, -1, 1, -1, 1, -1, 1, -1, 1, 0, 0, 0, 0, -1, 1, 1, -1, -1, 1, 1, -1, 0, 0, 0, 0);

$s_2$=(-1, -1, 1, 1, -1, -1, 1, 1, 0, 0, 0, 0, 1, 1, 1, 1, 1, 1, 1, 1, 0, 0, 0, 0, 1, -1, -1, 1, 1, -1, -1, 1, 0, 0, 0, 0, 1, -1, 1, -1, 1, -1, 1, -1, 0, 0, 0, 0);

$s_3$=(-1, 1, -1, 1, -1, 1, -1, 1, 0, 0, 0, 0, 1, -1, -1, 1, 1, -1, -1, 1, 0, 0, 0, 0, 1, 1, 1, 1, 1, 1, 1, 1, 0, 0, 0, 0, 1, 1, -1, -1, 1, 1, -1, -1, 0, 0, 0, 0);

$s_4$=(-1, 1, 1, -1, -1, 1, 1, -1, 0, 0, 0, 0, 1, -1, 1, -1, 1, -1, 1, -1, 0, 0, 0, 0, 1, 1, -1, -1, 1, 1,-1, -1, 0, 0, 0, 0, 1, 1, 1, 1, 1, 1, 1, 1, 0, 0, 0, 0);

$s_5$=(1, 1, 1, 1, -1, -1, -1, -1, 0, 0, 0, 0, -1, -1, 1, 1, 1, 1, -1, -1, 0, 0, 0, 0, -1, 1, -1, 1, 1, -1, 1, -1, 0, 0, 0, 0, -1, 1, 1, -1, 1, -1, -1, 1, 0, 0, 0, 0);

$s_6$=(-1, -1, 1, 1, 1, 1, -1, -1, 0, 0, 0, 0, 1, 1, 1, 1, -1, -1, -1, -1, 0, 0, 0, 0, 1, -1, -1, 1, -1, 1, 1, -1, 0, 0, 0, 0, 1, -1, 1, -1, -1, 1, -1, 1, 0, 0, 0, 0);

$s_7$=(-1, 1, -1, 1, 1, -1, 1, -1, 0, 0, 0, 0, 1, -1, -1, 1, -1, 1, 1, -1, 0, 0, 0, 0, 1, 1, 1, 1, -1, -1, - 1, -1, 0, 0, 0, 0, 1, 1, -1, -1, -1, -1, 1, 1, 0, 0, 0, 0); and

$s_8$=(-1, 1, 1, -1, 1, -1, -1, 1, 0, 0, 0, 0, 1, -1, 1, -1, -1, 1, -1, 1, 0, 0, 0, 0, 1, 1, -1, -1, -1, - 1, 1, 1, 0, 0, 0, 0, 1, 1, 1, 1, -1, -1, -1, -1, 0, 0, 0, 0).

For example, N≤8, P=8, and Q=48.

In a possible design, the transmitted waveform sequence set includes:

$s_1$=(1, 1, 1, 1, 1, 1, 1, 1, 1, 1, 1, 1, 1, 1, 1, 1, 0, 0, 0, 0, 0, 0, 0, 1, -1, 1, -1, 1, -1, 1, -1, 1, - 1, 1, -1, 1, -1, 1, -1, 0, 0, 0, 0, 0, 0, 0, 0, 1, 1, -1, -1, 1, 1, -1, -1, 1, 1, -1, -1, 1, 1, -1, -1, 0, 0, 0, 0, 0, 0, 0, 1, -1, -1, 1, 1, -1, -1, 1, 1, -1, -1, 1, 1, -1, -1, 1, 0, 0, 0, 0, 0, 0, 0, 1, 1, 1, 1, -1, - 1, -1, -1, 1, 1, 1, 1, -1, -1, -1, -1, 0, 0, 0, 0, 0, 0, 0, 1, -1, 1, -1, -1, 1, -1, 1, 1, -1, 1, -1, -1, 1, -1, 1, 0, 0, 0, 0, 0, 0, 0, 1, 1, -1, -1, -1, -1, 1, 1, 1, 1, -1, -1, -1, -1, 1, 1, 0, 0, 0, 0, 0, 0, 0, 1, --> -1, 1, -1, 1, 1, -1, 1, -1, -1, 1, -1, 1, 1, 0, 0, 0, 0, 0, 0, 0);

$s_2$=(1, -1, 1, -1, 1, -1, 1, -1, 1, -1, 1, -1, 1, -1, 1, -1, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0, 0, 1, -1, -1, 1, 1, -1, -1, 1, 1, -1, -1, 1, 1, -1, -1, 1, 0, 0, 0, 0, 0, 0, 0, 1, 1, -1, -1, 1, 1, -1, -1, 1, 1, -1, -1, 1, 1, -1, - 1, 0, 0, 0, 0, 0, 0, 0, 1, -1, 1, -1, -1, 1, -1, 1, 1, -1, 1, -1, -1, 1, -1, 1, 0, 0, 0, 0, 0, 0, 0, 1, 1, 1, 1, -1, -1, -1, -1, 1, 1, 1, 1, -1,-1, -1, -1, 0, 0, 0, 0, 0, 0, 0, 1, -1, -1, 1, -1, 1, 1, -1, 1, -1, -1, 1, -1, 1, 1, -1, 0, 0, 0, 0, 0, 0, 0, 1, 1, -1, -1, -1, -1, 1, 1, 1, 1, -1, -1, -1, -1, 1, 1, 0, 0, 0, 0, 0, 0, 0);

$s_3$=(1, 1, -1, -1, 1, 1, -1, -1, 1, 1, -1, -1, 1, 1, -1, -1, 0, 0, 0, 0, 0, 0, 0, 1, -1, -1, 1, 1, -1, -1, 1, 1, -1, -1, 1, 1, -1, -1, 1, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0, 1, -1, 1, -1, 1, -1, 1, -1, 1, -1, 1, -1, 1, -1, 1, -1, 0, 0, 0, 0, 0, 0, 0, 1, 1, -1, -1, - 1, -1, 1, 1, 1, 1, -1, -1, -1, -1, 1, 1, 0, 0, 0, 0, 0, 0, 0, 1, -1, -1, 1, -1, 1, 1, -1, 1, -1, -1, 1, -1, 1, 1, -1, 0, 0, 0, 0, 0, 0, 0, 1, 1, 1, 1, -1, -1, -1, -1, 1, 1, 1, 1, -1, -1, -1, -1, 0, 0, 0, 0, 0, 0, 0, 1, -1, 1, -1, -1, 1, -1, 1, 1, -1, 1, -1, -1, 1, -1, 1, 0, 0, 0, 0, 0, 0, 0);

$s_4$=(1, -1, -1, 1, 1, -1, -1, 1, 1, -1, -1, 1, 1, -1, -1, 1, 0, 0, 0, 0, 0, 0, 0, 1, 1, -1, -1, 1, 1, - 1, - 1, 1, 1, -1, -1, 1, 1, -1, -1, 0, 0, 0, 0, 0, 0, 0, 0, 1, -1, 1, -1, 1, -1, 1, -1, 1, -1, 1, -1, 1, -1, 1, -1, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0, 1, -1, -1, 1, - 1, 1, 1, -1, 1, -1, -1, 1, -1, 1, 1, -1, 0, 0, 0, 0, 0, 0, 0, 1, 1, -1, -1, -1, -1, 1, 1, 1, 1, -1, -1, -1, -1, 1, 1, 0, 0, 0, 0, 0, 0, 0, 1, -1, 1, -1, -1, 1, -1, 1, 1, -1, 1, -1, -1, 1, -1, 1, 0, 0, 0, 0, 0, 0, 0, 1, 1, 1, 1, -1, -1, -1, -1, 1, 1, 1, 1, -1, -1, -1, -1, 0, 0, 0, 0, 0, 0, 0);

$s_5$=(1, 1, 1, 1, -1, -1, -1, -1, 1, 1, 1, 1, -1, -1, -1, -1, 0, 0, 0, 0, 0, 0, 0, 1, -1, 1, -1, -1, 1, -1, 1, 1, -1, 1, -1, -1, 1, -1, 1, 0, 0, 0, 0, 0, 0, 0, 0, 1, 1, -1, -1, -1, -1, 1, 1, 1, 1, -1, -1, -1, -1, 1, 1, 0, 0, 0, 0, 0, 0, 0, 1, -1, -1, 1, -1, 1, 1, -1, 1, -1, -1, 1, -1, 1, 1, -1, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0, 1, -1, 1, -1, 1, -1, 1, -1, 1, -1, 1, -1, 1, - 1, 1, -1, 0, 0, 0, 0, 0, 0, 0, 1, 1, -1, -1, 1, 1, -1, -1, 1, 1, -1, -1, 1, 1, -1, -1, 0, 0, 0, 0, 0, 0, 0, 1, -1, -1, 1, 1, -1, -1, 1, 1, -1, -1, 1, 1, -1, -1, 1, 0, 0, 0, 0, 0, 0, 0);

$s_6$=(1, -1, 1, -1, -1, 1, -1, 1, 1, -1, 1, -1, -1, 1, -1, 1, 0, 0, 0, 0, 0, 0, 0, 0, 1, 1, 1, 1, -1, -1, - 1, -1, 1, 1, 1, 1, -1, -1, -1, -1, 0, 0, 0, 0, 0, 0, 0, 0, 1, -1, -1, 1, -1, 1, 1, -1, 1, -1, -1, 1, -1, 1, 1, -1, 0, 0, 0, 0, 0, 0, 0, 0, 1, 1, -1, -1, -1, -1, 1, 1, 1, 1, -1, -1, -1, -1, 1, 1, 0, 0, 0, 0, 0, 0, 0, 0, 1, - 1, 1, -1, 1, -1, 1, -1, 1, -1, 1, -1, 1, -1, 1, -1, 0, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0, 0, 1, -1, -1, 1, 1, -1, -1, 1, 1, -1, -1, 1, 1, -1, -1, 1, 0, 0, 0, 0, 0, 0, 0, 0, 1, 1, -1, -1, 1, 1, -1, -1, 1, 1, -1, -1, 1, 1, -1, -1, 0, 0, 0, 0, 0, 0, 0, 0);

$s_7$=(1, 1, -1, -1, -1, -1, 1, 1, 1, 1, -1, -1, -1, -1, 1, 1, 0, 0, 0, 0, 0, 0, 0, 0, 1, -1, -1, 1, -1, 1, 1, -1, 1, -1, -1, 1, -1, 1, 1, -1, 0, 0, 0, 0, 0, 0, 0, 0, 1, 1, 1, 1, -1, -1, -1, -1, 1, 1, 1, 1, -1, -1, -1, -1, 0, 0, 0, 0, 0, 0, 0, 0, 1, -1, 1, -1, -1, 1, -1, 1, 1, -1, 1, -1, -1, 1, -1, 1, 0, 0, 0, 0, 0, 0, 0, 0, 1, 1, -1, -1, 1, 1, -1, -1, 1, 1, -1, -1, 1, 1, -1, -1, 0, 0, 0, 0, 0, 0, 0, 0, 1, -1, -1, 1, 1, -1, -1, 1, 1, -1, - --> 1, 1, 1, -1, -1, 1, 0, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0, 0, 1, -1, 1, -1, 1, -1, 1, 1, -1, 1, -1, 1, -1, 1, -1, 0, 0, 0, 0, 0, 0, 0, 0);

$s_8$=(1, -1, -1, 1, -1, 1, 1, -1, 1, -1, -1, 1, -1, 1, 1, -1, 0, 0, 0, 0, 0, 0, 0, 0, 1, 1, -1, -1, -1, - 1, 1, 1, 1, 1, -1, -1, -1, -1, 1, 1, 0, 0, 0, 0, 0, 0, 0, 0, 1, -1, 1, -1, -1, 1, -1, 1, 1, -1, 1, -1, 1, - 1, 1, 0, 0, 0, 0, 0, 0, 0, 0, 1, 1, 1, 1, -1, -1, -1, -1, 1, 1, 1, 1, -1, -1, -1, -1, 0, 0, 0, 0, 0, 0, 0, 0, 1, -1, -1, 1, 1, -1, -1, 1, 1, -1, -1, 1, 1, -1, -1, 1, 0, 0, 0, 0, 0, 0, 0, 0, 1, 1, -1, -1, 1, 1, -1, -1, 1, 1, -1, -1, 1, 1, -1, -1, 0, 0, 0, 0, 0, 0, 0, 0, 1, -1, 1, -1, 1, -1, 1, -1, 1, -1, 1, -1, 1, -1, 1, -1, 0, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0, 0);

$s_9$=(1, 1, 1, 1, 1, 1, 1, 1, -1, -1, -1, -1, -1, -1, -1, -1, 0, 0, 0, 0, 0, 0, 0, 0, 1, -1, 1, -1, 1, -1, 1, -1, -1, 1, -1, 1, -1, 1, -1, 1, 0, 0, 0, 0, 0, 0, 0, 0, 1, 1, -1, -1, 1, 1, -1, -1, -1, -1, 1, 1, -1, -1, 1, 1, 0, 0, 0, 0, 0, 0, 0, 0, 1, -1, -1, 1, 1, -1, -1, 1, -1, 1, 1, -1, -1, 1, 1, -1, 0, 0, 0, 0, 0, 0, 0, 0, 1, 1, 1, 1, -1, -1, -1, -1, -1, -1, -1, -1, 1, 1, 1, 1, 0, 0, 0, 0, 0, 0, 0, 0, 1, -1, 1, -1, -1, 1, -1, 1, -1, 1, - 1, 1, 1, -1, 1, -1,0,0,0,0,0,0,0,0, 1, 1, -1, -1, -1, -1, 1, 1, -1, -1, 1, 1, 1, 1, -1, -1, 0, 0, 0, 0, 0, 0, 0, 0, 1, -1, -1, 1, -1, 1, 1, -1, -1, 1, 1, -1, 1, -1, -1, 1, 0, 0, 0, 0, 0, 0, 0, 0);

$s_{10}$=(1, -1, 1, -1, 1, -1, 1, -1, -1, 1, -1, 1, -1, 1, -1, 1, 0, 0, 0, 0, 0, 0, 0, 0, 1, 1, 1, 1, 1, 1, 1, 1, -1, -1, -1, -1, -1, -1, -1, -1, 0, 0, 0, 0, 0, 0, 0, 0, 1, -1, -1, 1, 1, -1, -1, 1, -1, 1, 1, -1, -1, 1, 1, -1, 0, 0, 0, 0, 0, 0, 0, 0, 1, 1, -1, -1, 1, 1, -1, -1, -1, -1, 1, 1, -1, -1, 1, 1, 0, 0, 0, 0, 0, 0, 0, 0, 1, - 1, 1, -1, -1, 1, -1, 1, -1, 1, -1, 1, 1, -1, 1, -1, 0, 0, 0, 0, 0, 0, 0, 0, 1, 1, 1, 1, -1, -1, -1, -1, -1,-1, -1, -1, 1, 1, 1, 1, 0, 0, 0, 0, 0, 0, 0, 0, 1, -1, -1, 1, -1, 1, 1, -1, -1, 1, 1, -1, 1, -1, -1, 1, 0, 0, 0, 0, 0, 0, 0, 0, 1, 1, -1, -1, -1, -1, 1, 1, -1, -1, 1, 1, 1, 1, -1, -1, 0, 0, 0, 0, 0, 0, 0, 0);

$s_{11}$=(1, 1, -1, -1, 1, 1, -1, -1, -1, -1, 1, 1, -1, -1, 1, 1, 0, 0, 0, 0, 0, 0, 0, 0, 1, -1, -1, 1, 1, -1, -1, 1, -1, 1, 1, -1, -1, 1, 1, -1, 0, 0, 0, 0, 0, 0, 0, 0, 1, 1, 1, 1, 1, 1, 1, 1, -1, -1, -1, -1, -1, -1, -1, -1, 0, 0, 0, 0, 0, 0, 0, 0, 1, -1, 1, -1, 1, -1, 1, -1, -1, 1, -1, 1, -1, 1, -1, 1, 0, 0, 0, 0, 0, 0, 0, 0, 1, 1, -1, -1, -1, -1, 1, 1, -1, -1, 1, 1, 1, 1, -1, -1, 0, 0, 0, 0, 0, 0, 0, 0, 1, -1, -1, 1, -1, 1, 1, -1, -1, 1, 1, -1, 1, -1, -1, 1, 0, 0, 0, 0, 0, 0, 0, 0, 1, 1, 1, 1, -1, -1, -1, -1, -1, -1, -1, -1, 1, 1, 1, 1, 0, 0, 0, 0, 0, 0, 0, 0, 1, -1, 1, -1, -1, 1, -1, 1, -1, 1, -1, 1, 1, -1, 1, -1, 0, 0, 0, 0, 0, 0, 0, 0);

$s_{12}$=(1, -1, -1, 1, 1, -1, -1, 1, -1, 1, 1, -1, -1, 1, 1, -1, 0, 0, 0, 0, 0, 0, 0, 0, 1, 1, -1, -1, 1, 1, -1, -1, -1, -1, 1, 1, -1, -1, 1, 1, 0, 0, 0, 0, 0, 0, 0, 0, 1, -1, 1, -1, 1, -1, 1, -1, -1, 1, -1, 1, -1, 1,-1, 1, 0, 0, 0, 0, 0, 0, 0, 0, 1, 1, 1, 1, 1, 1, 1, 1, -1, -1, -1, -1, -1, -1, -1, -1, 0, 0, 0, 0, 0, 0, 0, 0, 1, -1, -1, 1, -1, 1, 1, -1, -1, 1, 1, -1, 1, -1, -1, 1, 0, 0, 0, 0, 0, 0, 0, 0, 1, 1, -1, -1, -1, -1, 1, 1, -1, - 1, 1, 1, 1, 1, -1, -1,0,0,0,0,0,0,0,0, 1, -1, 1, -1, -1, 1, -1, 1, -1, 1, -1, 1, 1, -1, 1, -1,0,0,0, 0, 0, 0, 0, 0, 1, 1, 1, 1, -1, -1, -1, -1, -1, -1, -1, -1, 1, 1, 1, 1, 0, 0, 0, 0, 0, 0, 0, 0);

$s_{13}$=(1, 1, 1, 1, -1, -1, -1, -1, -1, -1, -1, -1, 1, 1, 1, 1, 0, 0, 0, 0, 0, 0, 0, 0, 1, -1, 1, -1, -1, 1, -1, 1, -1, 1, -1, 1, 1, -1, 1, -1, 0, 0, 0, 0, 0, 0, 0, 0, 1, 1, -1, -1, -1, -1, 1, 1, -1, -1, 1, 1, 1, 1, -1, -1, 0, 0, 0, 0, 0, 0, 0, 0, 1, -1, -1, 1, -1, 1, 1, -1, -1, 1, 1, -1, 1, -1, -1, 1, 0, 0, 0, 0, 0, 0, 0, 0, 1, 1, --> 1, 1, 1, 1, 1, 1, -1, -1, -1, -1, -1, -1, -1, -1, 0, 0, 0, 0, 0, 0, 0, 0, 1, -1, 1, -1, 1, -1, 1, -1, -1, 1, - 1, 1, -1, 1, -1, 1, 0, 0, 0, 0, 0, 0, 0, 0, 1, 1, -1, -1, 1, 1, -1, -1, -1, -1, 1, 1, -1, -1, 1, 1, 0, 0, 0, 0, 0, 0, 0, 0, 1, -1, -1, 1, 1, -1, -1, 1, -1, 1, 1, -1, -1, 1, 1, -1, 0, 0, 0, 0, 0, 0, 0, 0);

$s_{14}$=(1, -1, 1, -1, -1, 1, -1, 1, -1, 1, -1, 1, 1, -1, 1, -1, 0, 0, 0, 0, 0, 0, 0, 0, 1, 1, 1, 1, -1, -1, -1, -1, -1, -1, -1, -1, 1, 1, 1, 1, 0, 0, 0, 0, 0, 0, 0, 0, 1, -1, -1, 1, -1, 1, 1, -1, -1, 1, 1, -1, 1, -1, - 1, 1, 0, 0, 0, 0, 0, 0, 0, 0, 1, 1, -1, -1, -1, -1, 1, 1, -1, -1, 1, 1, 1, -1, -1, 0, 0, 0, 0, 0, 0, 0, 0, 1, -1, 1, -1, 1, -1, 1, -1, -1, 1, -1, 1, -1, 1, -1, 1, 0, 0, 0, 0, 0, 0, 0, 0, 1, 1, 1, 1, 1, 1, 1, 1, -1, -1, - 1, -1, -1, -1, -1, -1, 0, 0, 0, 0, 0, 0, 0, 0, 1, -1, -1, 1, 1, -1, -1, 1, -1, 1, 1, 1, -1, -1, 1, 1, -1, 0, 0, 0, 0, 0, 0, 0, 0, 1, 1, -1, -1, 1, 1, -1, -1, -1, -1, 1, 1, -1, -1, 1, 1, 0, 0, 0, 0, 0, 0, 0, 0);

$s_{15}$=(1, 1, -1, -1, -1, -1, 1, 1, -1, -1, 1, 1, 1, 1, -1, -1, 0, 0, 0, 0, 0, 0, 0, 0, 1, -1, -1, 1, -1, 1, 1, -1, -1, 1, 1, -1, 1, -1, -1, 1, 0, 0, 0, 0, 0, 0, 0, 0, 1, 1, 1, 1, -1, -1, -1, -1, -1, -1, -1, -1, 1, 1, 1, 1, 0, 0, 0, 0, 0, 0, 0, 0, 1, -1, 1, -1, -1, 1, -1, 1, -1, 1, -1, 1, 1, -1, 1, -1, 0, 0, 0, 0, 0, 0, 0, 0, 1, 1, -1, -1, 1, 1, -1, -1, -1, -1, 1, 1, -1, -1, 1, 1, 0, 0, 0, 0, 0, 0, 0, 0, 1, -1, -1, 1, 1, -1, -1, 1, -1, 1, 1, -1, -1, 1, 1, -1, 0, 0, 0, 0, 0, 0, 0, 0, 1, 1, 1, 1, 1, 1, 1, 1, -1, -1, -1, -1, -1, -1, -1, -1, 0, 0, 0, 0, 0, 0, 0, 0, 1, -1, 1, -1, 1, -1, 1, -1, -1, 1, -1, 1, -1, 1, -1, 1, 0, 0, 0, 0, 0, 0, 0, 0); and

$s_{16}$=(1, -1, -1, 1, -1, 1, 1, -1, -1, 1, 1, -1, 1, -1, -1, 1, 0, 0, 0, 0, 0, 0, 0, 0, 1, 1, -1, -1, -1, - 1, 1, 1, -1, -1, 1, 1, 1, 1, -1, -1, 0, 0, 0, 0, 0, 0, 0, 0, 1, -1, 1, -1, 1, -1, 1, -1, 1, -1, 1, 1, -1, 1, -1, 0, 0, 0, 0, 0, 0, 0, 0, 1, 1, 1, 1, -1, -1, -1, -1, -1, -1, -1, -1, 1, 1, 1, 1, 0, 0, 0, 0, 0, 0, 0, 0, 1, - 1, -1, 1, 1, -1, -1, 1, -1, 1, 1, -1, -1, 1, 1, -1, 0, 0, 0, 0, 0, 0, 0, 0, 1, 1, -1, -1, 1, 1, -1, -1, -1, - 1, 1, 1, -1, -1, 1, 1, 0, 0, 0, 0, 0, 0, 0, 0, 1, -1, 1, -1, 1, -1, 1, -1, -1, 1, -1, 1, -1, 1, -1, 1, 0, 0, 0, 0, 0, 0, 0, 0, 1, 1, 1, 1, 1, 1, 1, 1, -1, -1, -1, -1, -1, -1, -1, -1, 0, 0, 0, 0, 0, 0, 0, 0).

For example, N≤16, P=16, and Q=192.

In a possible design, the transmitted waveform sequence set includes:

$s_1$ = (-1, -1, -1, 1, 1, -1, 1, 1, 0, 0, 0, 0, 0, 0, 0, 0, 1, 1, 1, -1, 1, -1, 1, 1, 0, 0, 0, 0, 0, 0, 0, 0, 1, -1, 1, 1, -1, -1, -1, 1, 0, 0, 0, 0, 0, 0, 0, 0, -1, 1, -1, -1, -1, -1, -1, 1);

$s_2$ = (1, 1, 1, -1, 1, -1, 1, 1, 0, 0, 0, 0, 0, 0, 0, 0, -1, -1, -1, 1, 1, -1, 1, 1, 0, 0, 0, 0, 0, 0, 0, 0, -1, 1, -1, -1, -1, -1, -1, 1, 0, 0, 0, 0, 0, 0, 0, 0, 1, -1, 1, 1, -1, -1, -1, 1);

$s_3$ = (1, 1, -1, 1, -1, 1, 1, 1, 0, 0, 0, 0, 0, 0, 0, 0, -1, -1, 1, -1, -1, 1, 1, 1, 0, 0, 0, 0, 0, 0, 0, 0, -1, 1, 1, 1, 1, 1, -1, 1, 0, 0, 0, 0, 0, 0, 0, 0, 1, -1, -1, -1, 1, 1, -1, 1); and

$s_4$ = (-1, -1, 1, -1, -1, 1, 1, 1, 0, 0, 0, 0, 0, 0, 0, 0, 1, 1, -1, 1, -1, 1, 1, 1, 0, 0, 0, 0, 0, 0, 0, 0, 1, -1, -1, -1, 1, 1, -1, 1, 0, 0, 0, 0, 0, 0, 0, 0, -1, 1, 1, 1, 1, 1, -1, 1).

For example, N≤4, P=4, and Q=56.

In a possible design, the transmitted waveform sequence set includes:

$$s_1 = \begin{pmatrix} 1,1,\text{-}1,1,\text{-}1,1,\text{-}1,\text{-}1,1,1,0,0,0,0,0,0,0,0,0,1,1,\text{-}1,1,\text{-}1,1,\text{-}1,\text{-}1,1,1,0,0,0,0,0, \\ 0,0,0,0,0,1,1,\text{-}1,1,1,1,1,1,\text{-}1,\text{-}1,0,0,0,0,0,0,0,0,0,1,1,\text{-}1,1,1,1,1,1,\text{-}1,\text{-}1 \end{pmatrix}$$

$$s_2 = \begin{pmatrix} 1,1,\text{-}1,1,\text{-}1,1,\text{-}1,\text{-}1,1,1,0,0,0,0,0,0,0,0,0,\text{-}1,\text{-}1,1,\text{-}1,1,\text{-}1,1,1,\text{-}1,\text{-}1,0,0,0,0,0, \\ 0,0,0,0,0,1,1,\text{-}1,1,1,1,1,1,\text{-}1,\text{-}1,0,0,0,0,0,0,0,0,0,\text{-}1,\text{-}1,1,\text{-}1,\text{-}1,\text{-}1,\text{-}1,\text{-}1,1,1 \end{pmatrix}$$

$$s_3 = \begin{pmatrix} \text{-}1,\text{-}1,1,1,1,1,1,\text{-}1,1,1,0,0,0,0,0,0,0,0,0,\text{-}1,\text{-}1,1,1,1,1,1,\text{-}1,1,1,0,0,0,0,0,0, \\ 0,0,0,0,\text{-}1,\text{-}1,1,1,\text{-}1,1,\text{-}1,1,\text{-}1,\text{-}1,0,0,0,0,0,0,0,0,0,\text{-}1,\text{-}1,1,1,\text{-}1,1,\text{-}1,1,\text{-}1,\text{-}1 \end{pmatrix}$$

$$s_4 = \begin{pmatrix} \text{-}1,\text{-}1,1,1,1,1,1,\text{-}1,1,1,0,0,0,0,0,0,0,0,0,1,1,\text{-}1,\text{-}1,\text{-}1,\text{-}1,\text{-}1,1,\text{-}1,\text{-}1,0,0,0,0,0,0, \\ 0,0,0,0,0,\text{-}1,\text{-}1,1,1,\text{-}1,1,\text{-}1,1,\text{-}1,\text{-}1,0,0,0,0,0,0,0,0,0,1,1,\text{-}1,\text{-}1,1,\text{-}1,1,\text{-}1,1,1 \end{pmatrix}.$$

For example, N≤4, P=4, and Q=70.

In a possible design, the transmitted waveform sequence set includes:

$$s_1=\left(\begin{array}{l}1,1,-1,-1,1,-1,1,-1,1,-1,-1,1,-1,-1,-1,-1,0,0,0,0,0,0,0,0,0,0,0,0,0,0,0,0,1,1,-1,-1,1,-1,\\1,-1,-1,1,1,-1,1,1,1,1,0,0,0,0,0,0,0,0,0,0,0,0,0,0,0,0,1,-1,-1,1,1,1,1,1,1,1,-1,-1,-1,1,\\-1,1,0,0,0,0,0,0,0,0,0,0,0,0,0,0,0,0,1,-1,-1,1,1,1,1,1,-1,-1,1,1,1,-1,1,-1\end{array}\right)$$

$$s_2=\left(\begin{array}{l}1,1,-1,-1,1,-1,1,-1,-1,1,1,-1,1,1,1,1,0,0,0,0,0,0,0,0,0,0,0,0,0,0,0,0,1,1,-1,-1,1,-1,1,\\-1,1,-1,-1,1,-1,-1,-1,-1,0,0,0,0,0,0,0,0,0,0,0,0,0,0,0,0,1,-1,-1,1,1,1,1,1,-1,-1,1,1,1,\\-1,1,-1,0,0,0,0,0,0,0,0,0,0,0,0,0,0,0,0,1,-1,-1,1,1,1,1,1,1,1,-1,-1,-1,1,-1,1\end{array}\right)$$

$$s_3=\left(\begin{array}{l}1,1,1,1,1,-1,-1,1,1,-1,1,-1,-1,-1,1,1,0,0,0,0,0,0,0,0,0,0,0,0,0,0,0,0,1,1,1,1,1,-1,-1,1,\\-1,1,-1,1,1,1,-1,-1,0,0,0,0,0,0,0,0,0,0,0,0,0,0,0,0,1,-1,1,-1,1,1,-1,-1,1,1,1,1,-1,1,1,\\-1,0,0,0,0,0,0,0,0,0,0,0,0,0,0,0,0,1,-1,1,-1,1,1,-1,-1,-1,-1,-1,-1,1,-1,-1,1\end{array}\right)$$

$$s_4=\left(\begin{array}{l}1,1,1,1,1,-1,-1,1,-1,1,-1,1,1,1,-1,-1,0,0,0,0,0,0,0,0,0,0,0,0,0,0,0,0,1,1,1,1,1,-1,-1,1,\\1,-1,1,-1,-1,-1,1,1,0,0,0,0,0,0,0,0,0,0,0,0,0,0,0,0,1,-1,1,-1,1,1,-1,-1,-1,-1,-1,-1,1,-1,\\-1,1,0,0,0,0,0,0,0,0,0,0,0,0,0,0,0,0,1,-1,1,-1,1,1,-1,-1,1,1,1,1,-1,1,1,-1\end{array}\right).$$

For example, N≤4, P=4, and Q=112.

In a possible design, the transmitted waveform sequence set includes:

$$s_1=\left(\begin{array}{l}1,1,-1,1,-1,1,-1,-1,1,1,1,1,-1,1,1,1,1,1,-1,-1,0,0,0,0,0,0,0,0,0,0,0,0,0,0,0,0,0,0,0,0,\\1,1,-1,1,-1,1,-1,-1,1,1,1,1,-1,1,1,1,1,1,-1,-1,0,0,0,0,0,0,0,0,0,0,0,0,0,0,0,0,0,0,0,0,\\1,1,-1,1,-1,1,-1,-1,1,1,-1,-1,1,-1,-1,-1,-1,-1,1,1,0,0,0,0,0,0,0,0,0,0,0,0,0,0,0,0,0,0,\\0,0,1,1,-1,1,-1,1,-1,-1,1,1,-1,-1,1,-1,-1,-1,-1,-1,1,1\end{array}\right)$$

$$s_2=\left(\begin{array}{l}1,1,-1,1,-1,1,-1,-1,1,1,1,1,-1,1,1,1,1,1,-1,-1,0,0,0,0,0,0,0,0,0,0,0,0,0,0,0,0,0,0,0,0,\\-1,-1,1,-1,1,-1,1,1,-1,-1,-1,-1,1,-1,-1,-1,-1,-1,1,1,0,0,0,0,0,0,0,0,0,0,0,0,0,0,0,0,0,\\0,0,0,1,1,-1,1,-1,1,-1,-1,1,1,-1,-1,1,-1,-1,-1,-1,-1,1,1,0,0,0,0,0,0,0,0,0,0,0,0,0,0,0,\\0,0,0,0,0,-1,-1,1,-1,1,-1,1,1,-1,-1,1,1,-1,1,1,1,1,1,-1,-1\end{array}\right)$$

$$s_3=\left(\begin{array}{l}1,1,-1,-1,-1,-1,-1,1,-1,-1,1,1,-1,-1,1,-1,1,-1,1,1,0,0,0,0,0,0,0,0,0,0,0,0,0,0,0,0,0,0,0,\\0,1,1,-1,-1,-1,-1,-1,1,-1,-1,1,1,-1,-1,1,-1,1,-1,1,1,0,0,0,0,0,0,0,0,0,0,0,0,0,0,0,0,0,0,\\0,0,1,1,-1,-1,-1,-1,-1,1,-1,-1,-1,-1,1,1,-1,1,-1,1,-1,-1,0,0,0,0,0,0,0,0,0,0,0,0,0,0,0,0,\\0,0,0,0,1,1,-1,-1,-1,-1,-1,1,-1,-1,-1,-1,1,1,-1,1,-1,1,-1,-1\end{array}\right)$$

$$s_4=\left(\begin{array}{l}1,1,-1,-1,-1,-1,-1,1,-1,-1,1,1,-1,-1,1,-1,1,-1,1,1,0,0,0,0,0,0,0,0,0,0,0,0,0,0,0,0,0,0,0,\\0,-1,-1,1,1,1,1,1,-1,1,1,-1,-1,1,1,-1,1,-1,1,-1,-1,0,0,0,0,0,0,0,0,0,0,0,0,0,0,0,0,0,0,0,\\0,1,1,-1,-1,-1,-1,-1,1,-1,-1,-1,-1,1,1,-1,1,-1,1,-1,-1,0,0,0,0,0,0,0,0,0,0,0,0,0,0,0,0,0,\\0,0,0,-1,-1,1,1,1,1,1,-1,1,1,1,1,-1,-1,1,-1,1,-1,1,1\end{array}\right).$$

For example, N≤4, P=4, and Q=140.

According to a third aspect, this application further provides an apparatus. The apparatus may perform the foregoing method design. The apparatus may be a chip or a circuit that can perform the functions corresponding to the foregoing method, or a device including the chip or the circuit.

In a possible implementation, the apparatus includes: a memory, configured to store computer-executable program code; and a processor, where the processor is coupled to the memory. The program code stored in the memory includes instructions. When the processor executes the instructions, the apparatus or a device on which the apparatus is installed is enabled to perform the method in any one of the foregoing possible designs.

The apparatus may further include a communication interface. The communication interface may be a transceiver. Alternatively, if the apparatus is a chip or a circuit, the communication interface may be an input/output interface of the chip, for example, an input/output pin.

In a possible design, the apparatus includes corresponding functional units, separately configured to implement the steps in the foregoing method. The function may be implemented by hardware, or may be implemented by executing corresponding software by hardware. The hardware or the software includes one or more units that correspond to the foregoing functions.

According to a fourth aspect, this application provides a computer-readable storage medium. The computer-readable storage medium stores a computer program. When the computer program is run on an apparatus, the method in any one of the foregoing possible designs is performed.

According to a fifth aspect, this application provides a computer program product. The computer program product includes a computer program. When the computer program is run on an apparatus, the method in any one of the foregoing possible designs is performed.

According to a sixth aspect, this application provides a communication system. The communication system includes a transmitting end and a receiving end. The transmitting end performs the method in any one of the foregoing possible designs of the first aspect, and the receiving end performs the method in any one of the foregoing possible designs of the second aspect.

## BRIEF DESCRIPTION OF DRAWINGS

FIG. 1 is a diagram of a half-duplex mode according to this application;
FIG. 2 is a diagram of an Ipatov sequence according to this application;
FIG. 3 is a diagram of a transmitted waveform sequence including an Ipatov sequence according to this application;
FIG. 4 is a diagram of a matched filtering result corresponding to an Ipatov sequence having a sequence length of 57 according to this application;
FIG. 5 is a diagram of an application scenario according to this application;
FIG. 6 is an overview flowchart of an ultra-wideband-based sensing method according to this application;
FIG. 7 is a diagram of a transmitted waveform sequence set that includes a sequence having an aperiodic zero correlation zone according to this application;
FIG. 8 is a diagram of a matched filtering result corresponding to a transmitted waveform sequence having a sequence length of 56 according to this application;
FIG. 9 is a diagram of a structure of a communication apparatus according to this application; and
FIG. 10 is a diagram of a structure of another communication apparatus according to this application.

## DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application. The terms "first" and "second", corresponding term numbers, and the like in this specification, the claims, and the accompanying drawings of this application are used to distinguish between similar objects, and are not necessarily used to describe a specific sequence or order. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

In descriptions of this application, "/" means "or" unless otherwise specified. For example, A/B may indicate A or B. In this application, "and/or" describes only an association relationship for describing associated objects and indicates that three relationships may exist. For example, A and/or B may indicate the following three cases: Only A exists, both A and B exist, and only B exists. In addition, in the descriptions of this application, "at least one item" means one or more items, and "a plurality of items" means two or more items. "At least one item (piece) of the following" or a similar expression thereof means any combination of these items, including a singular item (piece) or any combination of plural items (pieces). For example, at least one item (piece) of a, b, or c may indicate a, b, c, a and b, a and c, b and c, or a, b, and c, where a, b, and c may be in a singular form or a plural form.

The technical solutions provided in embodiments of this application may be applied to various communication systems. For example, the technical solutions may be applied to a 4G system or a 5G system, or may be applied to another future-oriented new system. This is not limited in embodiments of this application. In addition, the terms "system" and "network" may be interchangeable.

Currently, the Ipatov sequence has a complete periodic autocorrelation characteristic, and a sequence set having a periodic ZCZ may be generated through a cyclic shift. As shown in FIG. 2, an Ipatov sequence having a sequence length of 57 is used as a transmitted waveform sequence. Because the Ipatov sequence has a complete periodic autocorrelation characteristic, the Ipatov sequence is not zero only at an autocorrelation main lobe, and is zero at an autocorrelation side lobe.

For example, for a transmitted waveform sequence set, refer to FIG. 3. In FIG. 3, for any column, a sequence circled by two solid lines is an Ipatov sequence. A first column is an Ipatov sequence having a sequence length of 57, a second column is a shift sequence generated by performing a cyclic shift on the first column by 9 bits, a third column is a shift sequence generated by performing a cyclic shift on the second column by 9 bits, and so on.

Further, a transmitting end needs to add a cyclic prefix and a cyclic suffix to each of sequences circled by the two solid lines, that is, add a cyclic prefix before the Ipatov sequence, add a cyclic suffix after the Ipatov sequence, and send the Ipatov sequence by row.

As shown in FIG. 3, the transmitting end adds a 12-bit cyclic prefix before the Ipatov sequence, and adds a 12-bit cyclic suffix after the Ipatov sequence. After receiving a corresponding signal, a receiving end correlates the received signal with a local sequence by column, that is, performs a matched filtering operation, to obtain information about a target within a detection range.

As shown in FIG. 4, a sequence between two horizontal lines is an Ipatov sequence, where a black box represents an element -1, a white box represents an element 1, and a stripe box represents an element 0. A quantity of Ipatov sequences is six, and cyclic prefixes and cyclic suffixes are marked by using dashed-line boxes. Each pulse burst includes six pulses, as shown in a dashed-line box between the two horizontal lines. The dashed-line box represents a pulse burst, and the pulse burst includes six pulses: a positive pulse, a negative pulse, a positive pulse, a non-transmitted pulse, a positive pulse, and a positive pulse. The positive pulse corresponds to the element 1, the negative pulse corresponds to the element -1, and the non-transmitted pulse corresponds to the element 0.

Specifically, the receiving end may use, based on a complete autocorrelation characteristic of the Ipatov sequence, a sequence that is the same as a transmitted waveform sequence set as a local sequence set to be correlated with a received signal (excluding a cyclic prefix and a cyclic suffix), and sense the information about the target within the detection range based on related information such as a peak position. The detection range is a half of a product of a size of the ZCZ, a repetition period of the pulse burst, and the speed of light.

FIG. 4 shows a matched filtering result corresponding to the Ipatov sequence having the sequence length of 57. It can be learned that, the Ipatov sequence having the sequence length of 57, the shift sequence of the Ipatov sequence, and the corresponding cyclic prefix and cyclic suffix are used as the transmitted waveform sequence set and the local sequence set, so that three targets within a distance corresponding to 297 ns can be effectively distinguished. When the zero correlation zone is 9, and a pulse burst repetition interval (burst repetition interval, BRI) is 66 ns, $0.5\times9\times66=297$ ns. The distance corresponding to 297 ns is determined by the value of 297 ns$\times$c, where c is the speed of light.

The transmitting end sends, for a plurality of times, a pulse burst determined by the transmitted waveform sequence set, and the receiving end may obtain the matched filtering result shown in FIG. 4 each time. However, amplitudes of the foregoing three targets change, and then the receiving end may determine information such as distances and velocities of the foregoing three targets based on a change status of the amplitudes.

However, to implement the complete periodic autocorrelation characteristic of the Ipatov sequence, the transmitting end needs to add the cyclic prefix before the Ipatov sequence, and add the cyclic suffix after the Ipatov sequence, which further increases air interface transmission time.

In addition, when a sensing distance increases, to ensure sensing performance, a zero correlation zone of a required transmitted waveform sequence is expanded accordingly, to avoid interference between waveforms. However, to expand the zero correlation zone, a quantity of bits of the cyclic shift needs to be increased. As shown in FIG. 3, when a quantity of pulses in each pulse burst is fixed, to expand the zero correlation zone, the quantity of bits of the cyclic shift needs to be increased. Consequently, a length of the transmitted waveform sequence is increased, and time required for sensing measurement is increased, causing interference to another device or application.

This application may be applied to a star topology structure or a peer-to-peer topology structure, as shown in (1) and (2) in FIG. 5. In the star topology structure, data communication is performed between a central control node and one or more other devices. In the peer-to-peer topology structure, communication is performed between different devices. An apparatus and a product in embodiments of this application include but are not limited to: a central control node such as a communication server, a router, a switch, a bridge, a computer, or a mobile phone, a personal area network (personal area network, PAN), a PAN coordinator, and the like. In addition, this application may be further applied to another application scenario. This is not limited in this application.

Based on this, this application provides an ultra-wideband-based sensing method, to resolve a problem that time required for sensing measurement is increased due to a long length of a transmitted waveform sequence. As shown in FIG. 6, the method includes the following steps.

Step 600: A transmitting end determines a transmitted waveform sequence set, where the transmitted waveform sequence set includes N sequences, N is a positive integer, and the transmitted waveform sequence set includes a sequence having an aperiodic ZCZ. A sequence length of each sequence is Q, and Q is a positive integer.

For example, the transmitted waveform sequence set may include P sequences, where P≥N, and P is a positive integer. In a possible implementation, the transmitting end may select N sequences from the P sequences as a current transmitted waveform sequence set based on a capability of the transmitting end. For example, the transmitted waveform sequence set may include a total of eight sequences, and the transmitting end may select four or six sequences from the eight sequences as a currently used transmitted waveform sequence set.

It may be understood that a plurality of transmitted waveform sequence sets may be configured in advance for the transmitting end and a receiving end, and the transmitting end and the receiving end determine a same transmitted waveform sequence set. The transmitted waveform sequence set is one of the plurality of transmitted waveform sequence sets.

For example, the transmitting end may negotiate with the receiving end to determine one of a plurality of transmitted waveform sequence sets.

Alternatively, the transmitting end may determine one transmitted waveform sequence set from a plurality of transmitted waveform sequence sets, and send a notification message to the receiving end, where the notification message indicates the transmitted waveform sequence set. For example, the notification message includes identification information of the transmitted waveform sequence set.

Alternatively, the transmitting end may determine one transmitted waveform sequence set from a plurality of transmitted waveform sequence sets according to a preconfigured rule, and correspondingly, the receiving end may determine one transmitted waveform sequence set from a plurality of transmitted waveform sequence sets according to the same preconfigured rule. The transmitted waveform sequence set determined by the transmitting end and the transmitted waveform sequence set determined by the receiving end are the same.

Alternatively, the transmitting end and the receiving end may receive indication information from another device, where the indication information indicates one of a plurality of transmitted waveform sequence sets.

For example, sequences included in any transmitted waveform sequence set may be determined in manners that include but are not limited to the following manners.

It should be noted that the transmitted waveform sequence set may not be constructed by the transmitting end, that is, the transmitting end determines a transmitted waveform sequence set that needs to be used currently, but does not necessarily need to construct the transmitted waveform sequence set by using the following process. Similarly, the receiving end determines a local sequence set that needs to be used currently, but does not necessarily need to construct the local sequence set by using the following process. For example, the transmitting end and the receiving end may obtain a plurality of transmitted waveform sequence sets in advance through pre-configuration or protocol agreement.

Manner 1: A transmitted waveform sequence set is constructed based on a first matrix, a second matrix, and a third matrix, where the first matrix, the second matrix, and the third matrix are all Hadamard (Hadamard) matrices.

The Hadamard matrix is an n-order square matrix that includes elements +1 and -1 and satisfies Hn×Hn'=nI (herein, Hn' is a transpose of Hn, and I is a unit square matrix). Hn is a Hadamard matrix of order n, and n is a positive integer greater than or equal to 2.

For example, an order of the first matrix is the same as an order of the second matrix, and an order of the third matrix may be the same as or different from the order of the first matrix. The transmitted waveform sequence set may be constructed by performing the following steps.

(1) Construct, based on the first matrix and the third matrix, a sequence set having a sequence length of M(Z+C), where M, Z, and C are positive integers, M is the order of the first matrix and the second matrix, Z is the order of the third matrix, and C is a preset value. The sequence set having the sequence length of M(Z+C) includes M×Z sequences. For example, each element in a column with a sequence number s in the third matrix is multiplied by elements in a column with a sequence number t in the first matrix, and C columns of elements that are all 0s are added, to obtain a first to-be-processed matrix with a sequence number M×s+t, where the first to-be-processed matrix with the sequence number M×s+t has M(Z+C) columns, $0 \le s \le Z - 1$, and $0 \le t \le M - 1$; and further, the first to-be-processed matrix with the sequence number M×s+t is output by row, to obtain a first sequence with a sequence number $M \times s + t$

in the sequence set having the sequence length of M(Z+C).

(2) Construct, based on the second matrix and the sequence set having the sequence length of M(Z+C) through n iterations, a sequence set having a sequence length of $M^{n+1}$(Z+C). The sequence set having the sequence length of $M^{n+1}$(Z+C) includes M×Z sequences. The sequence set having the sequence length of $M^{n+1}$(Z+C) is the transmitted waveform sequence set, where n is a positive integer. The sequence set having the sequence length of $M^{n+1}$(Z+C) includes the M×Z sequences, where N≤M×Z, P=M×Z, and Q=$M^{n+1}$(Z+C).

An example in which n=1 is used. A sequence set having a sequence length of $M^2$(Z+C) is constructed based on the second matrix and the sequence set having the sequence length of M(Z+C) through one iteration.

For example, an element with a sequence number w in a line with a sequence number t in the second matrix is multiplied by a first sequence with a sequence number M×s+w, to obtain a second to-be-processed matrix with a sequence number M×s+t, where w is 0 to M-1, and w is a positive integer; and further, the second to-be-processed matrix with the sequence number M×s+t is output by row, to obtain a second sequence with a sequence number $M \times s + t$ in the sequence set having the sequence length of $M^2$(Z+C). The sequence set having the sequence length of $M^2$(Z+C) is the transmitted waveform sequence set.

In the foregoing manner 1, a quantity of iterations may be adjusted based on an actual sending requirement or a capability of the transmitting end, to determine transmitted waveform sequence sets with different sequence lengths.

For details, refer to related descriptions in the following Embodiment 1.

Manner 2: A transmitted waveform sequence set is constructed based on a sequence family, where the sequence family includes a plurality of sequence sets, all of the sequence sets include a same quantity of sequences, and all of the sequences have a same sequence length.

The sequence family has the following two characteristics:

Characteristic 1: For all sequences in any sequence set in the sequence family, a sum of values of aperiodic autocorrelation functions respectively corresponding to all the sequences at a delay $\tau$ equal to 0 is a product of the quantity of sequences and the sequence length, and a sum of values of the aperiodic autocorrelation functions respectively corresponding to all the sequences at the delay $\tau$ not equal to 0 is zero.

Characteristic 2: For all sequence groups determined based on any two sequence sets in the sequence family, each sequence group includes two sequences with a same sequence number, a sum of values of aperiodic cross-correlation functions respectively corresponding to all the sequence groups at the delay $\tau$ equal to 0 is zero, and a sum of values of the aperiodic cross-correlation functions respectively corresponding to all the sequence groups at the delay $\tau$ not equal to 0 is zero.

The delay $\tau$ equal to 0 indicates a main lobe, and the delay $\tau$ not equal to 0 indicates a side lobe.

Therefore, the sequence family having the foregoing two characteristics is also referred to as a complete complementary code.

For example, it is assumed that a sequence family $\mathcal{A} = \{A^0, A^1, \cdots, A^{M-1}\}$ includes M sequence sets, where each sequence set $\boldsymbol{A}^m = \{\boldsymbol{a}_0^m, \boldsymbol{a}_1^m, \cdots, \boldsymbol{a}_{M-1}^m\}$, and $A^m$ includes M sequences each having a sequence length of *N*.

If

$$R_{\boldsymbol{A}^{m_1},\boldsymbol{A}^{m_2}}(\tau) = \sum_{m=0}^{M-1} R_{\boldsymbol{a}_m^{m_1},\boldsymbol{a}_m^{m_2}}(\tau) = \begin{cases} MN, m_1 = m_2, \tau = 0 \\ 0, others \end{cases},$$

the sequence family $\mathcal{A}$ is referred to as a complete complementary code (CCC), and is briefly denoted as (*M, N*)*-CCC,* where $R_{a,b}(\tau)$ represents aperiodic cross-correlation functions of a sequence ***a*** and a sequence ***b*** at the delay $\tau$. $\boldsymbol{A}^{m1}$ *and* $\boldsymbol{A}^{m2}$ are any two sequence sets in the sequence family $\mathcal{A}$.

For the characteristic 1, for any sequence set $\boldsymbol{A}^m$, a value of an aperiodic autocorrelation function of each sequence in the sequence set $\boldsymbol{A}^m$ at the delay $\tau$ equal to 0 is calculated, values of aperiodic autocorrelation functions respectively corresponding to all sequences in the sequence set $\boldsymbol{A}^m$ at the delay $\tau$ equal to 0 are summed, where a summation result is MN (that is, corresponding to a scenario in which $m_1 = m_2$ and $\tau = 0$ in the foregoing formula), and values of the aperiodic autocorrelation functions respectively corresponding to all the sequences in the sequence set $\boldsymbol{A}^m$ at the delay $\tau$ not equal to 0 are summed, where a summation result is 0.

For the characteristic 2, for any two sequence sets $\boldsymbol{A}^{m1}$ *and* $\boldsymbol{A}^{m2}$, where $m_1 \neq m_2$, a total of N sequence groups may be determined based on two sequences (that is, $\boldsymbol{a}_m^{m_1}$ *and* $\boldsymbol{a}_m^{m_2}$) with a same sequence number in the sequence sets $\boldsymbol{A}^{m1}$ and $\boldsymbol{A}^{m2}$, values of aperiodic cross-correlation functions respectively corresponding to two sequences in each sequence group at the delay $\tau$ equal to 0 are calculated, and values of aperiodic cross-correlation functions respectively corresponding to the N sequence groups at the delay $\tau$ equal to 0 are summed, where a summation result is 0; and values of the aperiodic cross-correlation functions respectively corresponding to the two sequences in each sequence group at the delay $\tau$ equal to 0 are calculated, and values of the aperiodic cross-correlation functions respectively corresponding to the N sequence groups at the delay $\tau$ not equal to 0 are summed, where a summation result is 0.

For example, the transmitted waveform sequence set may be constructed by performing the following step: adding K zero elements between two sequences in each sequence set in the sequence family, to obtain a sequence in a first sequence set, where K is a positive integer. Further, the foregoing operation is performed for all sequence sets, to obtain the transmitted waveform sequence set.

The two sequences herein may be two adjacent sequences or two non-adjacent sequences. This is not limited in this application.

In addition, in an optional implementation, different quantities of zero elements may be added between adjacent sequences in each sequence set in the sequence family.

For details, refer to related descriptions in the following Embodiment 2.

Step 610: The transmitting end sends Q pulse bursts to the receiving end based on the N sequences, where each pulse burst includes N pulses, a $j^{th}$ pulse in an $i^{th}$ pulse burst in the Q pulse bursts corresponds to an $i^{th}$ element in a $j^{th}$ sequence in the transmitted waveform sequence set, i and j are positive integers, $1 \le i \le Q$, and $1 \le j \le N$.

As shown in FIG. 7, compared with the transmitted waveform sequence shown in FIG. 3, the transmitted waveform sequence does not include a cyclic prefix or a cyclic suffix, where a black box represents an element -1, a white box represents an element 1, and a stripe box represents an element 0. Each row in the transmitted waveform sequence corresponds to one pulse burst, and a quantity of pulses included in each pulse burst is the same as a quantity of transmitted waveform sequences. The quantity of transmitted waveform sequences is 6. The dashed-line box in FIG. 7 represents an eighth pulse burst, and the pulse burst includes six pulses: a positive pulse, a negative pulse, a positive pulse, a positive pulse, a positive pulse, and a positive pulse. The positive pulse corresponds to the element 1, the negative pulse corresponds to the element -1, and a non-transmitted pulse corresponds to the element 0. That is, a first pulse in the eighth pulse burst corresponds to an eighth element in a first sequence, a second pulse in the eighth pulse burst corresponds to an eighth element in a second sequence, a third pulse in the eighth pulse burst corresponds to an eighth element in a third sequence, a fourth pulse in the eighth pulse burst corresponds to an eighth element in a fourth sequence, a fifth pulse in the eighth pulse burst corresponds to an eighth element in a fifth sequence, and a sixth pulse in the eighth pulse burst corresponds to an eighth element in a sixth sequence.

Step 620: The receiving end receives the Q pulse bursts from the transmitting end, correlates the Q pulse bursts with a local sequence set, and determines information about a target within a detection range.

The local sequence set may also be referred to as a received waveform sequence set. The local sequence set is the same as the transmitted waveform sequence set (where when the transmitted waveform sequence set is used as the local sequence set, the local sequence set does not include a cyclic prefix and a cyclic suffix).

For example, the receiving end may correlate the Q pulse bursts with the local sequence set to obtain a matched filtering result, and further determines the information about the target within the detection range based on the matched filtering result. A specific implementation in which the Q pulse bursts are correlated with the local sequence set is not limited in this application. For example, the information about the target includes distance information of the target or speed information of the target.

The detection range is related to a size of the ZCZ and a repetition period of the pulse burst. For example, the detection range is a half of a product of the size of the ZCZ, the repetition period of the pulse burst, and the speed of light.

According to the foregoing method, a transmitted waveform sequence set and a received waveform sequence set that respectively correspond to the transmitting end and the receiving end are designed. The transmitted waveform sequence set and the received waveform sequence set are the same, and sequences included in the transmitted waveform sequence set are all sequences in a sequence set that includes a sequence having an aperiodic zero correlation zone ZCZ. Therefore, the sequence having the aperiodic zero correlation zone ZCZ is used, so that no cyclic prefix and cyclic suffix need to be added, thereby reducing air interface time and improving system performance.

Embodiment 1

A Hadamard matrix is used as a basis sequence, and a transmitted waveform sequence set is constructed by using an interleaving technology.

A specific process of constructing the transmitted waveform sequence set is as follows.

Step 1: Select two Hadamard matrices of order M and a Hadamard matrix of order Z. The two Hadamard matrices of order M are denoted as a first matrix and a second matrix, and the Hadamard matrix of order Z is denoted as a third matrix.

For example, the first matrix may be represented as $\boldsymbol{a} = [\boldsymbol{a}_0, \boldsymbol{a}_1, \cdots, \boldsymbol{a}_{M-1}]$, the second matrix may be represented

as $b = [\boldsymbol{b}_0, \boldsymbol{b}_1, \cdots, \boldsymbol{b}_{M-1}]$, and the third matrix may be represented as $h = [\boldsymbol{h}_0, \boldsymbol{h}_1, \cdots, \boldsymbol{h}_{Z-1}]$.

For example, M=4, $$a=b=\begin{pmatrix} + & - & - & - \\ - & + & - & - \\ - & - & + & - \\ - & - & - & + \end{pmatrix}$$ , a value of Z=2, and $h=\begin{pmatrix} + & + \\ + & - \end{pmatrix}$ , where + represents 1, and - represents -1.

The two Hadamard matrices of order M may be the same or may be different, and values of M and Z may be the same or may be different. This is not limited in this application. M and Z are positive integers greater than or equal to 2.

Step 2: Construct a sequence set having a sequence length of M(Z+C). The sequence set having the sequence length of M(Z+C) includes M×Z sequences.

C is a positive integer. The following uses only C=1 as an example for description.

For example, a specific process of constructing the sequence set having the sequence length of M(Z+C) by using the interleaving technology is as follows.

(1) Multiply each element in a column with a sequence number s in the third matrix by elements in a column with a sequence number t in the first matrix, and add one column of elements that are all 0s, to obtain a first to-be-processed matrix with a sequence number M×s+t.
$0 \le s \le Z-1$, and $0 \le t \le M-1$. A quantity of columns of 0 may be determined by a value of C. When C=1, the quantity of columns of 0 is 1.
(2) Output, by row, the first to-be-processed matrix with the sequence number M×s+t, to obtain a first sequence with a sequence number $M \times s + t$ in the sequence set having the sequence length of M(Z+C), denoted as $\boldsymbol{u}_{Ms+t}^{(0)}$ .
$\boldsymbol{u}_{Ms+t}^{(0)} = I(\boldsymbol{h}_{s,0}\boldsymbol{a}_t, \boldsymbol{h}_{s,1}\boldsymbol{a}_t, \ldots, \boldsymbol{h}_{s,Z-1}\boldsymbol{a}_t, 0)$ , where *Ms* may be understood as M×s, and I represents outputting by row.

Because a quantity of rows of the third matrix is Z, and a quantity of columns of the first matrix is M, Z×M first to-be-processed matrices may be obtained through the foregoing process, and then Z×M first sequences are obtained, denoted as $\left\{\boldsymbol{u}_r^{(0)} \middle| 0 \le r \le ZM-1\right\}$ .

For example, M=4, $$a=b=\begin{pmatrix} + & - & - & - \\ - & + & - & - \\ - & - & + & - \\ - & - & - & + \end{pmatrix}$$ , a value of Z=2, and $h=\begin{pmatrix} + & + \\ + & - \end{pmatrix}$ .

Each element in a first column (namely a column with a sequence number 0) in h is multiplied by elements in a first column (namely a column with a sequence number 0) in the first matrix, and one column of elements that are all 0s is added, to obtain a first to-be-processed matrix with a sequence number 0 (that is, 4×0+0=0).

| | | |
|---|---|---|
| + | + | 0 |
| - | - | 0 |
| - | - | 0 |
| - | - | 0 |

Specifically, an element (namely +) with a sequence number 0 in the first column (namely the column with the sequence number 0) in h is multiplied by $\boldsymbol{a}_0$. An element (namely +) with a sequence number 1 in the first column (namely the column with the sequence number 0) in h is multiplied by $\boldsymbol{a}_0$, where $\boldsymbol{a}_0 = \begin{pmatrix} + \\ - \\ - \\ - \end{pmatrix}$ .

Each element in the first column (namely the column with the sequence number 0) in h is multiplied by elements in a second column (namely a column with a sequence number 1) in the first matrix, and one column of elements that are all 0s is added, to obtain a first to-be-processed matrix with a sequence number 1 (that is, 4×0+1=1).

| | | |
|---|---|---|
| - | - | 0 |
| + | + | 0 |
| - | - | 0 |
| - | - | 0 |

Each element in the first column (namely the column with the sequence number 0) in h is multiplied by elements in a third column (namely a column with a sequence number 2) in the first matrix, and one column of elements that are all 0s is added, to obtain a first to-be-processed matrix with a sequence number 0 (that is, 4×0+2=2).

| | | |
|---|---|---|
| - | - | 0 |
| - | - | 0 |
| + | + | 0 |
| - | - | 0 |

Each element in the first column (namely the column with the sequence number 0) in h is multiplied by elements in a fourth column (namely a column with a sequence number 3) in the first matrix, and one column of elements that are all 0s is added, to obtain a first to-be-processed matrix with a sequence number 3 (that is, 4×0+3=3).

| | | |
|---|---|---|
| - | - | 0 |
| - | - | 0 |
| - | - | 0 |
| + | + | 0 |

Similarly, each element in a second column (namely a column with a sequence number 1) in h is multiplied by the elements in the first column (namely the column with the sequence number 1) in the first matrix, and one column of elements that are all 0s is added, to obtain a first to-be-processed matrix with a sequence number 4 (that is, 4×1+0=4), and so on. A first to-be-processed matrix with a sequence number 5, a first to-be-processed matrix with a sequence number 6, and a first to-be-processed matrix with a sequence number 7 may be further obtained. Details are not described herein again.

Further, the first to-be-processed matrix with the sequence number 0 is output by row to obtain a sequence with a sequence number 0 (namely $\boldsymbol{u}_0^{(0)}$ ) in a sequence set having a sequence length of 12 (that is, 4(2+1)=12).

+ + 0 - - 0 - - 0 - - 0

For example, the first to-be-processed matrix with the sequence number 1 is output by row to obtain a sequence with a sequence number 1 (namely $\boldsymbol{u}_1^{(0)}$ ) in the sequence set having the sequence length of 12.

- - 0 + + 0 - - 0 - - 0

The first to-be-processed matrix with the sequence number 2 is output by row to obtain a sequence with a sequence number 2 (namely $\boldsymbol{u}_2^{(0)}$ ) in the sequence set having the sequence length of 12.

- - 0 - - 0 + + 0 - - 0

The first to-be-processed matrix with the sequence number 3 is output by row to obtain a sequence with a sequence number 3 (namely $\boldsymbol{u}_3^{(0)}$ ) in the sequence set having the sequence length of 12.

- - 0 - - 0 - - 0 + + 0

Similarly, the first to-be-processed matrix with the sequence number 4, the first to-be-processed matrix with the sequence number 5, the first to-be-processed matrix with the sequence number 6, and the first to-be-processed matrix with the sequence number 7 are sequentially output by row to obtain a first sequence with a sequence number 4, a first sequence with a sequence number 5, a first sequence with a sequence number 6, and a first sequence with a sequence number 7 in the sequence set having the sequence length of 12, that is, $\boldsymbol{u}_4^{(0)}, \boldsymbol{u}_5^{(0)}, \boldsymbol{u}_6^{(0)}$, and $\boldsymbol{u}_7^{(0)}$.

Step 3: Construct a sequence set having a sequence length of $M^2(Z+C)$.

For example, a specific process of constructing the sequence set having the sequence length of $M^2(Z+C)$ by

using the interleaving technology is as follows.

(1) Multiply the element with the sequence number w in the column with the sequence number t in the second matrix by the first sequence with the sequence number M×s+w, to obtain the second to-be-processed matrix with the sequence number M×s+t, where w is 0 to M-1.
(2) Output, by row, the second to-be-processed matrix with the sequence number M×s+t, to obtain a second sequence with a sequence number $M \times s + t$ in the sequence set having the sequence length of $M^2(Z+C)$, denoted as $\boldsymbol{u}_{Ms+t}^{(1)}$.

$$\boldsymbol{u}_{Ms+t}^{(1)} = I(\boldsymbol{b}_{t,0}\boldsymbol{u}_{Ms+0}^{(0)}, \boldsymbol{b}_{t,1}\boldsymbol{u}_{Ms+1}^{(0)}, \dots, \boldsymbol{b}_{t,M-1}\boldsymbol{u}_{Ms+M-1}^{(0)}).$$

I represents outputting by row.

For example, when s=0, an element (namely +) with a sequence number 0 in a column with a sequence number 0 in b is multiplied by a first sequence (namely $\boldsymbol{u}_0^{(0)}$) with a sequence number 0 (that is, the following first column is obtained), an element with a sequence number 1 in the column with the sequence number 0 in b is multiplied by a first sequence (namely $\boldsymbol{u}_1^{(0)}$) with a sequence number 1 (that is, the following second column is obtained), an element with a sequence number 2 in the column with the sequence number 0 in b is multiplied by a first sequence (namely $\boldsymbol{u}_2^{(0)}$) with a sequence number 2 (that is, the following third column is obtained), and an element with a sequence number 3 in the column with the sequence number 0 in b is multiplied by a first sequence (namely $\boldsymbol{u}_3^{(0)}$) with a sequence number 3 (that is, the following fourth column is obtained), to obtain a second to-be-processed matrix with a sequence number 0:

+ + + +

+ + + +

0 0 0 0

- - + +

- - + +

0 0 0 0

- + - +

- + - +

0 0 0 0

- + + -

- + + -

0 0 0 0

Further, a second to-be-processed matrix with a sequence number 1 is output by row to obtain a second sequence with a sequence number 1 (namely $\boldsymbol{u}_0^{(1)}$) in a sequence set having a sequence length of 48.

A sequence set having a sequence length of $M^2(Z+1)$, in which a quantity of sequences is M×Z and a zero correlation zone is M, may be generated through the foregoing steps, and is denoted as $\left\{\mathbf{u}_r^{(1)} | 0 \leq r < MZ - 1\right\}$.

For example, N≤M×Z, P=M×Z, and Q=$M^2(Z+1)$.

Specifically, a transmitted waveform sequence set generated through the foregoing process is as follows.

The transmitted waveform sequence set includes a total of eight sequences (M×Z=4×2=8), a length of each sequence is 48 ($M^2(Z+1)=4^2(2+1)=48$), each sequence is a sequence having an aperiodic zero correlation zone, and the zero correlation zone is 4. For example, when the transmitting end sends the Q pulse bursts to the receiving end based on the N sequences, N≤8, P=8, and Q=48.

$$[u_0^{(1)}] = [+ + + + + + + + 0000 - - + + - - + +0000 - + - + - + - +0000 - + + - - + + -0000],$$

$$[u_1^{(1)}] = [- - + + - - + + 0000 + + + + + + + +0000 + - - + + - - +0000 + - + - + - + -0000],$$

$$[u_2^{(1)}] = [- + - + - + - + 0000 + - - + + - - +0000 + + + + + + + +0000 + + - - + + - -0000],$$

$$[u_3^{(1)}] = [- + + - - + + - 0000 + - + - + - + -0000 + + - - + + - -0000 + + + + + + + +0000],$$

$$[u_4^{(1)}] = [+ + + + - - - - 0000 - - + + + + - -0000 - + - + + - + -0000 - + + - + - - +0000],$$

$$[u_5^{(1)}] = [- - + + + + - - 0000 + + + + - - - -0000 + - - + - + + -0000 + - + - - + - +0000],$$

$$[u_6^{(1)}] = [- + - + + - + - 0000 + - - + - + + -0000 + + + + - - - -0000 + + - - - - + +0000],$$

$$[u_7^{(1)}] = [- + + - + - - + 0000 + - + - - + - +0000 + + - - - - + +0000 + + + + - - - -0000].$$

FIG. 8 shows a matched filtering result of a transmitted waveform sequence set $\left\{\mathbf{u}_r^{(1)}\right\}$. It can be learned that three targets within a distance corresponding to 132 ns can be effectively distinguished by using $\left\{\mathbf{u}_r^{(1)}\right\}$ as a transmitted waveform sequence set and a local sequence set.

In addition, more first sequence sets that meet a requirement may be generated in an iteration manner. For example, $\left\{\mathbf{u}_r^{(2)} | 0 \le r < MZ - 1\right\}$ having a sequence length of $M^3(Z+1)$, in which a quantity of sequences is MZ and a zero correlation zone is M, may be generated by repeating step 3.

Specifically, the transmitted waveform sequence set includes a total of eight sequences, a length of each sequence is 192 ($M^3(Z+1)=4^3(2+1)=192$), each sequence is a sequence having an aperiodic zero correlation zone, and the zero correlation zone is 4. For example, when the transmitting end sends the Q pulse bursts to the receiving end based on the N sequences, N≤8, P=8, and Q=192.

The transmitted waveform sequence set specifically includes:

$$\boldsymbol{u}_0^{(2)}=[1, 1, 1, 1, 1, -1, 1, -1, 1, 1, -1, -1, 1, -1, -1, 1, 1, 1, 1, 1, 1, -1, 1, -1, 1, 1, -1, -1, 1, -1, -1, 1, 0, 0, 0, 0, 0, 0, 0, 0, 0, 0, 0, 0, 0, 0, 0, 0, 1, 1, 1, 1, -1, 1, -1, 1, 1, 1, -1, -1, -1, 1, 1, -1, 1, 1, 1, 1, -1, 1, -1, 1, 1, 1, -1, -1, -1, 1, 1, -1, 0, 0, 0, 0, 0, 0, 0, 0, 0, 0, 0, 0, 0, 0, 0, 0, 1, 1, 1, 1, 1, -1, 1, -1, -1, -1, 1, 1, -1, 1, 1, -1, 1, 1, 1, 1, 1, -1, 1, -1, -1, -1, 1, 1, -1, 1, 1, -1, 0, 0, 0, 0, 0, 0, 0, 0, 0, 0, 0, 0, 0, 0, 0, 0, 1, 1, 1, 1, -1, 1, -1, 1, -1, -1, 1, 1, 1, -1, -1, 1, 1, 1, 1, 1, -1, 1, -1, 1, -1, -1, 1, 1, 1, -1, -1, 1, 0, 0, 0, 0, 0, 0, 0, 0, 0, 0, 0, 0, 0, 0, 0, 0];$$

$\boldsymbol{u}_1^{(2)}$=[1, –1, 1, –1, 1, 1, 1, 1, 1, –1, –1, 1, 1, 1, –1, –1, 1, –1, 1, –1, 1, 1, 1, 1, 1, –1, –1, 1, 1, 1, –1, –1, 0, 0, 0, 0, 0, 0, 0, 0, 0, 0, 0, 0, 0, 0, 0, 0, 1, –1, 1, –1, –1, –1, –1, –1, 1, –1, –1, 1, –1, –1, 1, 1, 1, –1, 1, –1, –1, –1, –1, –1, 1, –1, –1, 1, –1, –1, 1, 1, 0, 0, 0, 0, 0, 0, 0, 0, 0, 0, 0, 0, 0, 0, 0, 0, 1, –1, 1, –1, 1, 1, 1, 1, –1, 1, 1, –1, –1, –1, 1, 1, 1, –1, 1, –1, 1, 1, 1, 1, –1, 1, 1, –1, –1, –1, 1, 1, 0, 0, 0, 0, 0, 0, 0, 0, 0, 0, 0, 0, 0, 0, 0, 0, 1, –1, 1, –1, –1, –1, –1, –1, –1, 1, 1, –1, 1, 1, –1, –1, 1, –1, 1, –1, –1, –1, –1, –1, 1, 1, –1, 1, 1, –1, –1, 0, 0, 0, 0, 0, 0, 0, 0, 0, 0, 0, 0, 0, 0, 0, 0];

$\boldsymbol{u}_2^{(2)}$=[1, 1, –1, –1, 1, –1, –1, 1, 1, 1, 1, 1, 1, –1, 1, –1, 1, 1, –1, –1, 1, –1, –1, 1, 1, 1, 1, 1, 1, –1, 1, –1, 0, 0, 0, 0, 0, 0, 0, 0, 0, 0, 0, 0, 0, 0, 0, 0, 1, 1, –1, –1, –1, 1, 1, –1, 1, 1, 1, 1, –1, 1, –1, 1, 1, 1, –1, –1, –1, 1, 1, –1, 1, 1, 1, 1, –1, 1, –1, 1, 0, 0, 0, 0, 0, 0, 0, 0, 0, 0, 0, 0, 0, 0, 0, 0, 1, 1, –1, –1, 1, –1, –1, 1, –1, –1, –1, –1, –1, 1, –1, 1, 1, 1, –1, –1, 1, –1, –1, 1, –1, –1, –1, –1, –1, 1, –1, 1, 0, 0, 0, 0, 0, 0, 0, 0, 0, 0, 0, 0, 0, 0, 0, 0, 1, 1, –1, –1, –1, 1, 1, –1, –1, –1, –1, –1, 1, –1, 1, –1, 1, 1, –1, –1, 1, –1, 1, 1, –1, –1, –1, –1, –1, 1, –1, 1, –1, 0, 0, 0, 0, 0, 0, 0, 0, 0, 0, 0, 0, 0, 0, 0, 0];

$\boldsymbol{u}_3^{(2)}$=[1, –1, –1, 1, 1, 1, –1, –1, 1, –1, 1, –1, 1, 1, 1, 1, 1, –1, –1, 1, 1, 1, –1, –1, 1, –1, 1, –1, 1, 1, 1, 1, 0, 0, 0, 0, 0, 0, 0, 0, 0, 0, 0, 0, 0, 0, 0, 0, 1, –1, –1, 1, –1, –1, 1, 1, 1, –1, 1, –1, –1, –1, –1, –1, 1, 1, –1, –1, 1, –1, –1, 1, 1, 1, –1, 1, –1, –1, –1, –1, –1, 0, 0, 0, 0, 0, 0, 0, 0, 0, 0, 0, 0, 0, 0, 0, 0, 1, –1, –1, 1, 1, 1, –1, –1, –1, 1, –1, 1, –1, –1, –1, –1, 1, –1, –1, 1, 1, 1, –1, –1, –1, 1, –1, 1, –1, –1, –1, –1, 0, 0, 0, 0, 0, 0, 0, 0, 0, 0, 0, 0, 0, 0, 0, 0, 1, –1, –1, 1, –1, –1, 1, 1, –1, 1, –1, 1, 1, 1, 1, 1, 1, –1, –1, 1, –1, –1, 1, 1, –1, 1, –1, 1, 1, 1, 1, 1, 0, 0, 0, 0, 0, 0, 0, 0, 0, 0, 0, 0, 0, 0, 0, 0];

$\boldsymbol{u}_4^{(2)}$=[1, 1, 1, 1, 1, –1, 1, –1, 1, 1, –1, –1, 1, –1, –1, 1, –1, –1, –1, –1, –1, 1, –1, 1, –1, –1, 1, 1, –1, 1, 1, –1, 0, 0, 0, 0, 0, 0, 0, 0, 0, 0, 0, 0, 0, 0, 0, 0, 1, 1, 1, 1, –1, 1, –1, 1, 1, 1, –1, –1, –1, 1, 1, –1, –1, –1, –1, –1, 1, –1, 1, –1, –1, –1, 1, 1, 1, –1, –1, 1, 0, 0, 0, 0, 0, 0, 0, 0, 0, 0, 0, 0, 0, 0, 0, 0, 1, 1, 1, 1, 1, –1, 1, –1, –1, –1, 1, 1, –1, 1, 1, –1, –1, –1, –1, –1, –1, 1, –1, 1, 1, 1, –1, –1, 1, –1, –1, 1, 0, 0, 0, 0, 0, 0, 0, 0, 0, 0, 0, 0, 0, 0, 0, 0, 1, 1, 1, 1, –1, 1, –1, 1, –1, –1, 1, 1, 1, –1, –1, 1, –1, –1, –1, –1, 1, –1, 1, –1, 1, 1, –1, –1, –1, 1, 1, –1, 0, 0, 0, 0, 0, 0, 0, 0, 0, 0, 0, 0, 0, 0, 0, 0];

$$\boldsymbol{u}_5^{(2)}=[1, -1, 1, -1, 1, 1, 1, 1, 1, -1, -1, 1, 1, 1, -1, -1, -1, 1, -1, 1, -1, -1, -1, -1, -1, 1, 1, -1, -1, -1, 1, 1, 0, 0, 0, 0, 0, 0, 0, 0, 0, 0, 0, 0, 0, 0, 0, 0, 1, -1, 1, -1, -1, -1, -1, -1, 1, -1, -1, 1, -1, -1, 1, 1, -1, 1, -1, 1, 1, 1, 1, 1, -1, 1, 1, -1, 1, 1, -1, -1, 0, 0, 0, 0, 0, 0, 0, 0, 0, 0, 0, 0, 0, 0, 0, 0, 1, -1, 1, -1, 1, 1, 1, 1, -1, 1, 1, -1, -1, -1, 1, 1, -1, 1, -1, 1, -1, -1, -1, -1, 1, -1, -1, 1, 1, 1, -1, -1, 0, 0, 0, 0, 0, 0, 0, 0, 0, 0, 0, 0, 0, 0, 0, 0, 1, -1, 1, -1, -1, -1, -1, -1, -1, 1, 1, -1, 1, 1, -1, -1, -1, 1, -1, 1, 1, 1, 1, 1, 1, -1, -1, 1, -1, -1, 1, 1, 0, 0, 0, 0, 0, 0, 0, 0, 0, 0, 0, 0, 0, 0, 0, 0];$$

$$\boldsymbol{u}_6^{(2)}=[1, 1, -1, -1, 1, -1, -1, 1, 1, 1, 1, 1, 1, -1, 1, -1, -1, -1, 1, 1, -1, 1, 1, -1, -1, -1, -1, -1, -1, 1, -1, 1, 0, 0, 0, 0, 0, 0, 0, 0, 0, 0, 0, 0, 0, 0, 0, 0, 1, 1, -1, -1, -1, 1, 1, -1, 1, 1, 1, 1, -1, 1, -1, 1, -1, -1, 1, 1, 1, -1, -1, 1, -1, -1, -1, -1, 1, -1, 1, -1, 0, 0, 0, 0, 0, 0, 0, 0, 0, 0, 0, 0, 0, 0, 0, 0, 1, 1, -1, -1, 1, -1, -1, 1, -1, -1, -1, -1, -1, 1, -1, 1, -1, -1, 1, 1, -1, 1, 1, -1, 1, 1, 1, 1, 1, -1, 1, -1, 0, 0, 0, 0, 0, 0, 0, 0, 0, 0, 0, 0, 0, 0, 0, 0, 1, 1, -1, -1, -1, 1, 1, -1, -1, -1, -1, -1, 1, -1, 1, -1, -1, -1, 1, 1, 1, -1, -1, 1, 1, 1, 1, 1, -1, 1, -1, 1, 0, 0, 0, 0, 0, 0, 0, 0, 0, 0, 0, 0, 0, 0, 0, 0];$$

and

$$\boldsymbol{u}_7^{(2)}=[1, -1, -1, 1, 1, 1, -1, -1, 1, -1, 1, -1, 1, 1, 1, 1, -1, 1, 1, -1, -1, -1, 1, 1, -1, 1, -1, 1, -1, -1, -1, -1, 0, 0, 0, 0, 0, 0, 0, 0, 0, 0, 0, 0, 0, 0, 0, 0, 1, -1, -1, 1, -1, -1, 1, 1, 1, -1, 1, -1, -1, -1, -1, -1, -1, 1, 1, -1, 1, 1, -1, -1, -1, 1, -1, 1, 1, 1, 1, 1, 0, 0, 0, 0, 0, 0, 0, 0, 0, 0, 0, 0, 0, 0, 0, 0, 1, -1, -1, 1, 1, 1, -1, -1, -1, 1, -1, 1, -1, -1, -1, -1, -1, 1, 1, -1, -1, -1, 1, 1, 1, -1, 1, -1, 1, 1, 1, 1, 0, 0, 0, 0, 0, 0, 0, 0, 0, 0, 0, 0, 0, 0, 0, 0, 1, -1, -1, 1, -1, -1, 1, 1, -1, 1, -1, 1, 1, 1, 1, 1, -1, 1, 1, -1, 1, 1, -1, -1, 1, -1, 1, -1, -1, -1, -1, -1, 0, 0, 0, 0, 0, 0, 0, 0, 0, 0, 0, 0, 0, 0, 0, 0].$$

A plurality of sequences that are generated by using the foregoing method and that have an aperiodic zero correlation zone form a transmitted waveform sequence set, so that no cyclic prefix or cyclic suffix is used, sensing performance of the transmitted waveform sequence set can be ensured, and air interface time can be reduced.

As another optional transmitted waveform sequence set, the method provided in Embodiment 1 is used, M=8, Z=1, a and b are 8-order Hadamard matrices, h is a 2-order Hadamard matrix, and 16 sequences each having a sequence length of 192 and having an aperiodic zero correlation zone are obtained, to form the transmitted waveform sequence set, where the zero correlation zone is 8, $M^2(Z+1)=8^2(2+1)=192$, and $M\times Z=8\times 2=16$. For example, when the transmitting end sends the Q pulse bursts to the receiving end based on the N sequences, $N\leq 16$, P=16, and Q=192.

The transmitted waveform sequence set specifically includes:

$\boldsymbol{u}_0^{(1)}$=[1, 1, 1, 1, 1, 1, 1, 1, 1, 1, 1, 1, 1, 1, 1, 1, 0, 0, 0, 0, 0, 0, 0, 0, 1, –1, 1, –1, 1, –1, 1, –1, 1, –1, 1, –1, 1, –1, 1, –1, 0, 0, 0, 0, 0, 0, 0, 0, 1, 1, –1, –1, 1, 1, –1, –1, 1, 1, –1, –1, 1, 1, –1, –1, 0, 0, 0, 0, 0, 0, 0, 0, 1, –1, –1, 1, 1, –1, –1, 1, 1, –1, –1, 1, 1, –1, –1, 1, 0, 0, 0, 0, 0, 0, 0, 0, 1, 1, 1, 1, –1, –1, –1, –1, 1, 1, 1, 1, –1, –1, –1, –1, 0, 0, 0, 0, 0, 0, 0, 0, 1, –1, 1, –1, –1, 1, –1, 1, 1, –1, 1, –1, –1, 1, –1, 1, 0, 0, 0, 0, 0, 0, 0, 0, 1, 1, –1, –1, –1, –1, 1, 1, 1, 1, –1, –1, –1, –1, 1, 1, 0, 0, 0, 0, 0, 0, 0, 0, 1, –1, –1, 1, –1, 1, 1, –1, 1, –1, –1, 1, –1, 1, 1, –1, 0, 0, 0, 0, 0, 0, 0, 0];

$\boldsymbol{u}_1^{(1)}$=[1, –1, 1, –1, 1, –1, 1, –1, 1, –1, 1, –1, 1, –1, 1, –1, 0, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0, 0, 1, –1, –1, 1, 1, –1, –1, 1, 1, –1, –1, 1, 1, –1, –1, 1, 0, 0, 0, 0, 0, 0, 0, 0, 1, 1, –1, –1, 1, 1, –1, –1, 1, 1, –1, –1, 1, 1, –1, –1, 0, 0, 0, 0, 0, 0, 0, 0, 1, –1, 1, –1, –1, 1, –1, 1, 1, –1, 1, –1, –1, 1, –1, 1, 0, 0, 0, 0, 0, 0, 0, 0, 1, 1, 1, 1, –1, –1, –1, –1, 1, 1, 1, 1, –1, –1, –1, –1, 0, 0, 0, 0, 0, 0, 0, 0, 1, –1, –1, 1, –1, 1, 1, –1, 1, –1, –1, 1, –1, 1, 1, –1, 0, 0, 0, 0, 0, 0, 0, 0, 1, 1, –1, –1, –1, –1, 1, 1, 1, 1, –1, –1, –1, –1, 1, 1, 0, 0, 0, 0, 0, 0, 0, 0]; $u_2^{(1)}$ [1, 1, –1, –1, 1, 1, –1, –1, 1, 1, –1, –1, 1, 1, –1, –1, 0, 0, 0, 0, 0, 0, 0, 0, 1, –1, –1, 1, 1, –1, –1, 1, 1, –1, –1, 1, 1, –1, –1, 1, 0, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0, 0, 1, –1, 1, –1, 1, –1, 1, –1, 1, –1, 1, –1, 1, –1, 1, –1, 0, 0, 0, 0, 0, 0, 0, 0, 1, 1, –1, –1, –1, –1, 1, 1, 1, 1, –1, –1, –1, –1, 1, 1, 0, 0, 0, 0, 0, 0, 0, 0, 1, –1, –1, 1, –1, 1, 1, –1, 1, –1, –1, 1, –1, 1, 1, –1, 0, 0, 0, 0, 0, 0, 0, 0, 1, 1, 1, 1, –1, –1, –1, –1, 1, 1, 1, 1, –1, –1, –1, –1, 0, 0, 0, 0, 0, 0, 0, 0, 1, –1, 1, –1, –1, 1, –1, 1, 1, –1, 1, –1, –1, 1, –1, 1, 0, 0, 0, 0, 0, 0, 0, 0];

$\boldsymbol{u}_3^{(1)}$=[1, –1, –1, 1, 1, –1, –1, 1, 1, –1, –1, 1, 1, –1, –1, 1, 0, 0, 0, 0, 0, 0, 0, 0, 1, 1, –1, –1, 1, 1, –1, –1, 1, 1, –1, –1, 1, 1, –1, –1, 0, 0, 0, 0, 0, 0, 0, 0, 1, –1, 1, –1, 1, –1, 1, –1, 1, –1, 1, –1, 1, –1, 1, –1, 0, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0, 0, 1, –1, –1, 1, –1, 1, 1, –1, 1, –1, –1, 1, –1, 1, 1, –1, 0, 0, 0, 0, 0, 0, 0, 0, 1, 1, –1, –1, –1, –1, 1, 1, 1, 1, –1, –1, –1, –1, 1, 1, 0, 0, 0, 0, 0, 0, 0, 0, 1, –1, 1, –1, –1, 1, –1, 1, 1, –1, 1, –1, –1, 1, –1, 1, 0, 0, 0, 0, 0, 0, 0, 0, 1, 1, 1, 1, –1, –1, –1, –1, 1, 1, 1, 1, –1, –1, –1, –1, 0, 0, 0, 0, 0, 0, 0, 0];

$\boldsymbol{u}_4^{(1)}$=[1, 1, 1, 1, –1, –1, –1, –1, 1, 1, 1, 1, –1, –1, –1, –1, 0, 0, 0, 0, 0, 0, 0, 0, 1, –1, 1, –1, –1, 1, –1, 1, 1, –1, 1, –1, –1, 1, –1, 1, 0, 0, 0, 0, 0, 0, 0, 0, 1, 1, –1, –1, –1, –1, 1, 1, 1, 1, –1, –1, –1, –1, 1, 1, 0, 0, 0, 0, 0, 0, 0, 0, 1, –1, –1, 1, –1, 1, 1, –1, 1, –1, –1, 1, –1, 1, 1, –1, 0, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0, 0, 1, –1, 1, –1, 1, –1, 1, –1, 1, –1, 1, –1, 1, –1, 1, –1, 0, 0, 0, 0, 0, 0, 0, 0, 1, 1, –1, –1, 1, 1, –1, –1, 1, 1, –1, –1, 1, 1, –1, –1, 0, 0, 0, 0, 0, 0,

0, 0, 1, –1, –1, 1, 1, –1, –1, 1, 1, –1, –1, 1, 1, –1, –1, 1, 0, 0, 0, 0, 0, 0, 0, 0];

$\boldsymbol{u}_5^{(1)}$=[1, –1, 1, –1, –1, 1, –1, 1, 1, –1, 1, –1, –1, 1, –1, 1, 0, 0, 0, 0, 0, 0, 0, 0, 1, 1, 1, 1, –1, –1, –1, –1, 1, 1, 1, 1, –1, –1, –1, –1, 0, 0, 0, 0, 0, 0, 0, 0, 1, –1, –1, 1, –1, 1, 1, –1, 1, –1, –1, 1, –1, 1, 1, –1, 0, 0, 0, 0, 0, 0, 0, 0, 1, 1, –1, –1, –1, –1, 1, 1, 1, 1, –1, –1, –1, –1, 1, 1, 0, 0, 0, 0, 0, 0, 0, 0, 1, –1, 1, –1, 1, –1, 1, –1, 1, –1, 1, –1, 1, –1, 1, –1, 0, 0, 0, 0, 0, 0, 0, 0, 1, 1, 1, 1, 1, 1, 1, 1, 1, 1, 1, 1, 1, 1, 1, 0, 0, 0, 0, 0, 0, 0, 0, 1, –1, –1, 1, 1, –1, –1, 1, 1, –1, –1, 1, 1, –1, –1, 1, 0, 0, 0, 0, 0, 0, 0, 0, 1, 1, –1, –1, 1, 1, –1, –1, 1, 1, –1, –1, 1, 1, –1, –1, 0, 0, 0, 0, 0, 0, 0, 0];

$\boldsymbol{u}_6^{(1)}$=[1, 1, –1, –1, –1, –1, 1, 1, 1, 1, –1, –1, –1, –1, 1, 1, 0, 0, 0, 0, 0, 0, 0, 0, 1, –1, –1, 1, –1, 1, 1, –1, 1, –1, –1, 1, –1, 1, 1, –1, 0, 0, 0, 0, 0, 0, 0, 0, 1, 1, 1, 1, –1, –1, –1, –1, 1, 1, 1, 1, –1, –1, –1, –1, 0, 0, 0, 0, 0, 0, 0, 0, 1, –1, 1, –1, –1, 1, –1, 1, 1, –1, 1, –1, –1, 1, –1, 1, 0, 0, 0, 0, 0, 0, 0, 0, 1, 1, –1, –1, 1, 1, –1, –1, 1, 1, –1, –1, 1, 1, –1, –1, 0, 0, 0, 0, 0, 0, 0, 0, 1, –1, –1, 1, 1, –1, –1, 1, 1, –1, –1, 1, 1, –1, –1, 1, 0, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0, 0, 1, –1, 1, –1, 1, –1, 1, –1, 1, –1, 1, –1, 1, –1, 1, –1, 0, 0, 0, 0, 0, 0, 0, 0];

$\boldsymbol{u}_7^{(1)}$=[1, –1, –1, 1, –1, 1, 1, –1, 1, –1, –1, 1, –1, 1, 1, –1, 0, 0, 0, 0, 0, 0, 0, 0, 1, 1, –1, –1, –1, –1, 1, 1, 1, 1, –1, –1, –1, –1, 1, 1, 0, 0, 0, 0, 0, 0, 0, 0, 1, –1, 1, –1, –1, 1, –1, 1, 1, –1, 1, –1, –1, 1, –1, 1, 0, 0, 0, 0, 0, 0, 0, 0, 1, 1, 1, 1, –1, –1, –1, –1, 1, 1, 1, 1, –1, –1, –1, –1, 0, 0, 0, 0, 0, 0, 0, 0, 1, –1, –1, 1, 1, –1, –1, 1, 1, –1, –1, 1, 1, –1, –1, 1, 0, 0, 0, 0, 0, 0, 0, 0, 1, 1, –1, –1, 1, 1, –1, –1, 1, 1, –1, –1, 1, 1, –1, –1, 0, 0, 0, 0, 0, 0, 0, 0, 1, –1, 1, –1, 1, –1, 1, –1, 1, –1, 1, –1, 1, –1, 1, –1, 0, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0, 0];

$\boldsymbol{u}_8^{(1)}$=[1, 1, 1, 1, 1, 1, 1, 1, –1, –1, –1, –1, –1, –1, –1, –1, 0, 0, 0, 0, 0, 0, 0, 0, 1, –1, 1, –1, 1, –1, 1, –1, –1, 1, –1, 1, –1, 1, –1, 1, 0, 0, 0, 0, 0, 0, 0, 0, 1, 1, –1, –1, 1, 1, –1, –1, –1, –1, 1, 1, –1, –1, 1, 1, 0, 0, 0, 0, 0, 0, 0, 0, 1, –1, –1, 1, 1, –1, –1, 1, –1, 1, 1, –1, –1, 1, 1, –1, 0, 0, 0, 0, 0, 0, 0, 0, 1, 1, 1, 1, –1, –1, –1, –1, –1, –1, –1, –1, 1, 1, 1, 1, 0, 0, 0, 0, 0, 0, 0, 0, 1, –1, 1, –1, –1, 1, –1, 1, –1, 1, –1, 1, 1, –1, 1, –1, 0, 0, 0, 0, 0, 0, 0, 0, 1, 1, –1, –1, –1, –1, 1, 1, –1, –1, 1, 1, 1, 1, –1, –1, 0, 0, 0, 0, 0, 0, 0, 0, 1, –1, –1, 1, –1, 1, 1, –1, –1, 1, 1, –1, 1, –1, –1, 1, 0, 0, 0, 0, 0, 0, 0, 0];

$\boldsymbol{u}_9^{(1)}$=[1, −1, 1, −1, 1, −1, 1, −1, −1, 1, −1, 1, −1, 1, −1, 1, 0, 0, 0, 0, 0, 0, 0, 0, 1, 1, 1, 1, 1, 1, 1, 1, −1, −1, −1, −1, −1, −1, −1, −1, 0, 0, 0, 0, 0, 0, 0, 0, 1, −1, −1, 1, 1, −1, −1, 1, −1, 1, 1, −1, −1, 1, 1, −1, 0, 0, 0, 0, 0, 0, 0, 0, 1, 1, −1, −1, 1, 1, −1, −1, −1, −1, 1, 1, −1, −1, 1, 1, 0, 0, 0, 0, 0, 0, 0, 0, 1, −1, 1, −1, −1, 1, −1, 1, −1, 1, −1, 1, 1, −1, 1, −1, 0, 0, 0, 0, 0, 0, 0, 0, 1, 1, 1, 1, −1, −1, −1, −1, −1, −1, −1, −1, 1, 1, 1, 1, 0, 0, 0, 0, 0, 0, 0, 0, 1, −1, −1, 1, −1, 1, 1, −1, −1, 1, 1, −1, 1, −1, −1, 1, 0, 0, 0, 0, 0, 0, 0, 0, 1, 1, −1, −1, −1, −1, 1, 1, −1, −1, 1, 1, 1, 1, −1, −1, 0, 0, 0, 0, 0, 0, 0, 0];

$\boldsymbol{u}_{10}^{(1)}$=[1, 1, −1, −1, 1, 1, −1, −1, −1, −1, 1, 1, −1, −1, 1, 1, 0, 0, 0, 0, 0, 0, 0, 0, 1, −1, −1, 1, 1, −1, −1, 1, −1, 1, 1, −1, −1, 1, 1, −1, 0, 0, 0, 0, 0, 0, 0, 0, 1, 1, 1, 1, 1, 1, 1, 1, −1, −1, −1, −1, −1, −1, −1, −1, 0, 0, 0, 0, 0, 0, 0, 0, 1, −1, 1, −1, 1, −1, 1, −1, −1, 1, −1, 1, −1, 1, −1, 1, 0, 0, 0, 0, 0, 0, 0, 0, 1,

1, −1, −1, −1, −1, 1, 1, −1, −1, 1, 1, 1, 1, −1, −1, 0, 0, 0, 0, 0, 0, 0, 0, 1, −1, −1, 1, −1, 1, 1, −1, −1, 1, 1, −1, 1, −1, −1, 1, 0, 0, 0, 0, 0, 0, 0, 0, 1, 1, 1, 1, −1, −1, −1, −1, −1, −1, −1, −1, 1, 1, 1, 1, 0, 0, 0, 0, 0, 0, 0, 0, 1, −1, 1, −1, −1, 1, −1, 1, −1, 1, −1, 1, 1, −1, 1, −1, 0, 0, 0, 0, 0, 0, 0, 0];

$\boldsymbol{u}_{11}^{(1)}$=[1, −1, −1, 1, 1, −1, −1, 1, −1, 1, 1, −1, −1, 1, 1, −1, 0, 0, 0, 0, 0, 0, 0, 0, 1, 1, −1, −1, 1, 1, −1, −1, −1, −1, 1, 1, −1, −1, 1, 1, 0, 0, 0, 0, 0, 0, 0, 0, 1, −1, 1, −1, 1, −1, 1, −1, −1, 1, −1, 1, −1, 1, −1, 1, 0, 0, 0, 0, 0, 0, 0, 0, 1, 1, 1, 1, 1, 1, 1, 1, −1, −1, −1, −1, −1, −1, −1, −1, 0, 0, 0, 0, 0, 0, 0, 0, 1, −1, −1, 1, −1, 1, 1, −1, −1, 1, 1, −1, 1, −1, −1, 1, 0, 0, 0, 0, 0, 0, 0, 0, 1, 1, −1, −1, −1, −1, 1, 1, −1, −1, 1, 1, 1, 1, −1, −1, 0, 0, 0, 0, 0, 0, 0, 0, 1, −1, 1, −1, −1, 1, −1, 1, −1, 1, −1, 1, 1, −1, 1, −1, 0, 0, 0, 0, 0, 0, 0, 0, 1, 1, 1, 1, −1, −1, −1, −1, −1, −1, −1, −1, 1, 1, 1, 1, 0, 0, 0, 0, 0, 0, 0, 0];

$\boldsymbol{u}_{12}^{(1)}$=[1, 1, 1, 1, −1, −1, −1, −1, −1, −1, −1, −1, 1, 1, 1, 1, 0, 0, 0, 0, 0, 0, 0, 0, 1, −1, 1, −1, −1, 1, −1, 1, −1, 1, −1, 1, 1, −1, 1, −1, 0, 0, 0, 0, 0, 0, 0, 0, 1, 1, −1, −1, −1, −1, 1, 1, −1, −1, 1, 1, 1, 1, −1, −1, 0, 0, 0, 0, 0, 0, 0, 0, 1, −1, −1, 1, −1, 1, 1, −1, −1, 1, 1, −1, 1, −1, −1, 1, 0, 0, 0, 0, 0, 0, 0, 0, 1, 1, 1, 1, 1, 1, 1, 1, −1, −1, −1, −1, −1, −1, −1, −1, 0, 0, 0, 0, 0, 0, 0, 0, 1, −1, 1, −1, 1, −1, 1, −1, −1, 1, −1, 1, −1, 1, −1, 1, 0, 0, 0, 0, 0, 0, 0, 0, 1, 1, −1, −1, 1, 1, −1, −1, −1, −1, 1, 1, −1, −1, 1, 1, 0, 0, 0, 0, 0, 0, 0, 0, 1, −1, −1, 1, 1, −1, −1, 1, −1, 1, 1, −1, −1, 1, 1, −1, 0, 0, 0, 0, 0, 0, 0, 0];

$\boldsymbol{u}_{13}^{(1)}$=[1, –1, 1, –1, –1, 1, –1, 1, –1, 1, –1, 1, 1, –1, 1, –1, 0, 0, 0, 0, 0, 0, 0, 0, 1, 1, 1, 1, –1, –1, –1, –1, –1, –1, –1, –1, 1, 1, 1, 1, 0, 0, 0, 0, 0, 0, 0, 0, 1, –1, –1, 1, –1, 1, 1, –1, –1, 1, 1, –1, 1, –1, –1, 1, 0, 0, 0, 0, 0, 0, 0, 0, 1, 1, –1, –1, –1, –1, 1, 1, –1, –1, 1, 1, 1, 1, –1, –1, 0, 0, 0, 0, 0, 0, 0, 0, 1, –1, 1, –1, 1, –1, 1, –1, –1, 1, –1, 1, –1, 1, –1, 1, 0, 0, 0, 0, 0, 0, 0, 0, 1, 1, 1, 1, 1, 1, 1, 1, –1, –1, –1, –1, –1, –1, –1, –1, 0, 0, 0, 0, 0, 0, 0, 0, 1, –1, –1, 1, 1, –1, –1, 1, –1, 1, 1, –1, –1, 1, 1, –1, 0, 0, 0, 0, 0, 0, 0, 0, 1, 1, –1, –1, 1, 1, –1, –1, –1, –1, 1, 1, –1, –1, 1, 1, 0, 0, 0, 0, 0, 0, 0, 0];

$\boldsymbol{u}_{14}^{(1)}$=[1, 1, –1, –1, –1, –1, 1, 1, –1, –1, 1, 1, 1, 1, –1, –1, 0, 0, 0, 0, 0, 0, 0, 0, 1, –1, –1, 1, –1, 1, 1, –1, –1, 1, 1, –1, 1, –1, –1, 1, 0, 0, 0, 0, 0, 0, 0, 0, 1, 1, 1, 1, –1, –1, –1, –1, –1, –1, –1, –1, 1, 1, 1, 1, 0, 0, 0, 0, 0, 0, 0, 0, 1, –1, 1, –1, –1, 1, –1, 1, –1, 1, –1, 1, 1, –1, 1, –1, 0, 0, 0, 0, 0, 0, 0, 0, 1, 1, –1, –1, 1, 1, –1, –1, –1, –1, 1, 1, –1, –1, 1, 1, 0, 0, 0, 0, 0, 0, 0, 0, 1, –1, –1, 1, 1, –1, –1, 1, –1, 1, 1, –1, –1, 1, 1, –1, 0, 0, 0, 0, 0, 0, 0, 0, 1, 1, 1, 1, 1, 1, 1, 1, –1, –1, –1, –1, –1, –1, –1, –1, 0, 0, 0, 0, 0, 0, 0, 0, 1, –1, 1, –1, 1, –1, 1, –1, –1, 1, –1, 1, –1, 1, –1, 1, 0, 0, 0, 0, 0, 0, 0, 0];

and

$\boldsymbol{u}_{15}^{(1)}$=[1, –1, –1, 1, –1, 1, 1, –1, –1, 1, 1, –1, 1, –1, –1, 1, 0, 0, 0, 0, 0, 0, 0, 0, 1, 1, –1, –1, –1, –1, 1, 1, –1, –1, 1, 1, 1, 1, –1, –1, 0, 0, 0, 0, 0, 0, 0, 0, 1, –1, 1, –1, –1, 1, –1, 1, –1, 1, –1, 1, 1, –1, 1, –1, 0, 0, 0, 0, 0, 0, 0, 0, 1, 1, 1, 1, –1, –1, –1, –1, –1, –1, –1, –1, 1, 1, 1, 1, 0, 0, 0, 0, 0, 0, 0, 0, 1, –1, –1, 1, 1, –1, –1, 1, –1, 1, 1, –1, –1, 1, 1, –1, 0, 0, 0, 0, 0, 0, 0, 0, 1, 1, –1, –1, 1, 1, –1, –1, –1, –1, 1, 1, –1, –1, 1, 1, 0, 0, 0, 0, 0, 0, 0, 0, 1, –1, 1, –1, 1, –1, 1, –1, –1, 1, –1, 1, –1, 1, –1, 1, 0, 0, 0, 0, 0, 0, 0, 0, 1, 1, 1, 1, 1, 1, 1, 1, –1, –1, –1, –1, –1, –1, –1, –1, 0, 0, 0, 0, 0, 0, 0, 0].

Embodiment 2

It is assumed that $\mathcal{A}$ ={$\boldsymbol{A}^0$, $\boldsymbol{A}^1$, ⋯ , $\boldsymbol{A}^{M-1}$} is a sequence family including *M* sequence sets, where each sequence set $\boldsymbol{A}^m = \{\boldsymbol{a}_0^m, \boldsymbol{a}_1^m, \cdots, \boldsymbol{a}_{M-1}^m\}$, and $\boldsymbol{A}^m$ includes *M* sequences each having a sequence length of *N*.

If

$$R_{\boldsymbol{A}^{m_1},\boldsymbol{A}^{m_2}}(\tau) = \sum_{m=0}^{M-1} R_{\boldsymbol{a}_m^{m_1},\boldsymbol{a}_m^{m_2}}(\tau) = \begin{cases} MN, m_1 = m_2, \tau = 0 \\ 0, others \end{cases},$$

the sequence family $\mathcal{A}$ is referred to as a complete complementary code (CCC), and is briefly denoted as (*M, N*)*-CCC,* where $R_{a,b}(\tau)$ represents aperiodic cross-correlation functions of a sequence ***a*** and a sequence ***b*** at the delay $\tau$. $\boldsymbol{A}^{m1}$ *and* $\boldsymbol{A}^{m2}$ are any two sequence sets in the sequence family $\mathcal{A}$.

Further, a specific process of constructing a CCC-based transmitted waveform sequence set is as follows.

It is assumed that $\mathcal{A}$ is a (*M, N*)-CCC, and it is defined as follows:

$$\boldsymbol{s}_m = [\boldsymbol{a}_0^m, \boldsymbol{0}_k, \boldsymbol{a}_1^m, \boldsymbol{0}_k, \cdots, \boldsymbol{a}_{M-1}^m]$$

In this case, a sequence set $\boldsymbol{S} = \{\boldsymbol{s}_0, \boldsymbol{s}_1, \cdots, \boldsymbol{s}_{M-1}\}$ is a sequence set that includes a sequence having an aperiodic ZCZ, where $k \le N$, and k represents a quantity of 0s. A quantity of sequences included in the sequence set $\boldsymbol{S}$ is M, and a sequence length of each sequence is $MN + (M - 1)k$. For example, when the transmitting end sends the Q pulse bursts to the receiving end based on the N sequences, N≤M, P=M, and $Q=MN + (M - 1)k$.

When k is greater than or equal to the sequence length of the sequence in the sequence set, the zero correlation zone is the sequence length of the sequence plus 1. When k is less than the sequence length of the sequence, the zero correlation zone is $k + 1$. All of the sequence sets include a same quantity of sequences, and all of the sequences have a same sequence length.

A CCC with a parameter (4,8) is used as an example. It is assumed that $\mathcal{A}$ is a CCC with a parameter (4,8), where

$$\boldsymbol{A}^0 = \begin{bmatrix} -1 & -1 & -1 & 1 & 1 & -1 & 1 & 1 \\ 1 & 1 & 1 & -1 & 1 & -1 & 1 & 1 \\ 1 & -1 & 1 & 1 & -1 & -1 & -1 & 1 \\ -1 & 1 & -1 & -1 & -1 & -1 & -1 & 1 \end{bmatrix}, \boldsymbol{A}^1 = \begin{bmatrix} 1 & 1 & 1 & -1 & 1 & -1 & 1 & 1 \\ -1 & -1 & -1 & 1 & 1 & -1 & 1 & 1 \\ -1 & 1 & -1 & -1 & -1 & -1 & -1 & 1 \\ 1 & -1 & 1 & 1 & -1 & -1 & -1 & 1 \end{bmatrix}$$

$$\boldsymbol{A}^2 = \begin{bmatrix} 1 & 1 & -1 & 1 & -1 & 1 & 1 & 1 \\ -1 & -1 & 1 & -1 & -1 & 1 & 1 & 1 \\ -1 & 1 & 1 & 1 & 1 & 1 & -1 & 1 \\ 1 & -1 & -1 & -1 & 1 & 1 & -1 & 1 \end{bmatrix}, \boldsymbol{A}^3 = \begin{bmatrix} -1 & -1 & 1 & -1 & -1 & 1 & 1 & 1 \\ 1 & 1 & -1 & 1 & -1 & 1 & 1 & 1 \\ 1 & -1 & -1 & -1 & 1 & 1 & -1 & 1 \\ -1 & 1 & 1 & 1 & 1 & 1 & -1 & 1 \end{bmatrix}$$

It is set that $k = 8$. $\boldsymbol{A}^0$ is used as an example. $\boldsymbol{A}^0$ includes a total of four sequences. Eight zero elements are added between a first sequence $\boldsymbol{a}_0^0$ and a second sequence $\boldsymbol{a}_1^0$, eight zero elements are added between the second sequence $\boldsymbol{a}_1^0$ and a third sequence $\boldsymbol{a}_2^0$, and eight zero elements are added between the third sequence $\boldsymbol{a}_2^0$ and a fourth sequence $\boldsymbol{a}_3^0$, to obtain the following si:

$\boldsymbol{s}_1$ = (-1, -1, -1, 1, 1, -1, 1, 1, 0, 0, 0, 0, 0, 0, 0, 0, 1, 1, 1, -1, 1, -1, 1, 1, 0, 0, 0, 0, 0, 0, 0, 0, 1, -1, 1, 1, -1, -1, -1, 1, 0, 0, 0, 0, 0, 0, 0, 0, -1, 1, -1, -1, -1, -1, -1, 1).

$\boldsymbol{a}_0^0$ includes elements in a first row of $\boldsymbol{A}^0$, $\boldsymbol{a}_1^0$ includes elements in a second row of $\boldsymbol{A}^0$, $\boldsymbol{a}_2^0$ includes elements in a third row of $\boldsymbol{A}^0$, and $\boldsymbol{a}_3^0$ includes elements in a fourth row of $\boldsymbol{A}^0$.

Specifically, the method provided in Embodiment 2 is used, and a transmitted waveform sequence set obtained by using the CCC with a parameter (4,8) and $k = 8$ as an example includes a total of four sequences each having a sequence length of 56, where each sequence includes 24 zero elements, $MN + (M - 1)k = 4\times8+(4-1)\times8=56$, and a zero correlation zone is 9. For example, when the transmitting end sends the Q pulse bursts to the receiving end based on the N sequences, N≤4, P=4, and Q=56.

The transmitted waveform sequence set specifically includes:

$\boldsymbol{s}_1$ = (-1, -1, -1, 1, 1, -1, 1, 1, 0, 0, 0, 0, 0, 0, 0, 0, 1, 1, 1, -1, 1, -1, 1, 1, 0, 0, 0, 0, 0, 0, 0, 0, 1, -1, 1, 1, -1, -1, -1, 1, 0, 0, 0, 0, 0, 0, 0, 0, -1, 1, -1, -1, -1, -1, -1, 1);

$\boldsymbol{s}_2$ = (1, 1, 1, -1, 1, -1, 1, 1, 0, 0, 0, 0, 0, 0, 0, 0, -1, -1, -1, 1, 1, -1, 1, 1, 0, 0, 0, 0, 0, 0, 0, 0, -1, 1, -1, -1, -1, -1, -1, 1, 0, 0, 0, 0, 0, 0, 0, 0, 1, -1, 1, 1, -1, -1, -1, 1);

$\boldsymbol{s}_3$ = (1,1, -1, 1, -1, 1, 1, 1, 0, 0, 0, 0, 0, 0, 0, 0, -1, -1, 1, -1, -1, 1, 1, 1, 0, 0, 0, 0, 0, 0, 0, 0, -1, 1, 1, 1, 1, 1, -1, 1, 0, 0, 0, 0, 0, 0, 0, 0, 1, -1, -1, -1, 1, 1, -1, 1); and

$\boldsymbol{s}_4$ = (-1, -1, 1, -1, -1, 1, 1, 1, 0, 0, 0, 0, 0, 0, 0, 0, 1, 1, -1, 1, -1, 1, 1, 1, 0, 0, 0, 0, 0, 0, 0, 0, 1, -1, -1, -1, 1, 1, -1, 1, 0, 0, 0, 0, 0, 0, 0, 0, -1, 1, 1, 1, 1, 1, -1, 1).

The foregoing transmitted waveform sequence set is used, so that no cyclic prefix and cyclic suffix need to be additionally added, thereby reducing the air interface time.

As another optional transmitted waveform sequence set, the method provided in Embodiment 2 is used, and a transmitted waveform sequence set obtained by using a CCC with a parameter (4,10) and k=10 as an example includes a total of four sequences each having a sequence length of 70, where each sequence includes 30 zero elements, $MN + (M - 1)k = 4\times10+(4-1)\times10=70$, and a zero correlation zone is 11. For example, when the transmitting end sends the Q pulse bursts to the receiving end based on the N sequences, N≤4, P=4, and Q=70.

The transmitted waveform sequence set specifically includes:

$$s_1 = \begin{pmatrix} 1,1,-1,1,-1,1,-1,-1,1,1,0,0,0,0,0,0,0,0,0,0,1,1,-1,1,-1,1,-1,-1,1,1,0,0,0,0,0, \\ 0,0,0,0,0,1,1,-1,1,1,1,1,1,-1,-1,0,0,0,0,0,0,0,0,0,0,1,1,-1,1,1,1,1,1,-1,-1 \end{pmatrix}$$

$$s_2 = \begin{pmatrix} 1,1,-1,1,-1,1,-1,-1,1,1,0,0,0,0,0,0,0,0,0,0,-1,-1,1,-1,1,-1,1,1,-1,-1,0,0,0,0,0, \\ 0,0,0,0,0,1,1,-1,1,1,1,1,1,-1,-1,0,0,0,0,0,0,0,0,0,0,-1,-1,1,-1,-1,-1,-1,-1,1,1 \end{pmatrix}$$

$$s_3 = \begin{pmatrix} -1,-1,1,1,1,1,1,-1,1,1,0,0,0,0,0,0,0,0,0,0,-1,-1,1,1,1,1,1,-1,1,1,0,0,0,0,0,0, \\ 0,0,0,0,-1,-1,1,1,-1,1,-1,1,-1,-1,0,0,0,0,0,0,0,0,0,0,-1,-1,1,1,-1,1,-1,1,-1,-1 \end{pmatrix}$$

$$s_4 = \begin{pmatrix} -1,-1,1,1,1,1,1,-1,1,1,0,0,0,0,0,0,0,0,0,0,1,1,-1,-1,-1,-1,-1,1,-1,-1,0,0,0,0,0, \\ 0,0,0,0,0,-1,-1,1,1,-1,1,-1,1,-1,-1,0,0,0,0,0,0,0,0,0,0,1,1,-1,-1,1,-1,1,-1,1,1 \end{pmatrix}$$

As another optional transmitted waveform sequence set, the method provided in Embodiment 2 is used, and a transmitted waveform sequence set obtained by using a CCC with a parameter (4,16) and k=16 as an example includes a total of four sequences each having a sequence length of 112, where each sequence includes 48 zero elements, $MN + (M - 1)k = 4\times16+(4-1)\times16=112$, and a zero correlation zone is 17. For example, when the transmitting end sends the Q pulse bursts to the receiving end based on the N sequences, N≤4, P=4, and Q=112.

The transmitted waveform sequence set specifically includes:

$$s_1 = \begin{pmatrix} 1,1,-1,-1,1,-1,1,-1,1,-1,-1,1,-1,-1,-1,-1,0,0,0,0,0,0,0,0,0,0,0,0,0,0,0,0,1,1,-1,-1,1,-1, \\ 1,-1,-1,1,1,-1,1,1,1,1,0,0,0,0,0,0,0,0,0,0,0,0,0,0,0,0,1,-1,-1,1,1,1,1,1,1,-1,-1,-1,1, \\ -1,1,0,0,0,0,0,0,0,0,0,0,0,0,0,0,0,0,1,-1,-1,1,1,1,1,-1,-1,1,1,1,-1,1,-1 \end{pmatrix}$$

$$s_2 = \begin{pmatrix} 1,1,-1,-1,1,-1,1,-1,-1,1,1,-1,1,1,1,1,0,0,0,0,0,0,0,0,0,0,0,0,0,0,0,0,1,1,-1,-1,1,-1,1, \\ -1,1,-1,-1,1,-1,-1,-1,-1,0,0,0,0,0,0,0,0,0,0,0,0,0,0,0,0,1,-1,-1,1,1,1,1,1,-1,-1,1,1,1, \\ -1,1,-1,0,0,0,0,0,0,0,0,0,0,0,0,0,0,0,0,1,-1,-1,1,1,1,1,1,1,1,-1,-1,-1,1,-1,1 \end{pmatrix}$$

$$s_3 = \begin{pmatrix} 1,1,1,1,1,-1,-1,1,1,-1,1,-1,-1,-1,1,1,0,0,0,0,0,0,0,0,0,0,0,0,0,0,0,0,1,1,1,1,1,-1,-1,1, \\ -1,1,-1,1,1,1,-1,-1,0,0,0,0,0,0,0,0,0,0,0,0,0,0,0,0,1,-1,1,-1,1,1,-1,-1,1,1,1,1,-1,1,1, \\ -1,0,0,0,0,0,0,0,0,0,0,0,0,0,0,0,0,1,-1,1,-1,1,1,-1,-1,-1,-1,-1,-1,1,-1,-1,1 \end{pmatrix}$$

$$s_4=\begin{pmatrix}1,1,1,1,1,-1,-1,1,-1,1,-1,1,1,1,-1,-1,0,0,0,0,0,0,0,0,0,0,0,0,0,0,0,0,1,1,1,1,1,-1,-1,1,\\1,-1,1,-1,-1,-1,1,1,0,0,0,0,0,0,0,0,0,0,0,0,0,0,0,0,1,-1,1,-1,1,1,-1,-1,-1,-1,-1,-1,1,-1,\\-1,1,0,0,0,0,0,0,0,0,0,0,0,0,0,0,0,0,1,-1,1,-1,1,1,-1,-1,1,1,1,1,-1,1,1,-1\end{pmatrix}$$

As another optional transmitted waveform sequence set, the method provided in Embodiment 2 is used, and a transmitted waveform sequence set obtained by using a CCC with a parameter (4,20) and k=20 as an example includes a total of four sequences each having a sequence length of 140, where each sequence includes 60 zero elements, $MN+(M-1)k=4\times20+(4-1)\times20=140$, and a zero correlation zone is 21. For example, when the transmitting end sends the Q pulse bursts to the receiving end based on the N sequences, N≤4, P=4, and Q=140.

The transmitted waveform sequence set specifically includes:

$$s_1=\begin{pmatrix}1,1,-1,1,-1,1,-1,-1,1,1,1,1,-1,1,1,1,1,1,-1,-1,0,0,0,0,0,0,0,0,0,0,0,0,0,0,0,0,0,0,0,0,\\1,1,-1,1,-1,1,-1,-1,1,1,1,1,-1,1,1,1,1,1,-1,-1,0,0,0,0,0,0,0,0,0,0,0,0,0,0,0,0,0,0,0,0,\\1,1,-1,1,-1,1,-1,-1,1,1,-1,-1,1,-1,-1,-1,-1,-1,1,1,0,0,0,0,0,0,0,0,0,0,0,0,0,0,0,0,0,0,\\0,0,1,1,-1,1,-1,1,-1,-1,1,1,-1,-1,1,-1,-1,-1,-1,-1,1,1\end{pmatrix}$$

$$s_2=\begin{pmatrix}1,1,-1,1,-1,1,-1,-1,1,1,1,1,-1,1,1,1,1,1,-1,-1,0,0,0,0,0,0,0,0,0,0,0,0,0,0,0,0,0,0,0,0,\\-1,-1,1,-1,1,-1,1,1,-1,-1,-1,-1,1,-1,-1,-1,-1,-1,1,1,0,0,0,0,0,0,0,0,0,0,0,0,0,0,0,0,0,\\0,0,0,1,1,-1,1,-1,1,-1,-1,1,1,-1,-1,1,-1,-1,-1,-1,-1,1,1,0,0,0,0,0,0,0,0,0,0,0,0,0,0,0,\\0,0,0,0,0,-1,-1,1,-1,1,-1,1,1,-1,-1,1,1,-1,1,1,1,1,1,-1,-1\end{pmatrix}$$

$$s_3=\begin{pmatrix}1,1,-1,-1,-1,-1,-1,1,-1,-1,1,1,-1,-1,1,-1,1,-1,1,1,0,0,0,0,0,0,0,0,0,0,0,0,0,0,0,0,0,0,0,\\0,1,1,-1,-1,-1,-1,-1,1,-1,-1,1,1,-1,-1,1,-1,1,-1,1,1,0,0,0,0,0,0,0,0,0,0,0,0,0,0,0,0,0,0,\\0,0,1,1,-1,-1,-1,-1,-1,1,-1,-1,-1,-1,1,1,-1,1,-1,1,-1,-1,0,0,0,0,0,0,0,0,0,0,0,0,0,0,0,0,\\0,0,0,0,1,1,-1,-1,-1,-1,-1,1,-1,-1,-1,-1,1,1,-1,1,-1,1,-1,-1\end{pmatrix}$$

$$s_4=\begin{pmatrix}1,1,-1,-1,-1,-1,-1,1,-1,-1,1,1,-1,-1,1,-1,1,-1,1,1,0,0,0,0,0,0,0,0,0,0,0,0,0,0,0,0,0,0,0,\\0,-1,-1,1,1,1,1,1,-1,1,1,-1,-1,1,1,-1,1,-1,1,-1,-1,0,0,0,0,0,0,0,0,0,0,0,0,0,0,0,0,0,0,0,\\0,1,1,-1,-1,-1,-1,-1,1,-1,-1,-1,-1,1,1,-1,1,-1,1,-1,-1,0,0,0,0,0,0,0,0,0,0,0,0,0,0,0,0,0,\\0,0,0,-1,-1,1,1,1,1,1,-1,1,1,1,1,-1,-1,1,-1,1,-1,1,1\end{pmatrix}$$

As another optional transmitted waveform sequence set, the method provided in Embodiment 2 is used, and a transmitted waveform sequence set obtained by using a CCC with a parameter (4,26) and k=26 as an example includes a total of four sequences each having a sequence length of 182, where each sequence includes 78 zero elements, $MN+(M-1)k=4\times26+(4-1)\times26=182$, and a zero correlation zone is 27. For example, when the transmitting end sends the Q pulse bursts to the receiving end based on the N sequences, N≤4, P=4, and Q=182.

The transmitted waveform sequence set specifically includes:

$$s_1=\begin{pmatrix}1,1,1,1,-1,1,1,-1,-1,1,-1,1,-1,1,-1,-1,1,-1,1,1,1,-1,-1,1,1,1,0,0,0,0,0,0,0,0,0,0,\\0,0,0,0,0,0,0,0,0,0,0,0,0,0,0,0,1,1,1,1,-1,1,1,-1,-1,1,-1,1,-1,1,-1,-1,1,-1,1,1,1,\\-1,-1,1,1,1,0,0,0,0,0,0,0,0,0,0,0,0,0,0,0,0,0,0,0,0,0,0,0,0,0,0,1,1,1,1,-1,1,1,-1,\\-1,1,-1,1,1,1,1,1,-1,1,-1,-1,-1,1,1,-1,-1,-1,0,0,0,0,0,0,0,0,0,0,0,0,0,0,0,0,0,0,0,\\0,0,0,0,0,0,0,1,1,1,1,-1,1,1,-1,-1,1,-1,1,1,1,1,1,-1,1,-1,-1,-1,1,1,-1,-1,-1\end{pmatrix}$$

$$s_2 = \begin{pmatrix} 1,1,1,1,-1,1,1,-1,-1,1,-1,1,-1,1,-1,-1,1,-1,1,1,1,-1,-1,1,1,1,0,0,0,0,0,0,0,0,0,0,0, \\ 0,0,0,0,0,0,0,0,0,0,0,0,0,0,-1,-1,-1,-1,1,-1,-1,1,1,-1,1,-1,1,-1,1,1,-1,1,-1,-1,-1, \\ 1,1,-1,-1,-1,0,0,0,0,0,0,0,0,0,0,0,0,0,0,0,0,0,0,0,0,0,0,0,0,0,1,1,1,1,-1,1,1,-1, \\ -1,1,-1,1,1,1,1,1,-1,1,-1,-1,-1,1,1,-1,-1,-1,0,0,0,0,0,0,0,0,0,0,0,0,0,0,0,0,0,0,0, \\ 0,0,0,0,0,0,-1,-1,-1,-1,1,-1,-1,1,1,-1,1,-1,-1,-1,-1,-1,1,-1,1,1,1,-1,-1,1,1,1 \end{pmatrix}$$

$$s_3 = \begin{pmatrix} -1,-1,-1,1,1,-1,-1,-1,1,-1,1,1,1,1,1,-1,1,-1,-1,1,1,-1,1,1,1,1,0,0,0,0,0,0,0,0,0,0,0, \\ 0,0,0,0,0,0,0,0,0,0,0,0,0,0,-1,-1,-1,1,1,-1,-1,-1,1,-1,1,1,1,1,1,-1,1,-1,-1,1,1,-1, \\ 1,1,1,1,0,0,0,0,0,0,0,0,0,0,0,0,0,0,0,0,0,0,0,0,0,0,0,0,0,-1,-1,-1,1,1,-1,-1,-1,1, \\ -1,1,1,-1,1,-1,1,-1,1,1,-1,-1,1,-1,-1,-1,-1,0,0,0,0,0,0,0,0,0,0,0,0,0,0,0,0,0,0,0, \\ 0,0,0,0,0,0,-1,-1,-1,1,1,-1,-1,-1,1,-1,1,1,-1,1,-1,1,-1,1,1,-1,-1,1,-1,-1,-1,-1 \end{pmatrix}$$

$$s_4 = \begin{pmatrix} -1,-1,-1,1,1,-1,-1,-1,1,-1,1,1,1,1,1,-1,1,-1,-1,1,1,-1,1,1,1,1,0,0,0,0,0,0,0,0,0,0,0, \\ 0,0,0,0,0,0,0,0,0,0,0,0,0,0,1,1,1,-1,-1,1,1,1,-1,1,-1,-1,-1,-1,-1,1,-1,1,1,-1,-1,1, \\ -1,-1,-1,-1,0,0,0,0,0,0,0,0,0,0,0,0,0,0,0,0,0,0,0,0,0,0,0,0,0,-1,-1,-1,1,1,-1,-1, \\ -1,1,-1,1,1,-1,1,-1,1,-1,1,1,-1,-1,1,-1,-1,-1,-1,0,0,0,0,0,0,0,0,0,0,0,0,0,0,0,0,0, \\ 0,0,0,0,0,0,0,0,1,1,1,-1,-1,1,1,1,-1,1,-1,-1,1,-1,1,-1,1,-1,-1,1,1,-1,1,1,1,1 \end{pmatrix}$$

As another optional transmitted waveform sequence set, the method provided in Embodiment 2 is used, and a transmitted waveform sequence set obtained by using a CCC with a parameter (4,32) and k=32 as an example includes a total of four sequences each having a sequence length of 224, where each sequence includes 96 zero elements, $MN + (M-1)k = 4\times32+(4-1)\times32=224$, and a zero correlation zone is 33. For example, when the transmitting end sends the Q pulse bursts to the receiving end based on the N sequences, N≤4, P=4, and Q=224.

The transmitted waveform sequence set specifically includes:

$$s_1 = \begin{pmatrix} 1,1,-1,1,-1,-1,1,-1,-1,1,-1,-1,1,-1,1,1,1,-1,-1,-1,1,-1,-1,-1,-1,-1,-1,1, \\ -1,-1,-1,1,0,0,0,0,0,0,0,0,0,0,0,0,0,0,0,0,0,0,0,0,0,0,0,0,0,0,0,0,0,0,0,0, \\ 0,0,1,1,1,-1,-1,-1,-1,1,-1,1,1,1,1,-1,-1,-1,1,-1,1,1,1,-1,1,1,-1,-1,1,-1, \\ -1,-1,1,-1,0,0,0,0,0,0,0,0,0,0,0,0,0,0,0,0,0,0,0,0,0,0,0,0,0,0,0,0,0,0,0,0, \\ 0,0,1,1,-1,1,-1,-1,1,-1,1,-1,1,1,-1,1,-1,-1,1,-1,-1,-1,1,-1,-1,-1,1,1,1,-1, \\ 1,1,1,-1,0,0,0,0,0,0,0,0,0,0,0,0,0,0,0,0,0,0,0,0,0,0,0,0,0,0,0,0,0,0,0,0,0,0, \\ 1,1,1,-1,-1,-1,-1,1,1,-1,-1,-1,-1,1,1,1,1,-1,1,1,1,-1,1,1,1,1,-1,1,1,1,-1,1 \end{pmatrix}$$

$$s_2 = \begin{pmatrix} 1,1,1,-1,-1,-1,-1,1,-1,1,1,1,1,-1,-1,-1,1,-1,1,1,1,-1,1,1,-1,-1,1,-1,-1,-1, \\ 1,-1,0,0,0,0,0,0,0,0,0,0,0,0,0,0,0,0,0,0,0,0,0,0,0,0,0,0,0,0,0,0,0,0,1,1, \\ -1,1,-1,-1,1,-1,-1,1,-1,-1,1,-1,1,1,1,-1,-1,-1,1,-1,-1,-1,-1,-1,-1,1,-1,-1, \\ -1,1,0,0,0,0,0,0,0,0,0,0,0,0,0,0,0,0,0,0,0,0,0,0,0,0,0,0,0,0,0,0,0,0,1,1, \\ 1,-1,-1,-1,-1,1,1,-1,-1,-1,-1,1,1,1,1,-1,1,1,1,-1,1,1,1,1,-1,1,1,1,-1,1,0, \\ 0,0,0,0,0,0,0,0,0,0,0,0,0,0,0,0,0,0,0,0,0,0,0,0,0,0,0,0,0,0,0,1,1,-1,1, \\ -1,-1,1,-1,1,-1,1,1,-1,1,-1,-1,1,-1,-1,-1,1,-1,-1,-1,1,1,1,-1,1,1,1,-1 \end{pmatrix}$$

$$s_3 = \begin{pmatrix} 1,1,-1,1,1,1,-1,1,-1,1,-1,-1,-1,1,-1,-1,1,-1,-1,-1,-1,1,1,1,-1,-1,-1,1,1,1,1, \\ -1,0,0,0,0,0,0,0,0,0,0,0,0,0,0,0,0,0,0,0,0,0,0,0,0,0,0,0,0,0,0,0,0,1,1,1, \\ -1,1,1,1,-1,-1,1,1,1,-1,1,1,1,1,-1,1,1,-1,1,-1,-1,-1,-1,1,-1,1,1,-1,1,0,0,0, \\ 0,0,0,0,0,0,0,0,0,0,0,0,0,0,0,0,0,0,0,0,0,0,0,0,0,0,0,0,0,1,1,-1,1,1,1,-1, \\ 1,1,-1,1,1,1,-1,1,1,1,-1,-1,-1,-1,1,1,1,1,1,1,-1,-1,-1,-1,1,0,0,0,0,0,0,0,0, \\ 0,0,0,0,0,0,0,0,0,0,0,0,0,0,0,0,0,0,0,0,0,0,0,0,1,1,1,-1,1,1,1,-1,1,-1,-1, \\ -1,1,-1,-1,-1,1,-1,1,1,-1,1,-1,-1,1,1,-1,1,-1,-1,1,-1 \end{pmatrix}$$

$$s_4 = \begin{pmatrix} 1,1,1,-1,1,1,1,-1,-1,1,1,1,-1,1,1,1,1,-1,1,1,-1,1,-1,-1,-1,-1,1,-1,1,1,-1,1, \\ 0,0,0,0,0,0,0,0,0,0,0,0,0,0,0,0,0,0,0,0,0,0,0,0,0,0,0,0,0,0,0,0,1,1,-1,1,1, \\ 1,-1,1,-1,1,-1,-1,-1,1,-1,-1,1,-1,-1,-1,-1,1,1,1,-1,-1,-1,1,1,1,1,-1,0,0,0,0, \\ 0,0,0,0,0,0,0,0,0,0,0,0,0,0,0,0,0,0,0,0,0,0,0,0,0,0,0,0,1,1,1,-1,1,1,1,-1, \\ 1,-1,-1,-1,1,-1,-1,-1,1,-1,1,1,-1,1,-1,-1,1,1,-1,1,-1,-1,1,-1,0,0,0,0,0,0,0, \\ 0,0,0,0,0,0,0,0,0,0,0,0,0,0,0,0,0,0,0,0,0,0,0,0,0,1,1,-1,1,1,1,-1,1,1,-1, \\ 1,1,1,-1,1,1,1,-1,-1,-1,-1,1,1,1,1,1,1,-1,-1,-1,-1,1 \end{pmatrix}$$

FIG. 8 shows a matched filtering result of a transmitted waveform sequence set having a sequence length of 56. It can be learned by comparing FIG. 3 with FIG. 8 that the Ipatov sequence having a sequence length of 57 and the transmitted waveform sequence having a sequence length of 56 have a same sensing capability in a distance corresponding to 0 ns to 297 ns. Because the Ipatov sequence uses a cyclic shift structure, when a delay is equal to a cyclic shift, an extremely high pseudo peak is generated. However, the transmitted waveform sequence set does not have this characteristic. Therefore, the transmitted waveform sequence set provided in this application has better sensing performance.

Table 1

| | Quantity of bursts | Quantity of non-zero elements |
|---|---|---|
| Ipatov sequence | 57+12+12 | 56 |
| Aperiodic ZCZ sequence | 56 | 32 |

In addition, it can be learned from Table 1 that, the air interface time is reduced by 10% to 20% by using the transmitted waveform sequence set, and a quantity of actually transmitted pulses is 4/7 of that of the Ipatov sequence. Because the transmitted waveform sequence set includes a small quantity of non-zero elements, limited power may be concentrated on the actually transmitted pulses to further increase a signal-to-noise ratio, thereby improving the sensing performance.

FIG. 9 is a possible example block diagram of a communication apparatus according to an embodiment of this application. The apparatus 900 includes a transceiver module 920 and a processing module 910. The transceiver module 920 may include a receiving unit and a sending unit. The processing module 910 is configured to control and manage an action of the apparatus 900. The transceiver module 920 is configured to support communication between the apparatus 900 and another network entity. Optionally, the apparatus 900 may further include a storage unit, and the storage unit is configured to store program code and data of the apparatus 900.

Optionally, each module in the apparatus 900 may be implemented by using software.

Optionally, the processing module 910 may be a processor or a controller, for example, may be a general-purpose central processing unit (central processing unit, CPU), a general-purpose processor, digital signal processing (digital signal processing, DSP), an application specific integrated circuit (application specific integrated circuit, ASIC), a field programmable gate array (field programmable gate array, FPGA) or another programmable logic device, a transistor logic device, a hardware component, or any combination thereof. The controller/processor may implement or execute various example logic blocks, modules, and circuits described with reference to content disclosed in embodiments of this application. The processor may be a combination of processors implementing a computing function, for example, a combination of one or more microprocessors, or a combination of the DSP and a microprocessor. The transceiver module 920 may be a communication interface, a transceiver, a transceiver circuit, or the like. The communication interface is a general term. In a specific implementation, the communication interface may include a plurality of interfaces. The storage unit may be a memory.

When the apparatus 900 is a transmitting end or a chip in a transmitting end, the processing module 910 in the apparatus 900 may support the apparatus 900 in performing an action of the transmitting end in the foregoing method examples, for example, may support the apparatus 900 in performing step 600 in FIG. 6.

The transceiver module 920 may support the apparatus 900 in communicating with a receiving end. For example, the transceiver module 920 may support the apparatus 900 in performing step 610 in FIG. 6.

For example, the processing module 910 is configured to determine a transmitted waveform sequence set, where the transmitted waveform sequence set includes N sequences, N is a positive integer, the transmitted waveform sequence set includes a sequence having an aperiodic zero correlation zone ZCZ, a sequence length of the sequence is Q, and Q is a positive integer. For example, the transceiver module 920 is configured to send Q pulse bursts to the receiving end based on the N sequences, where each pulse burst includes N pulses, a $j^{th}$ pulse in an $i^{th}$ pulse burst in the Q pulse bursts corresponds to an $i^{th}$ element in a $j^{th}$ sequence in the N sequences, i and j are positive integers, $1 \le i \le Q$, and $1 \le j \le N$.

In a possible design, the transmitted waveform sequence set includes P sequences, where $P \ge N$, and P is a positive integer.

In a possible design, the transmitted waveform sequence set is constructed based on a first matrix, a second matrix, and a third matrix, where the first matrix, the second matrix, and the third matrix are all Hadamard matrices.

In a possible design, an order of the first matrix is the same as an order of the second matrix. The transmitted waveform sequence set is constructed by performing the following steps: constructing, based on the first matrix and the third matrix, a sequence set having a sequence length of M(Z+C), where M, Z, and C are positive integers, M is the order of the first matrix and the second matrix, Z is an order of the third matrix, and C is a preset value; and constructing, based on the second matrix and the sequence set having the sequence length of M(Z+C) through n iterations, a sequence set having a sequence length of $M^{n+1}(Z+C)$ as the transmitted waveform sequence set. For example, the sequence set having the sequence length of $M^{n+1}(Z+C)$ includes $M \times Z$ sequences, where $N \le M \times Z$, and $Q = M^{n+1}(Z+C)$.

In a possible design, when the sequence set having the sequence length of M(Z+C) is constructed based on the first matrix and the third matrix, each element in a column with a sequence number s in the third matrix is multiplied by elements in a column with a sequence number t in the first matrix, and C columns of elements that are all 0s are added, to obtain a first to-be-processed matrix with a sequence number $M \times s+t$, where the first to-be-processed matrix with the sequence number $M \times s+t$ has M(Z+C) columns, $0 \le s \le Z - 1$, and $0 \le t \le M - 1$; and the first to-be-processed matrix with the sequence number $M \times s+t$ is output by row, to obtain a first sequence with a sequence number $M \times s + t$ in the sequence set having the sequence length of M(Z+C).

In a possible design, when the sequence set having the sequence length of $M^{n+1}(Z+C)$ is constructed based on the second matrix and the sequence set having the sequence length of M(Z+C) through the n iterations, a sequence set having a sequence length of $M^2(Z+C)$ is constructed based on the second matrix and the sequence set having the sequence length of M(Z+C) through one iteration.

In a possible design, when the sequence set having the sequence length of $M^2(Z+C)$ is constructed based on the second matrix and the sequence set having the sequence length of M(Z+C) through one iteration, an element with a sequence number w in a column with a sequence number t in the second matrix is multiplied by a first sequence with a sequence number $M \times s+w$, to obtain a second to-be-processed matrix with a sequence number $M \times s+t$, where w is 0 to M-1, and w is a positive integer; and the second to-be-processed matrix with the sequence number $M \times s+t$ is output by row, to obtain a second sequence with a sequence number $M \times s + t$ in the sequence set having the sequence length of $M^2$ (Z+C).

In a possible design, the transmitted waveform sequence set is constructed based on a sequence family, the sequence family includes a plurality of sequence sets, all of the sequence sets include a same quantity of sequences, and all of the sequences have a same sequence length. For all sequences in any sequence set in the sequence family, a sum of values of aperiodic autocorrelation functions respectively corresponding to all the sequences at a delay $\tau$ equal to 0 is a product of the quantity of sequences and the sequence length, and a sum of values of the aperiodic autocorrelation functions respectively corresponding to all the sequences at the delay $\tau$ not equal to 0 is zero. For all sequence groups determined based on any two sequence sets in the sequence family, each sequence group includes two sequences with a same sequence number, a sum of values of aperiodic cross-correlation functions respectively corresponding to all the sequence groups at the delay $\tau$ equal to 0 is zero, and a sum of values of the aperiodic cross-correlation functions respectively corresponding to all the sequence groups at the delay $\tau$ not equal to 0 is zero.

In a possible design, the transmitted waveform sequence set is constructed by performing the following step: adding K zero elements between two sequences in each sequence set in the sequence family, to obtain a sequence in the transmitted waveform sequence set, where K is a positive integer.

In a possible design, the transmitted waveform sequence set includes:

$s_1$=(1, 1, 1, 1, 1, 1, 1, 1, 0, 0, 0, 0, -1, -1, 1, 1, -1, -1, 1, 1, 0, 0, 0, 0, -1, 1, -1, 1, -1, 1, -1, 1, 0, 0, 0, 0, -1, 1, 1, -1, -1, 1, 1, -1, 0, 0, 0, 0);

$s_2$=(-1, -1, 1, 1, -1, -1, 1, 1, 0, 0, 0, 0, 1, 1, 1, 1, 1, 1, 1, 1, 0, 0, 0, 0, 1, -1, -1, 1, 1, -1, -1, --> 1, 0, 0, 0, 0, 1, -1, 1, -1, 1, -1, 1, -1, 0, 0, 0, 0);

$s_3$=(-1, 1, -1, 1, -1, 1, -1, 1, 0, 0, 0, 0, 1, -1, -1, 1, 1, -1, -1, 1, 0, 0, 0, 0, 1, 1, 1, 1, 1, 1, 1, 1, 0, 0, 0, 0, 1, 1, -1, -1, 1, 1, -1, -1, 0, 0, 0, 0);

$s_4$=(-1, 1, 1, -1, -1, 1, 1, -1, 0, 0, 0, 0, 1, -1, 1, -1, 1, -1, 1, -1, 0, 0, 0, 0, 1, 1, -1, -1, 1, 1,-1, -1, 0, 0, 0, 0, 1, 1, 1, 1, 1, 1, 1, 1, 0, 0, 0, 0);

$s_5$=(1, 1, 1, 1, -1, -1, -1, -1, 0, 0, 0, 0, -1, -1, 1, 1, 1, 1, -1, -1, 0, 0, 0, 0, -1, 1, -1, 1, 1, -1, 1, -1, 0, 0, 0, 0, -1, 1, 1, -1, 1, -1, -1, 1, 0, 0, 0, 0);

$s_6$=(-1, -1, 1, 1, 1, 1, -1, -1, 0, 0, 0, 0, 1, 1, 1, 1, -1, -1, -1, -1, 0, 0, 0, 0, 1, -1, -1, 1, -1, 1, 1, -1, 0, 0, 0, 0, 1, -1, 1, -1, -1, 1, -1, 1, 0, 0, 0, 0);

$s_7$=(-1, 1, -1, 1, 1, -1, 1, -1, 0, 0, 0, 0, 1, -1, -1, 1, -1, 1, 1, -1, 0, 0, 0, 0, 1, 1, 1, 1, -1, -1, - 1, -1, 0, 0, 0, 0, 1, 1, -1, -1, -1, -1, 1, 1, 0, 0, 0, 0); and

$s_8$=(-1, 1, 1, -1, 1, -1, -1, 1, 0, 0, 0, 0, 1, -1, 1, -1, -1, 1, -1, 1, 0, 0, 0, 0, 1, 1, -1, -1, -1, - 1, 1, 1, 0, 0, 0, 0, 1, 1, 1, 1, -1, -1, -1, -1, 0, 0, 0, 0).

For example, N≤8, and Q=48.

In a possible design, the transmitted waveform sequence set includes:

si=(1, 1, 1, 1, 1, 1, 1, 1, 1, 1, 1, 1, 1, 1, 1, 1, 0, 0, 0, 0, 0, 0, 0, 0, 1, -1, 1, -1, 1, -1, 1, -1, 1, - 1, 1, -1, 1, -1, 1, -1, 0, 0, 0, 0, 0, 0, 0, 0, 1, 1, -1, -1, 1, 1, -1, -1, 1, 1, -1, -1, 1, 1, -1, -1, 0, 0, 0, 0, 0, 0, 0, 1, -1, -1, 1, 1, -1, -1, 1, 1, -1, -1, 1, 1, -1, -1, 1, 0, 0, 0, 0, 0, 0, 0, 1, 1, 1, 1, -1,-1, -1, -1, 1, 1, 1, 1, -1, -1, -1, -1, 0, 0, 0, 0, 0, 0, 0, 1, -1, 1, -1, -1, 1, -1, 1, 1, -1, 1, -1, -1, 1, -1, 1, 0, 0, 0, 0, 0, 0, 0, 1, 1, -1, -1, -1, -1, 1, 1, 1, 1, -1, -1, -1, -1, 1, 1, 0, 0, 0, 0, 0, 0, 0, 1, -1, -1, 1, -1, 1, 1, -1, 1, -1, -1, 1, -1, 1, 1, -1, 0, 0, 0, 0, 0, 0, 0, 0);

$s_2$=(1, -1, 1, -1, 1, -1, 1, -1, 1, -1, 1, -1, 1, -1, 1, -1, 0, 0, 0, 0, 0, 0, 0, 1, 1, 1, 1, 1, 1, 1, 1, 1, 1, 1, 1, 1, 1, 1, 0, 0, 0, 0, 0, 0, 0, 0, 1, -1, -1, 1, 1, -1, -1, 1, 1, -1, -1, 1, 1, -1, -1, 1, 0, 0, 0, 0, 0, 0, 0, 1, 1, -1, -1, 1, 1, -1, -1, 1, 1, -1, -1, 1, 1, -1, -1, 0, 0, 0, 0, 0, 0, 0, 0, 1, -1, 1, -1, -1, 1, -1, 1, 1, -1, 1, -1, -1, 1, -1, 1, 0, 0, 0, 0, 0, 0, 0, 1, 1, 1, 1, -1, -1, -1, -1, 1, 1, 1, 1, -1,-1, -1, -1, 0, 0, 0, 0, 0, 0, 0, 1, -1, -1, 1, -1, 1, 1, -1, 1, -1, -1, 1, -1, 1, 1, -1, 0, 0, 0, 0, 0, 0, 0, 1, 1, -1, -1, -1, -1, 1, 1, 1, 1, -1, -1, -1, -1, 1, 1, 0, 0, 0, 0, 0, 0, 0, 0);

$s_3$=(1, 1, -1, -1, 1, 1, -1, -1, 1, 1, -1, -1, 1, 1, -1, -1, 0, 0, 0, 0, 0, 0, 0, 1, -1, -1, 1, 1, -1, -1, 1, 1, -1, -1, 1, 1, -1, -1, 1, 0, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0, 1, -1, 1, -1, 1, -1, 1, -1, 1, -1, 1, -1, 1, -1, 1, -1, 0, 0, 0, 0, 0, 0, 0, 0, 1, 1, -1, -1, - 1, -1, 1, 1, 1, 1, -1, -1, -1, -1, 1, 1, 0, 0, 0, 0, 0, 0, 0, 1, -1, -1, 1, -1, 1, 1, -1, 1, -1, -1, 1, -1, 1, 1, -1, 0, 0, 0, 0, 0, 0, 0, 1, 1, 1, 1, -1, -1, -1, -1, 1, 1, 1, 1, -1, -1, -1, -1, 0, 0, 0, 0, 0, 0, 0, 1, -1, 1, -1, -1, 1, -1, 1, 1, -1, 1, -1, -1, 1, -1, 1, 0, 0, 0, 0, 0, 0, 0, 0);

$s_4$=(1, -1, -1, 1, 1, -1, -1, 1, 1, -1, -1, 1, 1, -1, -1, 1, 0, 0, 0, 0, 0, 0, 0, 1, 1, -1, -1, 1, 1, - 1, - 1, 1, 1, -1, -1, 1, 1, -1, -1, 0, 0, 0, 0, 0, 0, 0, 0, 1, -1, 1, -1, 1, -1, 1, -1, 1, 1, -1, 1, -1, 1, --> -1, 0, 0, 0, 0, 0, 0, 0, 0, 1, 1, 1, 1, 1, 1, 1, 1, 1, 1, 1, 1, 1, 1, 1, 0, 0, 0, 0, 0, 0, 0, 0, 1, -1, -1, 1, - 1, 1, 1, -1, 1, -1, -1, 1, -1, 1, 1, -1, 0, 0, 0, 0, 0, 0, 0, 1, 1, -1, -1, -1, -1, 1, 1, 1, 1, -1, -1, -1, -1, 1, 1, 0, 0, 0, 0, 0, 0, 0, 1, -1, 1, -1, -1, 1, -1, 1, 1, -1, 1, -1, -1, 1, -1, 1, 0, 0, 0, 0, 0, 0, 0, 0, 1, 1, 1, 1, -1, -1, -1, -1, 1, 1, 1, 1, -1, -1, -1, -1, 0, 0, 0, 0, 0, 0, 0, 0);

$s_5$=(1, 1, 1, 1, -1, -1, -1, -1, 1, 1, 1, 1, -1, -1, -1, -1, 0, 0, 0, 0, 0, 0, 0, 0, 1, -1, 1, -1, -1, 1, -1, 1, 1, -1, 1, -1, -1, 1, -1, 1, 0, 0, 0, 0, 0, 0, 0, 0, 1, 1, -1, -1, -1, -1, 1, 1, 1, 1, -1, -1, -1, -1, 1, 1, 0, 0, 0, 0, 0, 0, 0, 0, 1, -1, -1, 1, -1, 1, 1, -1, 1, -1, -1, 1, -1, 1, 1, -1, 0, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0, 0, 1, -1, 1, -1, 1, -1, 1, -1, 1, -1, 1, -1, 1, - 1, 1, -1, 0, 0, 0, 0, 0, 0, 0, 0, 1, 1, -1, -1, 1, 1, -1, -1, 1, 1, -1, -1, 1, 1, -1, -1, 0, 0, 0, 0, 0, 0, 0, 0, 1, -1, -1, 1, 1, -1, -1, 1, 1, -1, -1, 1, 1, -1, -1, 1, 0, 0, 0, 0, 0, 0, 0, 0);

$s_6$=(1, -1, 1, -1, -1, 1, -1, 1, 1, -1, 1, -1, -1, 1, -1, 1, 0, 0, 0, 0, 0, 0, 0, 0, 1, 1, 1, 1, -1, -1, - 1, -1, 1, 1, 1, 1, -1, -1, -1, -1, 0, 0, 0, 0, 0, 0, 0, 0, 1, -1, -1, 1, -1, 1, 1, -1, 1, -1, -1, 1, -1, 1, 1, -1, 0, 0, 0, 0, 0, 0, 0, 0, 1, 1, -1, -1, -1, -1, 1, 1, 1, 1, -1, -1, -1, -1, 1, 1, 0, 0, 0, 0, 0, 0, 0, 0, 1, - 1, 1, -1, 1, -1, 1, -1, 1, -1, 1, -1, 1, -1, 1, -1, 0, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0, 0, 1, -1, -1, 1, 1, -1, -1, 1, 1, -1, -1, 1, 1, -1, -1, 1, 0, 0, 0, 0, 0, 0, 0, 0, 1, 1, -1, -1, 1, 1, -1, -1, 1, 1, -1, 1, 1, -1, -1, 0, 0, 0, 0, 0, 0, 0, 0);

$s_7$=(1, 1, -1, -1, -1, -1, 1, 1, 1, 1, -1, -1, -1, -1, 1, 1, 0, 0, 0, 0, 0, 0, 0, 0, 1, -1, -1, 1, -1, 1, 1, -1, 1, -1, -1, 1, -1, 1, 1, -1, 0, 0, 0, 0, 0, 0, 0, 0, 1, 1, 1, 1, -1, -1, -1, -1, 1, 1, 1, 1, -1, -1, -1, -1, 0, 0, 0, 0, 0, 0, 0, 0, 1, -1, 1, -1, -1, 1, -1, 1, 1, -1, 1, -1, -1, 1, -1, 1, 0, 0, 0, 0, 0, 0, 0, 0, 1, 1, -1, -1, 1, 1, -1, -1, 1, 1, -1, -1, 1, 1, -1, -1, 0, 0, 0, 0, 0, 0, 0, 0, 1, -1, -1, 1, 1, -1, -1, 1, 1, -1, - 1, 1, 1, -1, -1, 1, 0, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0, 0, 1, -1, 1, -1, 1, -1, 1, -1, 1, -1, 1, -1, 1, -1, 1, -1, 0, 0, 0, 0, 0, 0, 0, 0);

$s_8$=(1, -1, -1, 1, -1, 1, 1, -1, 1, -1, -1, 1, -1, 1, 1, -1, 0, 0, 0, 0, 0, 0, 0, 0, 1, 1, -1, -1, -1, - 1, 1, 1, 1, 1, -1, -1, -1, -1, 1, 1, 0, 0, 0, 0, 0, 0, 0, 0, 1, -1, 1, -1, -1, 1, -1, 1, 1, -1, 1, -1, -1, 1,-1, 1, 0, 0, 0, 0, 0, 0, 0, 0, 1, 1, 1, 1, -1, -1, -1, -1, 1, 1, 1, 1, -1, -1, -1, -1, 0, 0, 0, 0, 0, 0, 0, 0, 1, -1, -1, 1, 1, -1, -1, 1, 1, -1, -1, 1, 1, -1, -1, 1, 0, 0, 0, 0, 0, 0, 0, 0, 1, 1, -1, -1, 1, 1, -1, -1, 1, 1, -1, -1, 1, 1, -1, -1, 0, 0, 0, 0, 0, 0, 0, 0, 1, -1, 1, -1, 1, -1, 1, -1, 1, -1, 1, -1, 1, -1, 1, -1, 0, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0, 0);

$s_9$=(1, 1, 1, 1, 1, 1, 1, 1, -1, -1, -1, -1, -1, -1, -1, -1, 0, 0, 0, 0, 0, 0, 0, 0, 1, -1, 1, -1, 1, -1, 1, -1, -1, 1, -1, 1, -1, 1, -1, 1, 0, 0, 0, 0, 0, 0, 0, 0, 1, 1, -1, -1, 1, 1, -1, -1, -1, -1, 1, 1, -1, -1, 1, 1, 0, 0, 0, 0, 0, 0, 0, 0, 1, -1, -1, 1, 1, -1, -1, 1, -1, 1, 1, -1, -1, 1, 1, -1, 0, 0, 0, 0, 0, 0, 0, 0, 1, 1, 1, 1, -1, -1, -1, -1, -1, -1, -1, -1, 1, 1, 1, 1, 0, 0, 0, 0, 0, 0, 0, 0, 1, -1, 1, -1, -1, 1, -1, 1, -1, 1, - 1, 1, 1, -1, 1, -1,0,0,0,0,0,0,0,0, 1, 1, -1, -1, -1, -1, 1, 1, -1, -1, 1, 1, 1, 1, -1, -1, 0, 0, 0, 0, 0, 0, 0, 0, 1, -1, -1, 1, -1, 1, 1, -1, -1, 1, 1, -1, 1, -1, -1, 1, 0, 0, 0, 0, 0, 0, 0, 0);

$s_{10}$=(1, -1, 1, -1, 1, -1, 1, -1, -1, 1, -1, 1, -1, 1, -1, 1, 0, 0, 0, 0, 0, 0, 0, 0, 1, 1, 1, 1, 1, 1, 1, 1, --> 1, -1, -1, -1, -1, -1, -1, -1, -1, 0, 0, 0, 0, 0, 0, 0, 0, 1, -1, -1, 1, 1, -1, -1, 1, -1, 1, 1, -1, -1, 1, 1, -1, 0, 0, 0, 0, 0, 0, 0, 0, 1, 1, -1, -1, 1, 1, -1, -1, -1, -1, 1, 1, -1, -1, 1, 1, 0, 0, 0, 0, 0, 0, 0, 0, 1, - 1, 1, -1, -1, 1, -1, 1, -1, 1, -1, 1, 1, -1, 1, -1, 0, 0, 0, 0, 0, 0, 0, 0, 1, 1, 1, 1, -1, -1, -1, -1, -1, - 1, -1, -1, 1, 1, 1, 1, 0, 0, 0, 0, 0, 0, 0, 0, 1, -1, -1, 1, -1, 1, 1, -1, -1, 1, 1, -1, 1, -1, -1, 1, 0, 0, 0, 0, 0, 0, 0, 0, 1, 1, -1, -1, -1, -1, 1, 1, -1, -1, 1, 1, 1, 1, -1, -1, 0, 0, 0, 0, 0, 0, 0, 0);

$s_{11}$=(1, 1, -1, -1, 1, 1, -1, -1, -1, -1, 1, 1, -1, -1, 1, 1, 0, 0, 0, 0, 0, 0, 0, 0, 1, -1, -1, 1, 1, -1, -1, 1, -1, 1, 1, -1, -1, 1, 1, -1, 0, 0, 0, 0, 0, 0, 0, 0, 1, 1, 1, 1, 1, 1, 1, 1, -1, -1, -1, -1, -1, -1, -1, -1, 0, 0, 0, 0, 0, 0, 0, 0, 1, -1, 1, -1, 1, -1, 1, -1, -1, 1, -1, 1, -1, 1, -1, 1, 0, 0, 0, 0, 0, 0, 0, 0, 1, 1, -1, -1, -1, -1, 1, 1, -1, -1, 1, 1, 1, 1, -1, -1, 0, 0, 0, 0, 0, 0, 0, 0, 1, -1, -1, 1, -1, 1, 1, -1, -1, 1, 1, -1, 1, -1, -1, 1, 0, 0, 0, 0, 0, 0, 0, 0, 1, 1, 1, 1, -1, -1, -1, -1, -1, -1, -1, -1, 1, 1, 1, 1, 0, 0, 0, 0, 0, 0, 0, 0, 1, -1, 1, -1, -1, 1, -1, 1, -1, 1, -1, 1, 1, -1, 1, -1, 0, 0, 0, 0, 0, 0, 0, 0);

$s_{12}$=(1, -1, -1, 1, 1, -1, -1, 1, -1, 1, 1, -1, -1, 1, 1, -1, 0, 0, 0, 0, 0, 0, 0, 0, 1, 1, -1, -1, 1, 1, -1, -1, -1, -1, 1, 1, -1, -1, 1, 1, 0, 0, 0, 0, 0, 0, 0, 0, 1, -1, 1, -1, 1, -1, 1, -1, -1, 1, -1, 1, -1, 1,-1, 1, 0, 0, 0, 0, 0, 0, 0, 0, 1, 1, 1, 1, 1, 1, 1, 1, -1, -1, -1, -1, -1, -1, -1, -1, 0, 0, 0, 0, 0, 0, 0, 0, 1, -1, -1, 1, -1, 1, 1, -1, -1, 1, 1, -1, 1, -1, -1, 1, 0, 0, 0, 0, 0, 0, 0, 0, 1, 1, -1, -1, -1, -1, 1, 1, -1, - 1, 1, 1, 1, 1, -1, -1, 0, 0, 0, 0, 0, 0, 0, 0, 1, -1, 1, -1, -1, 1, -1, 1, -1, 1, -1, 1, 1, -1, 1, -1, 0, 0, 0, 0, 0, 0, 0, 0, 1, 1, 1, 1, -1, -1, -1, -1, -1, -1, -1, -1, 1, 1, 1, 1, 0, 0, 0, 0, 0, 0, 0, 0);

$s_{13}$=(1, 1, 1, 1, -1, -1, -1, -1, -1, -1, -1, -1, 1, 1, 1, 1, 0, 0, 0, 0, 0, 0, 0, 0, 1, -1, 1, -1, -1, 1, -1, 1, -1, 1, -1, 1, 1, -1, 1, -1, 0, 0, 0, 0, 0, 0, 0, 0, 1, 1, -1, -1, -1, -1, 1, 1, -1, -1, 1, 1, 1, 1, -1, -1, 0, 0, 0, 0, 0, 0, 0, 0, 1, -1, -1, 1, -1, 1, 1, -1, -1, 1, 1, -1, 1, -1, -1, 1, 0, 0, 0, 0, 0, 0, 0, 0, 1, 1, 1, 1, 1, 1, 1, 1, -1, -1, -1, -1, -1, -1, -1, -1, 0, 0, 0, 0, 0, 0, 0, 0, 1, -1, 1, -1, 1, -1, 1, -1, 1, - 1, 1, -1, 1, -1, 1, 0, 0, 0, 0, 0, 0, 0, 0, 1, 1, -1, -1, 1, 1, -1, -1, -1, -1, 1, 1, -1, -1, 1, 1, 0, 0, 0, 0, 0, 0, 0, 0, 1, -1, -1, 1, 1, -1, -1, 1, -1, 1, 1, -1, -1, 1, 1, -1, 0, 0, 0, 0, 0, 0, 0, 0);

$s_{14}$=(1, -1, 1, -1, -1, 1, -1, 1, -1, 1, -1, 1, 1, -1, 1, -1, 0, 0, 0, 0, 0, 0, 0, 0, 1, 1, 1, 1, -1, -1, -1, -1, -1, -1, -1, -1, 1, 1, 1, 1, 0, 0, 0, 0, 0, 0, 0, 0, 1, -1, -1, 1, -1, 1, 1, -1, -1, 1, 1, -1, 1, -1,-1, 1, 0, 0, 0, 0, 0, 0, 0, 0, 1, 1, -1, -1, -1, -1, 1, 1, -1, -1, 1, 1, 1, 1, -1, -1, 0, 0, 0, 0, 0, 0, 0, 0, 1, -1, 1, -1, 1, -1, 1, -1, -1, 1, -1, 1, -1, 1, -1, 1, 0, 0, 0, 0, 0, 0, 0, 0, 1, 1, 1, 1, 1, 1, 1, 1, -1, -1, - 1, -1, -1, -1, -1, -1, 0, 0, 0, 0, 0, 0, 0, 1, -1, -1, 1, 1, -1, -1, 1, -1, 1, 1, -1, -1, 1, 1, -1, 0, 0, 0, 0, 0, 0, 0, 0, 1, 1, -1, -1, 1, 1, -1, -1, -1, -1, 1, 1, -1, -1, 1, 1, 0, 0, 0, 0, 0, 0, 0, 0);

$s_{15}$=(1, 1, -1, -1, -1, -1, 1, 1, -1, -1, 1, 1, 1, 1, -1, -1, 0, 0, 0, 0, 0, 0, 0, 0, 1, -1, -1, 1, -1, 1, 1, -1, -1, 1, 1, -1, 1, -1, -1, 1, 0, 0, 0, 0, 0, 0, 0, 0, 1, 1, 1, 1, -1, -1, -1, -1, -1, -1, -1, -1, 1, 1, 1, 1, 0, 0, 0, 0, 0, 0, 0, 0, 1, - 1, 1, - 1, - 1, 1, - 1, 1, - 1, 1, - 1, 1, 1, - 1, 1, - 1, 0, 0, 0, 0, 0, 0, 0, 0, 1, 1, -1, -1, 1, 1, -1, -1, -1, -1, 1, 1, -1, -1, 1, 1, 0, 0, 0, 0, 0, 0, 0, 0, 1, -1, -1, 1, 1, -1, -1, 1, -1, 1, 1, -1, -1, 1, 1, -1, 0, 0, 0, 0, 0, 0, 0, 0, 1, 1, 1, 1, 1, 1, 1, 1, -1, -1, -1, -1, -1, -1, -1, -1, 0, 0, 0, 0, 0, 0, 0, 0, 1, -1, 1, -1, 1, -1, 1, -1, -1, 1, -1, 1, -1, 1, -1, 1, 0, 0, 0, 0, 0, 0, 0, 0); and

$s_{16}$=(1, -1, -1, 1, -1, 1, 1, -1, -1, 1, 1, -1, 1, -1, -1, 1, 0, 0, 0, 0, 0, 0, 0, 0, 1, 1, -1, -1, -1, - 1, 1, 1, -1, -1, 1, 1, 1, 1, -1, -1, 0, 0, 0, 0, 0, 0, 0, 0, 1, -1, 1, -1, 1, -1, 1, -1, 1, -1, 1, 1, -1, 1, -1, 0, 0, 0, 0, 0, 0, 0, 0, 1, 1, 1, 1, -1, -1, -1, -1, -1, -1, -1, -1, 1, 1, 1, 1, 0, 0, 0, 0, 0, 0, 0, 1, - 1, -1, 1, 1, -1, -1, 1, -1, 1, 1, -1, -1, 1, 1, -1, 0, 0, 0, 0, 0, 0, 0, 0, 1, 1, -1, -1, 1, 1, -1, -1, -1, - 1, 1, 1, -1, -1, 1, 1, 0, 0, 0, 0, 0, 0, 0, 1, -1, 1, -1, 1, -1, 1, -1, -1, 1, -1, 1, -1, 1, -1, 1, 0, 0, 0, 0, 0, 0, 0, 0, 1, 1, 1, 1, 1, 1, 1, 1, -1, -1, -1, -1, -1, -1, -1, -1, 0, 0, 0, 0, 0, 0, 0, 0).

For example, N≤16, and Q=192.

In a possible design, the transmitted waveform sequence set includes:

***s***$_1$ = (-1, -1, -1, 1, 1, -1, 1, 1, 0, 0, 0, 0, 0, 0, 0, 1, 1, 1, -1, 1, -1, 1, 1, 0, 0, 0, 0, 0, 0, 0, 1, -1, 1, 1, -1, -1, -1, 1, 0, 0, 0, 0, 0, 0, 0, 0, -1, 1, -1, -1, -1, -1, -1, 1);

***s***$_2$ = (1, 1, 1, -1, 1, -1, 1, 1, 0, 0, 0, 0, 0, 0, 0, -1, -1, -1, 1, 1, -1, 1, 1, 0, 0, 0, 0, 0, 0, 0, -1, 1, -1, -1, -1, -1, -1,1, 0, 0, 0, 0, 0, 0, 0, 0, 1, -1, 1, 1, -1, -1, -1, 1);

***s***$_3$ = (1, 1, -1, 1, -1, 1, 1, 1, 0, 0, 0, 0, 0, 0, 0, -1, -1, 1, -1, -1, 1, 1, 1, 0, 0, 0, 0, 0, 0, 0, -1, 1, 1, 1, 1, 1, -1, 1, 0, 0, 0, 0, 0, 0, 0, 1, -1, -1, -1, 1, 1, -1, 1); and

***s***$_4$ = (-1, -1, 1, -1, -1, 1, 1, 1, 0, 0, 0, 0, 0, 0, 0, 0,1, 1, -1, 1, -1, 1, 1, 1, 0, 0, 0, 0, 0, 0, 0, 1, -1, -1, -1, 1, 1, -1, 1, 0, 0, 0, 0, 0, 0, 0, 0, -1, 1, 1, 1, 1, 1, -1, 1).

For example, N≤4, and Q=56.

In a possible design, the transmitted waveform sequence set includes:

$$s_1 = \begin{pmatrix} 1,1,\text{-}1,1,\text{-}1,1,\text{-}1,\text{-}1,1,1,0,0,0,0,0,0,0,0,0,1,1,\text{-}1,1,\text{-}1,1,\text{-}1,\text{-}1,1,1,0,0,0,0,0, \\ 0,0,0,0,0,1,1,\text{-}1,1,1,1,1,1,\text{-}1,\text{-}1,0,0,0,0,0,0,0,0,0,1,1,\text{-}1,1,1,1,1,1,\text{-}1,\text{-}1 \end{pmatrix}$$

$$s_2 = \begin{pmatrix} 1,1,\text{-}1,1,\text{-}1,1,\text{-}1,\text{-}1,1,1,0,0,0,0,0,0,0,0,0,\text{-}1,\text{-}1,1,\text{-}1,1,\text{-}1,1,1,\text{-}1,\text{-}1,0,0,0,0,0, \\ 0,0,0,0,0,1,1,\text{-}1,1,1,1,1,1,\text{-}1,\text{-}1,0,0,0,0,0,0,0,0,0,\text{-}1,\text{-}1,1,\text{-}1,\text{-}1,\text{-}1,\text{-}1,\text{-}1,1,1 \end{pmatrix}$$

$$s_3 = \begin{pmatrix} \text{-}1,\text{-}1,1,1,1,1,1,\text{-}1,1,1,0,0,0,0,0,0,0,0,0,\text{-}1,\text{-}1,1,1,1,1,1,\text{-}1,1,1,0,0,0,0,0,0, \\ 0,0,0,0,\text{-}1,\text{-}1,1,1,\text{-}1,1,\text{-}1,1,\text{-}1,\text{-}1,0,0,0,0,0,0,0,0,0,\text{-}1,\text{-}1,1,1,\text{-}1,1,\text{-}1,1,\text{-}1,\text{-}1 \end{pmatrix}$$

$$s_4 = \begin{pmatrix} \text{-}1,\text{-}1,1,1,1,1,1,\text{-}1,1,1,0,0,0,0,0,0,0,0,0,1,1,\text{-}1,\text{-}1,\text{-}1,\text{-}1,\text{-}1,1,\text{-}1,\text{-}1,0,0,0,0,0, \\ 0,0,0,0,0,\text{-}1,\text{-}1,1,1,\text{-}1,1,\text{-}1,1,\text{-}1,\text{-}1,0,0,0,0,0,0,0,0,0,1,1,\text{-}1,\text{-}1,1,\text{-}1,1,\text{-}1,1,1 \end{pmatrix}$$

For example, N≤4, and Q=70.

In a possible design, the transmitted waveform sequence set includes:

$$s_1=\begin{pmatrix} 1,1,-1,-1,1,-1,1,-1,1,-1,-1,1,-1,-1,-1,-1,0,0,0,0,0,0,0,0,0,0,0,0,0,0,0,0,1,1,-1,-1,1,-1, \\ 1,-1,-1,1,1,-1,1,1,1,1,0,0,0,0,0,0,0,0,0,0,0,0,0,0,0,0,1,-1,-1,1,1,1,1,1,1,1,-1,-1,-1,1, \\ -1,1,0,0,0,0,0,0,0,0,0,0,0,0,0,0,0,0,1,-1,-1,1,1,1,1,1,-1,-1,1,1,1,-1,1,-1 \end{pmatrix}$$

$$s_2=\begin{pmatrix} 1,1,-1,-1,1,-1,1,-1,-1,1,1,-1,1,1,1,1,0,0,0,0,0,0,0,0,0,0,0,0,0,0,0,0,1,1,-1,-1,1,-1,1, \\ -1,1,-1,-1,1,-1,-1,-1,-1,0,0,0,0,0,0,0,0,0,0,0,0,0,0,0,0,1,-1,-1,1,1,1,1,1,-1,-1,1,1,1, \\ -1,1,-1,0,0,0,0,0,0,0,0,0,0,0,0,0,0,0,0,1,-1,-1,1,1,1,1,1,1,-1,-1,-1,1,-1,1 \end{pmatrix}$$

$$s_3=\begin{pmatrix} 1,1,1,1,1,-1,-1,1,1,-1,1,-1,-1,-1,1,1,0,0,0,0,0,0,0,0,0,0,0,0,0,0,0,0,1,1,1,1,1,-1,-1,1, \\ -1,1,-1,1,1,1,-1,-1,0,0,0,0,0,0,0,0,0,0,0,0,0,0,0,0,1,-1,1,-1,1,1,-1,-1,1,1,1,1,-1,1,1, \\ -1,0,0,0,0,0,0,0,0,0,0,0,0,0,0,0,0,1,-1,1,-1,1,1,-1,-1,-1,-1,-1,-1,1,-1,-1,1 \end{pmatrix}$$

$$s_4=\begin{pmatrix} 1,1,1,1,1,-1,-1,1,-1,1,-1,1,1,1,-1,-1,0,0,0,0,0,0,0,0,0,0,0,0,0,0,0,0,1,1,1,1,1,-1,-1,1, \\ 1,-1,1,-1,-1,-1,1,1,0,0,0,0,0,0,0,0,0,0,0,0,0,0,0,0,1,-1,1,-1,1,1,-1,-1,-1,-1,-1,-1,1,-1, \\ -1,1,0,0,0,0,0,0,0,0,0,0,0,0,0,0,0,0,1,-1,1,-1,1,1,-1,-1,1,1,1,1,-1,1,1,-1 \end{pmatrix}$$

For example, N≤4, and Q=112.

In a possible design, the transmitted waveform sequence set includes:

$$s_1=\begin{pmatrix} 1,1,-1,1,-1,1,-1,-1,1,1,1,1,-1,1,1,1,1,1,-1,-1,0,0,0,0,0,0,0,0,0,0,0,0,0,0,0,0,0,0,0,0, \\ 1,1,-1,1,-1,1,-1,-1,1,1,1,1,-1,1,1,1,1,1,-1,-1,0,0,0,0,0,0,0,0,0,0,0,0,0,0,0,0,0,0,0,0, \\ 1,1,-1,1,-1,1,-1,-1,1,1,-1,-1,1,-1,-1,-1,-1,-1,1,1,0,0,0,0,0,0,0,0,0,0,0,0,0,0,0,0,0,0, \\ 0,0,1,1,-1,1,-1,1,-1,-1,1,1,-1,-1,1,-1,-1,-1,-1,-1,1,1 \end{pmatrix}$$

$$s_2=\begin{pmatrix} 1,1,-1,1,-1,1,-1,-1,1,1,1,1,-1,1,1,1,1,1,-1,-1,0,0,0,0,0,0,0,0,0,0,0,0,0,0,0,0,0,0,0,0, \\ -1,-1,1,-1,1,-1,1,1,-1,-1,-1,-1,1,-1,-1,-1,-1,-1,1,1,0,0,0,0,0,0,0,0,0,0,0,0,0,0,0,0,0, \\ 0,0,0,1,1,-1,1,-1,1,-1,-1,1,1,-1,-1,1,-1,-1,-1,-1,-1,1,1,0,0,0,0,0,0,0,0,0,0,0,0,0,0,0, \\ 0,0,0,0,0,-1,-1,1,-1,1,-1,1,1,-1,-1,1,1,-1,1,1,1,1,1,-1,-1 \end{pmatrix}$$

$$s_3=\begin{pmatrix} 1,1,-1,-1,-1,-1,-1,1,-1,-1,1,1,-1,-1,1,-1,1,-1,1,1,0,0,0,0,0,0,0,0,0,0,0,0,0,0,0,0,0,0,0, \\ 0,1,1,-1,-1,-1,-1,-1,1,-1,-1,1,1,-1,-1,1,-1,1,-1,1,1,0,0,0,0,0,0,0,0,0,0,0,0,0,0,0,0,0,0, \\ 0,0,1,1,-1,-1,-1,-1,-1,1,-1,-1,-1,-1,1,1,-1,1,-1,1,-1,-1,0,0,0,0,0,0,0,0,0,0,0,0,0,0,0,0, \\ 0,0,0,0,1,1,-1,-1,-1,-1,-1,1,-1,-1,-1,-1,1,1,-1,1,-1,1,-1,-1 \end{pmatrix}$$

$$s_4 = \begin{pmatrix} 1,1,-1,-1,-1,-1,-1,1,-1,-1,1,1,-1,-1,1,-1,1,-1,1,1,0,0,0,0,0,0,0,0,0,0,0,0,0,0,0,0,0,0,0, \\ 0,-1,-1,1,1,1,1,1,-1,1,1,-1,-1,1,1,-1,1,-1,1,-1,-1,0,0,0,0,0,0,0,0,0,0,0,0,0,0,0,0,0,0,0, \\ 0,1,1,-1,-1,-1,-1,-1,1,-1,-1,-1,-1,1,1,-1,1,-1,1,-1,-1,0,0,0,0,0,0,0,0,0,0,0,0,0,0,0,0,0, \\ 0,0,0,-1,-1,1,1,1,1,1,-1,1,1,1,1,-1,-1,1,-1,1,-1,1,1 \end{pmatrix}$$

For example, N≤4, and Q=140.

It should be understood that the apparatus 900 according to this embodiment of this application may correspond to the transmitting end in the foregoing method embodiment, and operations and/or functions of the modules in the apparatus 900 are separately used to implement corresponding steps of the method of the transmitting end in the foregoing method embodiment. Therefore, beneficial effects in the foregoing method embodiment can also be implemented. For brevity, details are not described herein again.

When the apparatus 900 is a receiving end or a chip in a receiving end, the processing module 910 in the apparatus 900 may support the apparatus 900 in performing an action of the receiving end in the foregoing method examples, for example, may support the apparatus 900 in performing step 620 in FIG. 6.

The transceiver module 920 may support the apparatus 900 in communicating with a transmitting end. For example, the transceiver module 920 may support the apparatus 900 in performing step 610 in FIG. 6.

For example, the transceiver module 920 is configured to receive Q pulse bursts from a transmitting end, where each pulse burst includes N pulses, a $j^{th}$ pulse in an $i^{th}$ pulse burst in the Q pulse bursts corresponds to an $i^{th}$ element in a $j^{th}$ sequence in a transmitted waveform sequence set, i and j are positive integers, the transmitted waveform sequence set includes N sequences, N is a positive integer, the transmitted waveform sequence set includes a sequence having an aperiodic ZCZ, a sequence length of the sequence is Q, Q is a positive integer, 1≤i≤Q, and 1≤j≤N. The processing module 910 is configured to correlate the Q pulse bursts with a local sequence set, and determine information about a target within a detection range, where the local sequence set is the same as the transmitted waveform sequence set, and the detection range is related to a size of the ZCZ and a repetition period of the pulse burst.

In a possible design, the detection range is a half of a product of the size of the ZCZ, the repetition period of the pulse burst, and the speed of light.

In a possible design, the information about the target includes distance information of the target or speed information of the target.

In a possible design, the transmitted waveform sequence set includes P sequences, where P≥N, and P is a positive integer.

In a possible design, the transmitted waveform sequence set is constructed based on a first matrix, a second matrix, and a third matrix, where the first matrix, the second matrix, and the third matrix are all Hadamard matrices.

In a possible design, an order of the first matrix is the same as an order of the second matrix.

The transmitted waveform sequence set is constructed by performing the following steps:

constructing, based on the first matrix and the third matrix, a sequence set having a sequence length of M(Z+C), where M, Z, and C are positive integers, M is the order of the first matrix and the second matrix, Z is an order of the third matrix, and C is a preset value; and

constructing, based on the second matrix and the sequence set having the sequence length of M(Z+C) through n iterations, a sequence set having a sequence length of $M^{n+1}(Z+C)$ as the transmitted waveform sequence set. For example, the sequence set having the sequence length of $M^{n+1}(Z+C)$ includes M×Z sequences, where N≤M×Z, and $Q=M^{n+1}(Z+C)$.

In a possible design, the transmitted waveform sequence set is constructed based on a sequence family, the sequence family includes a plurality of sequence sets, all of the sequence sets include a same quantity of sequences, and all of the sequences have a same sequence length.

For all sequences in any sequence set in the sequence family, a sum of values of aperiodic autocorrelation functions respectively corresponding to all the sequences at a delay $\tau$ equal to 0 is a product of the quantity of sequences and the sequence length, and a sum of values of the aperiodic autocorrelation functions respectively corresponding to all the sequences at the delay $\tau$ not equal to 0 is zero.

For all sequence groups determined based on any two sequence sets in the sequence family, each sequence group includes two sequences with a same sequence number, a sum of values of aperiodic cross-correlation functions respectively corresponding to all the sequence groups at the delay $\tau$ equal to 0 is zero, and a sum of values of the aperiodic cross-correlation functions respectively corresponding to all the sequence groups at the delay $\tau$ not equal to 0 is zero.

In a possible design, the transmitted waveform sequence set is constructed by performing the following step: adding K zero elements between two sequences in each sequence set in the sequence family, to obtain a sequence in the transmitted waveform sequence set, where K is a positive integer.

In a possible design, the transmitted waveform sequence set includes:

si=(1, 1, 1, 1, 1, 1, 1, 1, 0, 0, 0, 0, -1, -1, 1, 1, -1, -1, 1, 1, 0, 0, 0, 0, -1, 1, -1, 1, -1, 1, -1, 1, 0, 0, 0, 0, -1, 1, 1, -1, -1, 1, 1, -1, 0, 0, 0, 0);

$s_2$=(-1, -1, 1, 1, -1, -1, 1, 1, 0, 0, 0, 0, 1, 1, 1, 1, 1, 1, 1, 1, 0, 0, 0, 0, 1, -1, -1, 1, 1, -1, -1, 1, 0, 0, 0, 0, 1, -1, 1, -1, 1,-1, 1, -1, 0, 0, 0, 0);

$s_3$=(-1, 1, -1, 1, -1, 1, -1, 1, 0, 0, 0, 0, 1, -1, -1, 1, 1, -1, -1, 1, 0, 0, 0, 0, 1, 1, 1, 1, 1, 1, 1, 1, 0, 0, 0, 0, 1, 1, -1, -1, 1, 1, -1, -1, 0, 0, 0, 0);

$s_4$=(-1, 1, 1, -1, 1, 1, -1, 0, 0, 0, 0, 1, -1, 1, -1, 1, -1, 1, -1, 0, 0, 0, 0, 1, 1, -1, -1, 1, 1,-1, -1, 0, 0, 0, 0, 1, 1, 1, 1, 1, 1, 1, 1, 0, 0, 0, 0);

$s_5$=(1, 1, 1, 1, -1, -1, -1, -1, 0, 0, 0, 0, -1, -1, 1, 1, 1, 1, -1, -1, 0, 0, 0, 0, -1, 1, -1, 1, 1, -1, 1, -1, 0, 0, 0, 0, -1, 1, 1, -1, 1, -1, -1, 1, 0, 0, 0, 0);

$s_6$=(-1, -1, 1, 1, 1, 1, -1, -1, 0, 0, 0, 0, 1, 1, 1, 1, -1, -1, -1, -1, 0, 0, 0, 0, 1, -1, -1, 1, -1, 1, 1, -1, 0, 0, 0, 0, 1, -1, 1, -1, -1, 1, -1, 1, 0, 0, 0, 0);

$s_7$=(-1, 1, -1, 1, 1, -1, 1, -1, 0, 0, 0, 0, 1, -1, -1, 1, -1, 1, 1, -1, 0, 0, 0, 0, 1, 1, 1, 1, -1, -1, - 1, -1, 0, 0, 0, 0, 1, 1, -1, -1, -1, -1, 1, 1, 0, 0, 0, 0); and

$s_8$=(-1, 1, 1, -1, 1, -1, -1, 1, 0, 0, 0, 0, 1, -1, 1, -1, -1, 1, -1, 1, 0, 0, 0, 0, 1, 1, -1, -1, -1,-1, 1, 1, 0, 0, 0, 0, 1, 1, 1, 1, -1, -1, -1, -1, 0, 0, 0, 0).

For example, N≤8, and Q=48.

In a possible design, the transmitted waveform sequence set includes:

si=(1, 1, 1, 1, 1, 1, 1, 1, 1, 1, 1, 1, 1, 1, 1, 1, 0, 0, 0, 0, 0, 0, 0, 1, -1, 1, -1, 1, -1, 1, -1, 1, - 1, 1, -1, 1, -1, 1, -1, 0, 0, 0, 0, 0, 0, 0, 0, 1, 1, -1, -1, 1, 1, -1, -1, 1, 1, -1, -1, 1, 1, -1, -1, 0, 0, 0, 0, 0, 0, 0, 1, -1, -1, 1, 1, -1, -1, 1, 1, -1, -1, 1, 1, -1, -1, 1, 0, 0, 0, 0, 0, 0, 0, 1, 1, 1, 1, -1, - 1, -1, -1, 1, 1, 1, 1, -1, -1, -1, -1, 0, 0, 0, 0, 0, 0, 0, 1, -1, 1, -1, -1, 1, -1, 1, 1, -1, 1, -1, -1, 1, -1, 1, 0, 0, 0, 0, 0, 0, 0, 1, 1, -1, -1, -1, -1, 1, 1, 1, 1, -1, -1, -1, -1, 1, 1, 0, 0, 0, 0, 0, 0, 0, 1, -1, -1, 1, -1, 1, 1, -1, 1, -1, -1, 1, -1, 1, 1, -1, 0, 0, 0, 0, 0, 0, 0);

$s_2$=(1, -1, 1, -1, 1, -1, 1, -1, 1, -1, 1, -1, 1, -1, 1, -1, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0, 0, 1, -1, -1, 1, 1, -1, -1, 1, 1, -1, -1, 1, 1, -1, -1, 1, 0, 0, 0, 0, 0, 0, 0, 1, 1, -1, -1, 1, 1, -1, -1, 1, 1, -1, -1, 1, 1, - 1, - 1, 0, 0, 0, 0, 0, 0, 0, 1, -1, 1, -1, -1, 1, -1, 1, 1, -1, 1, -1, -1, 1, -1, 1, 0, 0, 0, 0, 0, 0, 0, 1, 1, 1, 1, -1, -1, -1, -1, 1, 1, 1, 1, -1,-1, -1, -1, 0, 0, 0, 0, 0, 0, 0, 1, -1, -1, 1, -1, 1, 1, -1, 1, -1, -1, 1, -1, 1, 1, 0, 0, 0, 0, 0, 0, 0, 1, 1, -1, -1, -1, -1, 1, 1, 1, 1, -1, -1, -1, -1, 1, 1, 0, 0, 0, 0, 0, 0, 0);

$s_3$=(1, 1, -1, -1, 1, 1, -1, -1, 1, 1, -1, -1, 1, 1, -1, -1, 0, 0, 0, 0, 0, 0, 0, 1, -1, -1, 1, 1, -1, -1, 1, 1, -1, -1, 1, 1, -1, -1, 1, 0, 0, 0, 0, 0, 0, 0, 1, 1, 1, 1, 1, 1, 1, 1, 1, 1, 1, 1, 1, 1, 1, 0, 0, 0, 0, 0, 0, 0, 1, -1, 1, -1, 1, -1, 1, -1, 1, -1, 1, -1, 1, -1, 1, -1, 0, 0, 0, 0, 0, 0, 0, 1, 1, -1, -1, - 1, -1, 1, 1, 1, 1, -1, -1, -1, -1, 1, 1, 0, 0, 0, 0, 0, 0, 0, 1, -1, -1, 1, -1, 1, 1, -1, 1, -1, -1, 1, -1, 1, 1, -1, 0, 0, 0, 0, 0, 0, 0, 1, 1, 1, 1, -1, -1, -1, -1, 1, 1, 1, 1, -1, -1, -1, -1, 0, 0, 0, 0, 0, 0, 0, 1, -1, 1, -1, -1, 1, -1, 1, 1, -1, 1, -1, -1, 1, -1, 1, 0, 0, 0, 0, 0, 0, 0);

$s_4$=(1, -1, -1, 1, 1, -1, -1, 1, 1, -1, -1, 1, 1, -1, -1, 1, 0, 0, 0, 0, 0, 0, 0, 0, 1, 1, -1, -1, 1, 1,-1, -1, 1, 1, -1, -1, 1, 1, -1, -1, 0, 0, 0, 0, 0, 0, 0, 0, 1, -1, 1, -1, 1, -1, 1, -1, 1, 1, -1, 1, -1, 1, -1, 0, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0, 0, 1, -1, -1, 1, - 1, 1, 1, -1, 1, -1, -1, 1, -1, 1, 1, -1, 0, 0, 0, 0, 0, 0, 0, 0, 1, 1, -1, -1, -1, -1, 1, 1, 1, 1, -1, -1, -1, -1, 1, 1, 0, 0, 0, 0, 0, 0, 0, 0, 1, -1, 1, -1, -1, 1, -1, 1, 1, -1, 1, -1, -1, 1, -1, 1, 0, 0, 0, 0, 0, 0, 0, 0, 1, 1, 1, 1, -1, -1, -1, -1, 1, 1, 1, 1, -1, -1, -1, -1, 0, 0, 0, 0, 0, 0, 0);

$s_5$=(1, 1, 1, 1, -1, -1, -1, -1, 1, 1, 1, 1, -1, -1, -1, -1, 0, 0, 0, 0, 0, 0, 0, 0, 1, -1, 1, -1, -1, 1, -1, 1, 1, -1, 1, -1, -1, 1, -1, 1, 0, 0, 0, 0, 0, 0, 0, 0, 1, 1, -1, -1, -1, -1, 1, 1, 1, 1, -1, -1, -1, -1, 1, 1, 0, 0, 0, 0, 0, 0, 0, 0, 1, -1, -1, 1, -1, 1, 1, -1, 1, -1, -1, 1, -1, 1, 1, -1, 0, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0, 0, 1, -1, 1, -1, 1, -1, 1, -1, 1, -1, 1, -1, 1, -1, 1, - 1, 1, -1, 0, 0, 0, 0, 0, 0, 0, 0, 1, 1, -1, -1, 1, 1, -1, -1, 1, 1, -1, -1, 1, 1, -1, -1, 0, 0, 0, 0, 0, 0, 0, 0, 1, -1, -1, 1, 1, -1, -1, 1, 1, -1, -1, 1, 1, -1, -1, 1, 0, 0, 0, 0, 0, 0, 0);

$s_6$=(1, -1, 1, -1, -1, 1, -1, 1, 1, -1, 1, -1, -1, 1, -1, 1, 0, 0, 0, 0, 0, 0, 0, 0, 1, 1, 1, 1, -1, -1, - 1, -1, 1, 1, 1, 1, -1, -1, -1, -1, 0, 0, 0, 0, 0, 0, 0, 0, 1, -1, -1, 1, -1, 1, 1, -1, 1, -1, 1, -1, 1, 1, -1, 0, 0, 0, 0, 0, 0, 0, 0, 1, 1, -1, -1, -1, -1, 1, 1, 1, 1, -1, -1, -1, -1, 1, 1, 0, 0, 0, 0, 0, 0, 0, 0, 1, - 1, 1, -1, 1, -1, 1, -1, 1, -1, 1, -1, 1, -1, 1, -1, 0, 0, 0, 0, 0, 0, 0, 0, 1, 1, 1, 1, 1, 1, 1, 1, 1, 1, 1, 1, 1, --> 1, 1, 1, 0, 0, 0, 0, 0, 0, 0, 0, 1, -1, -1, 1, 1, -1, -1, 1, 1, -1, -1, 1, 1, -1, -1, 1, 0, 0, 0, 0, 0, 0, 0, 0, 1, 1, -1, -1, 1, 1, -1, -1, 1, 1, -1, -1, 1, 1, -1, -1, 0, 0, 0, 0, 0, 0, 0);

$s_7$=(1, 1, -1, -1, -1, -1, 1, 1, 1, 1, -1, -1, -1, -1, 1, 1, 0, 0, 0, 0, 0, 0, 0, 0, 1, -1, -1, 1, -1, 1, 1, -1, 1, -1, -1, 1, -1, 1, 1, -1, 0, 0, 0, 0, 0, 0, 0, 0, 1, 1, 1, 1, -1, -1, -1, -1, 1, 1, 1, 1, -1, -1, -1, -1, 0, 0, 0, 0, 0, 0, 0, 0, 1, -1, 1, -1, -1, 1, -1, 1, 1, -1, 1, -1, -1, 1, -1, 1, 0, 0, 0, 0, 0, 0, 0, 0, 1, 1, -1, -1, 1, 1, -1, -1, 1, 1, -1, -1, 1, 1, -1, -1, 0, 0, 0, 0, 0, 0, 0, 0, 1, -1, -1, 1, 1, -1, -1, 1, 1, -1, - 1, 1, 1, -1, -1, 1, 0, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0, 0, 1, -1, 1, -1, 1, -1, 1, -1, 1, -1, 1, -1, 1, -1, 1, -1, 0, 0, 0, 0, 0, 0, 0);

$s_8$=(1, -1, -1, 1, -1, 1, 1, -1, 1, -1, -1, 1, -1, 1, 1, -1, 0, 0, 0, 0, 0, 0, 0, 0, 1, 1, -1, -1, -1, - 1, 1, 1, 1, 1, -1, -1, -1, -1, 1, 1, 0, 0, 0, 0, 0, 0, 0, 0, 1, -1, 1, -1, -1, 1, -1, 1, 1, 1, -1, -1, 1, - 1, 1, 0, 0, 0, 0, 0, 0, 0, 0, 1, 1, 1, 1, -1, -1, -1, -1, 1, 1, 1, 1, -1, -1, -1, -1, 0, 0, 0, 0, 0, 0, 0, 0, 1, -1, -1, 1, 1, -1, -1, 1, 1, -1, -1, 1, 1, -1, -1, 1, 0, 0, 0, 0, 0, 0, 0, 0, 1, 1, -1, -1, 1, 1, -1, -1, 1, 1, -1, -1, 1, 1, -1, -1, 0, 0, 0, 0, 0, 0, 0, 0, 1, -1, 1, -1, 1, -1, 1, -1, 1, -1, 1, -1, 1, -1, 1, -1, 0, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0);

$s_9$=(1, 1, 1, 1, 1, 1, 1, 1, -1, -1, -1, -1, -1, -1, -1, -1, 0, 0, 0, 0, 0, 0, 0, 0, 1, -1, 1, -1, 1, -1, 1, -1, -1, 1, -1, 1, -1, 1, -1, 1, 0, 0, 0, 0, 0, 0, 0, 0, 1, 1, -1, -1, 1, 1, -1, -1, -1, -1, 1, 1, -1, -1, 1, 1, 0, 0, 0, 0, 0, 0, 0, 0, 1, -1, -1, 1, 1, -1, -1, 1, -1, 1, 1, -1, -1, 1, 1, -1, 0, 0, 0, 0, 0, 0, 0, 0, 1, 1, 1, 1, -1, -1, -1, -1, -1, -1, -1, -1, 1, 1, 1, 1, 0, 0, 0, 0, 0, 0, 0, 0, 1, -1, 1, -1, -1, 1, -1, 1, -1, 1, - 1, 1, 1, -1, 1, -1, 0, 0, 0, 0, 0, 0, 0, 0, 1, 1, -1, -1, -1, -1, 1, 1, -1, -1, 1, 1, 1, 1, -1, -1, 0, 0, 0, 0, 0, 0, 0, 0, 1, -1, -1, 1, -1, 1, 1, -1, -1, 1, 1, -1, 1, -1, -1, 1, 0, 0, 0, 0, 0, 0, 0);

$s_{10}$=(1, -1, 1, -1, 1, -1, 1, -1, -1, 1, -1, 1, -1, 1, -1, 1, 0, 0, 0, 0, 0, 0, 0, 0, 1, 1, 1, 1, 1, 1, 1, 1, -1, -1, -1, -1, -1, -1, -1, -1, 0, 0, 0, 0, 0, 0, 0, 0, 1, -1, -1, 1, 1, -1, -1, 1, -1, 1, 1, -1, -1, 1, 1, -1, 0, 0, 0, 0, 0, 0, 0, 0, 1, 1, -1, -1, 1, 1, -1, -1, -1, -1, 1, 1, -1, -1, 1, 1, -1, -1, 1, 1, 0, 0, 0, 0, 0, 0, 0, 0, 1, - 1, 1, -1, -1, 1, -1, 1, -1, 1, -1, 1, 1, -1, 1, -1, 0, 0, 0, 0, 0, 0, 0, 0, 1, 1, 1, 1, -1, -1, -1, -1, -1, -1, - 1, -1, -1, 1, 1, 1, 1, 0, 0, 0, 0, 0, 0, 0, 0, 1, -1, -1, 1, -1, 1, 1, -1, -1, 1, 1, -1, 1, -1, -1, 1, 0, 0, 0, 0, 0, 0, 0, 0, 1, 1, -1, -1, -1, -1, 1, 1, -1, -1, 1, 1, 1, 1, -1, -1, 0, 0, 0, 0, 0, 0, 0);

$s_{11}$=(1, 1, -1, -1, 1, 1, -1, -1, -1, -1, 1, 1, -1, -1, 1, 1, 0, 0, 0, 0, 0, 0, 0, 0, 1, -1, -1, 1, 1, -1, -1, 1, -1, 1, 1, -1, -1, 1, 1, -1, 0, 0, 0, 0, 0, 0, 0, 0, 1, 1, 1, 1, 1, 1, 1, 1, -1, -1, -1, -1, -1, -1, -1, -1, 0, 0, 0, 0, 0, 0, 0, 0, 1, -1, 1, -1, 1, -1, 1, -1, -1, 1, -1, 1, -1, 1, -1, 1, -1, 1, 0, 0, 0, 0, 0, 0, 0, 0, 1, 1, -1, -1, -1, -1, 1, 1, -1, -1, 1, 1, 1, 1, -1, -1, 0, 0, 0, 0, 0, 0, 0, 0, 1, -1, -1, 1, -1, 1, 1, -1, -1, 1, 1, -1, 1, -1, 1, -1, -1, 1, 0, 0, 0, 0, 0, 0, 0, 0, 1, 1, 1, 1, -1, -1, -1, -1, -1, -1, -1, -1, 1, 1, 1, 1, 0, 0, 0, 0, 0, 0, 0, 0, 1, -1, 1, -1, -1, 1, -1, 1, -1, 1, -1, 1, 1, -1, 1, -1, 0, 0, 0, 0, 0, 0, 0);

$s_{12}$=(1, -1, -1, 1, 1, -1, -1, 1, -1, 1, 1, -1, -1, 1, 1, 0, 0, 0, 0, 0, 0, 0, 0, 1, 1, -1, -1, 1, 1, -1, -1, -1, -1, 1, 1, -1, -1, 1, 1, 0, 0, 0, 0, 0, 0, 0, 0, 1, -1, 1, -1, 1, -1, 1, -1, -1, 1, -1, 1, -1, 1, -1, 1, - 1, 1, 0, 0, 0, 0, 0, 0, 0, 0, 1, 1, 1, 1, 1, 1, 1, 1, -1, -1, -1, -1, -1, -1, -1, -1, 0, 0, 0, 0, 0, 0, 0, 0, 1, --> -1, -1, 1, -1, 1, 1, -1, -1, 1, 1, -1, 1, -1, -1, 1, 0, 0, 0, 0, 0, 0, 0, 0, 1, 1, -1, -1, -1, -1, 1, 1, -1, - 1, 1, 1, 1, 1, -1, -1, 0, 0, 0, 0, 0, 0, 0, 0, 1, -1, 1, -1, -1, 1, -1, 1, -1, 1, -1, 1, 1, -1, 1, -1, 0, 0, 0, 0, 0, 0, 0, 0, 1, 1, 1, 1, -1, -1, -1, -1, -1, -1, -1, -1, 1, 1, 1, 1, 0, 0, 0, 0, 0, 0, 0);

$s_{13}$=(1, 1, 1, 1, -1, -1, -1, -1, -1, -1, -1, -1, 1, 1, 1, 1, 0, 0, 0, 0, 0, 0, 0, 0, 1, -1, 1, -1, -1, 1, -1, 1, -1, 1, -1, 1, 1, -1, 1, -1, 0, 0, 0, 0, 0, 0, 0, 0, 1, 1, -1, -1, -1, -1, 1, 1, -1, -1, 1, 1, 1, 1, -1, -1, 0, 0, 0, 0, 0, 0, 0, 0, 1, -1, -1, 1, -1, 1, 1, -1, -1, 1, 1, -1, 1, -1, -1, 1, 0, 0, 0, 0, 0, 0, 0, 0, 1, 1, 1, 1, 1, 1, 1, 1, -1, -1, -1, -1, -1, -1, -1, -1, 0, 0, 0, 0, 0, 0, 0, 0, 1, -1, 1, -1, 1, -1, 1, -1, -1, 1, - 1, 1, -1, 1, -1, 1, 0, 0, 0, 0, 0, 0, 0, 0, 1, 1, -1, -1, 1, 1, -1, -1, -1, -1, 1, 1, -1, -1, 1, 1, 0, 0, 0, 0, 0, 0, 0, 0, 1, -1, -1, 1, 1, -1, -1, 1, -1, 1, 1, -1, -1, 1, 1, -1, 0, 0, 0, 0, 0, 0, 0, 0);

$s_{14}$=(1, -1, 1, -1, -1, 1, -1, 1, -1, 1, -1, 1, 1, -1, 1, -1, 0, 0, 0, 0, 0, 0, 0, 0, 1, 1, 1, 1, -1, -1, -1, -1, -1, -1, -1, -1, 1, 1, 1, 1, 0, 0, 0, 0, 0, 0, 0, 0, 1, -1, -1, 1, -1, 1, 1, -1, -1, 1, 1, -1, 1, -1, - 1, 1, 0, 0, 0, 0, 0, 0, 0, 0, 1, 1, -1, -1, -1, -1, 1, 1, -1, -1, 1, 1, 1, -1, -1, 0, 0, 0, 0, 0, 0, 0, 0, 1, -1, 1, -1, 1, -1, 1, -1, -1, 1, -1, 1, -1, 1, -1, 1, 0, 0, 0, 0, 0, 0, 0, 0, 1, 1, 1, 1, 1, 1, 1, 1, 1, -1, -1, - 1, -1, -1, -1, -1, -1, 0, 0, 0, 0, 0, 0, 0, 0, 1, -1, -1, 1, 1, -1, -1, 1, -1, 1, 1, -1, -1, 1, 1, -1, 0, 0, 0, 0, 0, 0, 0, 0, 1, 1, -1, -1, 1, 1, -1, -1, -1, -1, 1, 1, -1, -1, 1, 1, 0, 0, 0, 0, 0, 0, 0, 0);

$s_{15}$=(1, 1, -1, -1, -1, -1, 1, 1, -1, -1, 1, 1, 1, 1, -1, -1, 0, 0, 0, 0, 0, 0, 0, 0, 1, -1, -1, 1, -1, 1, 1, -1, -1, 1, 1, -1, 1, -1, -1, 1, 0, 0, 0, 0, 0, 0, 0, 0, 1, 1, 1, 1, -1, -1, -1, -1, -1, -1, -1, -1, 1, 1, 1, 1, 0, 0, 0, 0, 0, 0, 0, 0, 1, -1, 1, -1, -1, 1, -1, 1, -1, 1, -1, 1, 1, -1, 1, -1, 0, 0, 0, 0, 0, 0, 0, 0, 1, 1, -1, -1, 1, 1, -1, -1, -1, -1, 1, 1, -1, -1, 1, 1, 0, 0, 0, 0, 0, 0, 0, 0, 1, -1, -1, 1, 1, -1, -1, 1, -1, 1, 1, -1, -1, 1, 1, -1, 0, 0, 0, 0, 0, 0, 0, 0, 1, 1, 1, 1, 1, 1, 1, 1, -1, -1, -1, -1, -1, -1, -1, -1, 0, 0, 0, 0, 0, 0, 0, 0, 1, -1, 1, -1, 1, -1, 1, -1, -1, 1, -1, 1, -1, 1, -1, 1, 0, 0, 0, 0, 0, 0, 0, 0); and

$s_{16}$=(1, -1, -1, 1, -1, 1, 1, -1, -1, 1, 1, -1, 1, -1, -1, 1, 0, 0, 0, 0, 0, 0, 0, 0, 1, 1, -1, -1, -1, - 1, 1, 1, -1, -1, 1, 1, 1, 1, -1, -1, 0, 0, 0, 0, 0, 0, 0, 0, 1, -1, 1, -1, -1, 1, -1, 1, -1, 1, -1, 1, 1, -1, 1, -1, 0, 0, 0, 0, 0, 0, 0, 0, 1, 1, 1, 1, -1, -1, -1, -1, -1, -1, -1, -1, 1, 1, 1, 1, 0, 0, 0, 0, 0, 0, 0, 0, 1, - 1, -1, 1, 1, -1, -1, 1, -1, 1, 1, -1, -1, 1, 1, -1, 0, 0, 0, 0, 0, 0, 0, 0, 1, 1, -1, -1, 1, 1, -1, -1, -1, - 1, 1, 1, -1, -1, 1, 1, 0, 0, 0, 0, 0, 0, 0, 0, 1, -1, 1, -1, 1, -1, 1, -1, -1, 1, -1, 1, -1, 1, -1, 1, 0, 0, 0, 0, 0, 0, 0, 0, 1, 1, 1, 1, 1, 1, 1, 1, -1, -1, -1, -1, -1, -1, -1, -1, 0, 0, 0, 0, 0, 0, 0, 0).

For example, N≤16, and Q=192.

In a possible design, the transmitted waveform sequence set includes:

$s_1$ = (-1, -1, -1, 1, 1, -1, 1, 1, 0, 0, 0, 0, 0, 0, 0, 0, 1, 1, 1, -1, 1, -1, 1, 1, 0, 0, 0, 0, 0, 0, 0, 0, 1, -1, 1, 1, -1, -1, -1, 1, 0, 0, 0, 0, 0, 0, 0, 0, -1, 1, -1, -1, -1, -1, -1, 1);

$\boldsymbol{s}_2$ = (1, 1, 1, -1, 1, -1, 1, 1, 0, 0, 0, 0, 0, 0, 0, 0, -1, -1, -1, 1, 1, -1, 1, 1, 0, 0, 0, 0, 0, 0, 0, 0, -1, 1, -1, -1, -1, -1, -1, 1, 0, 0, 0, 0, 0, 0, 0, 0, 1, -1, 1, 1, -1, -1, -1,1);

$\boldsymbol{s}_3$ = (1,1, -1, 1, -1, 1, 1, 1, 0, 0, 0, 0, 0, 0, 0, 0, -1, -1, 1, -1, -1, 1, 1, 1, 0, 0, 0, 0, 0, 0, 0, 0, -1, 1, 1, 1, 1, 1, -1, 1, 0, 0, 0, 0, 0, 0, 0, 0, 1, -1, -1, -1, 1, 1, -1, 1); and

$\boldsymbol{s}_4$ = (-1, -1, 1, -1, -1, 1, 1, 1, 0, 0, 0, 0, 0, 0, 0, 0,1, 1, -1, 1, -1, 1, 1, 1, 0, 0, 0, 0, 0, 0, 0, 0, 1, -1, -1, -1, 1, 1, -1, 1, 0, 0, 0, 0, 0, 0, 0, 0, -1, 1, 1, 1, 1, 1, -1, 1).

For example, N≤4, and Q=56.

In a possible design, the transmitted waveform sequence set includes:

$$s_1 = \begin{pmatrix} 1,1,\text{-}1,1,\text{-}1,1,\text{-}1,\text{-}1,1,1,0,0,0,0,0,0,0,0,0,0,1,1,\text{-}1,1,\text{-}1,1,\text{-}1,\text{-}1,1,1,0,0,0,0,0, \\ 0,0,0,0,0,1,1,\text{-}1,1,1,1,1,1,\text{-}1,\text{-}1,0,0,0,0,0,0,0,0,0,0,1,1,\text{-}1,1,1,1,1,1,\text{-}1,\text{-}1 \end{pmatrix}$$

$$s_2 = \begin{pmatrix} 1,1,\text{-}1,1,\text{-}1,1,\text{-}1,\text{-}1,1,1,0,0,0,0,0,0,0,0,0,0,\text{-}1,\text{-}1,1,\text{-}1,1,\text{-}1,1,1,\text{-}1,\text{-}1,0,0,0,0,0, \\ 0,0,0,0,0,1,1,\text{-}1,1,1,1,1,1,\text{-}1,\text{-}1,0,0,0,0,0,0,0,0,0,0,\text{-}1,\text{-}1,1,\text{-}1,\text{-}1,\text{-}1,\text{-}1,\text{-}1,1,1 \end{pmatrix}$$

$$s_3 = \begin{pmatrix} -1,-1,1,1,1,1,1,-1,1,1,0,0,0,0,0,0,0,0,0,-1,-1,1,1,1,1,1,-1,1,1,0,0,0,0,0,0, \\ 0,0,0,0,-1,-1,1,1,-1,1,-1,1,-1,-1,0,0,0,0,0,0,0,0,0,-1,-1,1,1,-1,1,-1,1,-1,-1 \end{pmatrix}$$

$$s_4 = \begin{pmatrix} -1,-1,1,1,1,1,1,-1,1,1,0,0,0,0,0,0,0,0,0,1,1,-1,-1,-1,-1,-1,1,-1,-1,0,0,0,0,0,0, \\ 0,0,0,0,0,-1,-1,1,1,-1,1,-1,1,-1,-1,0,0,0,0,0,0,0,0,0,1,1,-1,-1,1,-1,1,-1,1,1 \end{pmatrix}.$$

For example, N≤4, and Q=70.

In a possible design, the transmitted waveform sequence set includes:

$$s_1 = \begin{pmatrix} 1,1,-1,-1,1,-1,1,-1,1,-1,-1,1,-1,-1,-1,-1,0,0,0,0,0,0,0,0,0,0,0,0,0,0,0,1,1,-1,-1,1,-1, \\ 1,-1,-1,1,1,-1,1,1,1,1,0,0,0,0,0,0,0,0,0,0,0,0,0,0,0,1,-1,-1,1,1,1,1,1,1,1,-1,-1,-1,1, \\ -1,1,0,0,0,0,0,0,0,0,0,0,0,0,0,0,0,0,1,-1,-1,1,1,1,1,-1,-1,1,1,1,-1,1,-1 \end{pmatrix}$$

$$s_2 = \begin{pmatrix} 1,1,-1,-1,1,-1,1,-1,-1,1,1,-1,1,1,1,1,0,0,0,0,0,0,0,0,0,0,0,0,0,0,0,1,1,-1,-1,1,-1,1, \\ -1,1,-1,-1,1,-1,-1,-1,-1,0,0,0,0,0,0,0,0,0,0,0,0,0,0,1,-1,-1,1,1,1,1,1,-1,-1,1,1,1, \\ -1,1,-1,0,0,0,0,0,0,0,0,0,0,0,0,0,0,0,0,1,-1,-1,1,1,1,1,1,1,-1,-1,-1,1,-1,1 \end{pmatrix}$$

$$s_3 = \begin{pmatrix} 1,1,1,1,1,-1,-1,1,1,-1,1,-1,-1,-1,1,1,0,0,0,0,0,0,0,0,0,0,0,0,0,0,0,1,1,1,1,1,-1,-1,1, \\ -1,1,-1,1,1,1,-1,-1,0,0,0,0,0,0,0,0,0,0,0,0,0,0,0,0,1,-1,1,-1,1,1,-1,-1,1,1,1,1,-1,1,1, \\ -1,0,0,0,0,0,0,0,0,0,0,0,0,0,0,0,0,1,-1,1,-1,1,1,-1,-1,-1,-1,-1,-1,1,-1,-1,1 \end{pmatrix}$$

$$s_4 = \begin{pmatrix} 1,1,1,1,1,-1,-1,1,-1,1,-1,1,1,1,-1,-1,0,0,0,0,0,0,0,0,0,0,0,0,0,0,0,0,1,1,1,1,1,-1,-1,1, \\ 1,-1,1,-1,-1,-1,1,1,0,0,0,0,0,0,0,0,0,0,0,0,0,0,0,0,1,-1,1,-1,1,1,-1,-1,-1,-1,-1,-1,1,-1, \\ -1,1,0,0,0,0,0,0,0,0,0,0,0,0,0,0,0,0,1,-1,1,-1,1,1,-1,-1,1,1,1,1,-1,1,1,-1 \end{pmatrix}.$$

For example, N≤4, and Q=112.

In a possible design, the transmitted waveform sequence set includes:

$$s_1 = \begin{pmatrix} 1,1,-1,1,-1,1,-1,-1,1,1,1,1,-1,1,1,1,1,-1,-1,0,0,0,0,0,0,0,0,0,0,0,0,0,0,0,0,0,0,0, \\ 1,1,-1,1,-1,1,-1,-1,1,1,1,1,-1,1,1,1,1,-1,-1,0,0,0,0,0,0,0,0,0,0,0,0,0,0,0,0,0,0,0, \\ 1,1,-1,1,-1,1,-1,-1,1,1,-1,-1,1,-1,-1,-1,-1,-1,1,1,0,0,0,0,0,0,0,0,0,0,0,0,0,0,0,0, \\ 0,0,1,1,-1,1,-1,1,-1,-1,1,1,-1,-1,1,-1,-1,-1,-1,-1,1,1 \end{pmatrix}$$

$$s_2 = \begin{pmatrix} 1,1,-1,1,-1,1,-1,-1,1,1,1,1,-1,1,1,1,1,-1,-1,0,0,0,0,0,0,0,0,0,0,0,0,0,0,0,0,0,0,0, \\ -1,-1,1,-1,1,-1,1,1,-1,-1,-1,-1,1,-1,-1,-1,-1,-1,1,1,0,0,0,0,0,0,0,0,0,0,0,0,0,0,0,0, \\ 0,0,0,1,1,-1,1,-1,1,-1,-1,1,1,-1,-1,1,-1,-1,-1,-1,-1,1,1,0,0,0,0,0,0,0,0,0,0,0,0,0, \\ 0,0,0,0,0,-1,-1,1,-1,1,-1,1,1,-1,-1,1,1,-1,1,1,1,1,1,-1,-1 \end{pmatrix}$$

$$s_3 = \begin{pmatrix} 1,1,-1,-1,-1,-1,-1,1,-1,-1,1,1,-1,-1,1,-1,1,-1,1,1,0,0,0,0,0,0,0,0,0,0,0,0,0,0,0,0,0,0, \\ 0,1,1,-1,-1,-1,-1,-1,1,-1,-1,1,1,-1,-1,1,-1,1,-1,1,1,0,0,0,0,0,0,0,0,0,0,0,0,0,0,0,0,0, \\ 0,0,1,1,-1,-1,-1,-1,-1,1,-1,-1,-1,-1,1,1,-1,1,-1,1,-1,-1,0,0,0,0,0,0,0,0,0,0,0,0,0,0,0,0, \\ 0,0,0,0,1,1,-1,-1,-1,-1,-1,1,-1,-1,-1,-1,1,1,-1,1,-1,1,-1,-1 \end{pmatrix}$$

$$s_4 = \begin{pmatrix} 1,1,-1,-1,-1,-1,-1,1,-1,-1,1,1,-1,-1,1,-1,1,-1,1,1,0,0,0,0,0,0,0,0,0,0,0,0,0,0,0,0,0,0, \\ 0,-1,-1,1,1,1,1,1,-1,1,1,-1,-1,1,1,-1,1,-1,1,-1,-1,0,0,0,0,0,0,0,0,0,0,0,0,0,0,0,0,0, \\ 0,1,1,-1,-1,-1,-1,-1,1,-1,-1,-1,-1,1,1,-1,1,-1,1,-1,-1,0,0,0,0,0,0,0,0,0,0,0,0,0,0,0,0, \\ 0,0,0,-1,-1,1,1,1,1,1,-1,1,1,1,1,-1,-1,1,-1,1,-1,1,1 \end{pmatrix}.$$

For example, N≤4, and Q=140.

It should be understood that the apparatus 900 according to this embodiment of this application may correspond to the receiving end in the foregoing method embodiment, and operations and/or functions of the modules in the apparatus 900 are separately used to implement corresponding steps of the method of the receiving end in the foregoing method embodiment. Therefore, beneficial effects in the foregoing method embodiment can also be implemented. For brevity, details are not described herein again.

FIG. 10 is a diagram of a structure of a communication apparatus 1000 according to an embodiment of this application. As shown in FIG. 10, the apparatus 1000 includes a processor 1001.

When the apparatus 1000 is a transmitting end or a chip in a transmitting end, in a possible implementation, the processor 1001 is configured to invoke an interface to perform the following actions:
determining a transmitted waveform sequence set, where the transmitted waveform sequence set includes N sequences, N is a positive integer, the transmitted waveform sequence set includes a sequence having an aperiodic zero correlation zone ZCZ, a sequence length of the sequence is Q, and Q is a positive integer; and sending Q pulse bursts to a receiving end based on the transmitted waveform sequence set, where each pulse burst includes N pulses, a $j^{th}$ pulse in an $i^{th}$ pulse burst in the Q pulse bursts corresponds to an $i^{th}$ element in a $j^{th}$ sequence in the N sequences, i and j are positive integers, 1≤i≤Q, and 1≤j≤N.

It should be understood that the apparatus 1000 may be further configured to perform other steps and/or operations on the transmitting end side in the foregoing embodiment. For brevity, details are not described herein.

When the apparatus 1000 is a receiving end or a chip in a receiving end, in a possible implementation, the processor 1001 is configured to invoke an interface to perform the following actions:
receiving Q pulse bursts from a transmitting end, where each pulse burst includes N pulses, a $j^{th}$ pulse in an $i^{th}$ pulse burst in the Q pulse bursts corresponds to an $i^{th}$ element in a $j^{th}$ sequence in a transmitted waveform sequence set, i and j are positive integers, the transmitted waveform sequence set includes N sequences, N is a positive integer, the transmitted waveform sequence set includes a sequence having an aperiodic ZCZ, a sequence length of the sequence is Q, Q is a positive integer, 1≤i≤Q, and 1≤j≤N; and correlating the Q pulse bursts with a local sequence set, and determining information about a target within a detection range, where the local sequence set is the same as the transmitted waveform sequence set, and the detection range is related to a size of the ZCZ and a repetition period of the pulse burst.

It should be understood that the apparatus 1000 may be further configured to perform other steps and/or operations on the receiving end side in the foregoing embodiment. For brevity, details are not described herein.

It should be understood that the processor 1001 may invoke the interface to perform the foregoing receiving and sending actions. The invoked interface may be a logic interface or a physical interface. This is not limited. Optionally, the physical interface may be implemented by using a transceiver. Optionally, the apparatus 1000 further includes a transceiver 1003.

Optionally, the apparatus 1000 further includes a memory 1002. The memory 1002 may store program code in the foregoing method embodiments, so that the processor 1001 invokes the program code.

Specifically, if the apparatus 1000 includes the processor 1001, the memory 1002, and the transceiver 1003, the processor 1001, the memory 1002, and the transceiver 1003 communicate with each other by using an internal connection path, to transfer a control signal and/or a data signal. In a possible design, the processor 1001, the memory 1002, and the transceiver 1003 may be implemented by using a chip, and the processor 1001, the memory 1002, and the transceiver 1003 may be implemented in a same chip, or may be separately implemented in different chips, or functions of any two of the processor 1001, the memory 1002, and the transceiver 1003 are implemented in one chip. The memory 1002 may store the program code, and the processor 1001 invokes the program code stored in the memory 1002, to implement a corresponding function of the apparatus 1000.

The method disclosed in the foregoing embodiment of this application may be applied to the processor, or may be implemented by the processor. The processor may be an integrated circuit chip and has a signal processing capability. In an implementation process, steps in the foregoing method embodiments can be implemented by using a hardware integrated logic circuit in the processor, or by using instructions in a form of software. The foregoing processor may be a general purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or a transistor logic device, or a discrete hardware assembly, or may be a system on chip (system on chip, SoC), or may be a central processing unit (central processor unit, CPU), or may be a network processor (network processor, NP), or may be a digital signal processor (digital signal processor, DSP), or may be a micro control unit (micro controller unit, MCU), or may be a programmable logic device (programmable logic device, PLD) or another integrated chip. It may implement or perform the methods, the steps, and logic block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

It should be understood that in embodiments of this application, numbers "first", "second", and the like are merely used to distinguish between different objects, for example, to distinguish between different parameter information or messages, and do not constitute a limitation on the scope of embodiments of this application. Embodiments of this application are not limited thereto.

It should be further understood that sequence numbers of the foregoing processes do not mean execution sequences in embodiments of this application. The execution sequences of the processes should be determined based on functions and internal logic of the processes. Various numerical numbers or sequence numbers in the foregoing processes are merely distinguished for ease of description, and should not constitute any limitation on the implementation processes of embodiments of this application.

It should also be understood that the term "and/or" in this specification describes only an association relationship for describing associated objects and represents that three relationships may exist. For example, A and/or B may indicate the following three cases: Only A exists, both A and B exist, and only B exists. In addition, the character "/" in this specification generally indicates an "or" relationship between the associated objects.

Unless otherwise specified, an expression used in this application similar to an expression that "an item includes one or more of the following: A, B, and C" usually means that the item may be any one of the following: A; B; C; A and B; A and C; B and C; A, B, and C; A and A; A, A, and A; A, A, and B; A, A, and C; A, B, and B; A, C, and C; B and B; B, B, and B; B, B, and C; C and C; C, C, and C; and another combination of A, B, and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, the unit division is merely logic function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computing device (which may be a personal computer, a server, or a network device) to perform all or some of the steps of the methods described in embodiments of this application. The foregoing storage medium includes any medium that can store program code, such as a USB flash drive, a removable hard disk drive, a read-only memory ROM, a random access memory RAM, a magnetic disk, or an optical disc.

## Claims

1. An ultra-wideband UWB-based sensing method, wherein the method comprises:

    determining, by a transmitting end, a transmitted waveform sequence set, wherein the transmitted waveform sequence set comprises N sequences, N is a positive integer, the transmitted waveform sequence set comprises a sequence having an aperiodic zero correlation zone ZCZ, a sequence length of the sequence is Q, and Q is a positive integer; and

    sending, by the transmitting end, Q pulse bursts to a receiving end based on the N sequences, wherein each pulse burst comprises N pulses, a $j^{th}$ pulse in an $i^{th}$ pulse burst in the Q pulse bursts corresponds to an $i^{th}$ element in a $j^{th}$ sequence in the N sequences, i and j are positive integers, $1 \leq i \leq Q$, and $1 \leq j \leq N$.

2. The method according to claim 1, wherein the transmitted waveform sequence set comprises P sequences, $P \geq N$, and P is a positive integer.

3. The method according to claim 1 or 2, wherein the transmitted waveform sequence set is constructed based on a first matrix, a second matrix, and a third matrix, and the first matrix, the second matrix, and the third matrix are all Hadamard matrices.

4. The method according to claim 3, wherein an order of the first matrix is the same as an order of the second matrix; and the transmitted waveform sequence set is constructed by performing the following steps:

    constructing, based on the first matrix and the third matrix, a sequence set having a sequence length of M(Z+C), wherein M, Z, and C are positive integers, M is the order of the first matrix and the second matrix, Z is an order of the third matrix, and C is a preset value; and

    constructing, based on the second matrix and the sequence set having the sequence length of M(Z+C) through n iterations, a sequence set having a sequence length of $M^{n+1}(Z+C)$ as the transmitted waveform sequence set, wherein n is a positive integer, the sequence set having the sequence length of $M^{n+1}(Z+C)$ comprises $M \times Z$ sequences, $N \leq M \times Z$, and $Q = M^{n+1}(Z+C)$.

5. The method according to claim 1 or 2, wherein the transmitted waveform sequence set is constructed based on a sequence family, the sequence family comprises a plurality of sequence sets, all of the sequence set comprise a same quantity of sequences, and all of the sequences have a same sequence length;

for all sequences in any sequence set in the sequence family, a sum of values of aperiodic autocorrelation functions respectively corresponding to all the sequences at a delay $\tau$ equal to 0 is a product of the quantity of sequences and the sequence length, and a sum of values of the aperiodic autocorrelation functions respectively corresponding to all the sequences at the delay $\tau$ not equal to 0 is zero; and
for all sequence groups determined based on any two sequence sets in the sequence family, each sequence group comprises two sequences with a same sequence number, a sum of values of aperiodic cross-correlation functions respectively corresponding to all the sequence groups at the delay $\tau$ equal to 0 is zero, and a sum of values of the aperiodic cross-correlation functions respectively corresponding to all the sequence groups at the delay $\tau$ not equal to 0 is zero.

6. The method according to claim 5, wherein the transmitted waveform sequence set is constructed by performing the following step:
adding K zero elements between two sequences in each sequence set in the sequence family, to obtain a sequence in the transmitted waveform sequence set, wherein K is a positive integer.

7. The method according to any one of claims 1 to 6, wherein the transmitted waveform sequence set comprises:

$s_1$=(1, 1, 1, 1, 1, 1, 1, 1, 0, 0, 0, 0, -1, -1, 1, 1, -1, -1, 1, 1, 0, 0, 0, 0, -1, 1, -1, 1, -1, 1, -1, 1, 0, 0, 0, 0, -1, 1, 1, -1, -1, 1, 1, -1, 0, 0, 0, 0);

$s_2$=(-1, -1, 1, 1, -1, -1, 1, 1, 0, 0, 0, 0, 1, 1, 1, 1, 1, 1, 1, 1, 0, 0, 0, 0, 1, -1, -1, 1, 1, -1, -1, 1, 0, 0, 0, 0, 1, -1, 1, -1, 1, -1, 1, -1, 0, 0, 0, 0);

$s_3$=(-1, 1, -1, 1, -1, 1, -1, 1, 0, 0, 0, 0, 1, -1, -1, 1, 1, -1, -1, 1, 0, 0, 0, 0, 1, 1, 1, 1, 1, 1, 1, 1, 0, 0, 0, 0, 1, 1, -1, -1, 1, 1, -1, -1, 0, 0, 0, 0);

$s_4$=(-1, 1, 1, -1, -1, 1, 1, -1, 0, 0, 0, 0, 1, -1, 1, -1, 1, -1, 1, -1, 0, 0, 0, 0, 1, 1, -1, -1, 1, 1,-1, -1, 0, 0, 0, 0, 1, 1, 1, 1, 1, 1, 1, 1, 0, 0, 0, 0);

$s_5$=(1, 1, 1, 1, -1, -1, -1, -1, 0, 0, 0, 0, -1, -1, 1, 1, 1, 1, -1, -1, 0, 0, 0, 0, -1, 1, -1, 1, 1, -1, 1, -1, 0, 0, 0, 0, -1, 1, 1, -1, 1, -1, -1, 1, 0, 0, 0, 0);

$s_6$=(-1, -1, 1, 1, 1, 1, -1, -1, 0, 0, 0, 0, 1, 1, 1, 1, -1, -1, -1, -1, 0, 0, 0, 0, 1, -1, -1, 1, -1, 1, 1, -1, 0, 0, 0, 0, 1, -1, 1, -1, -1, 1, -1, 1, 0, 0, 0, 0);

$s_7$=(-1, 1, -1, 1, 1, -1, 1, -1, 0, 0, 0, 0, 1, -1, -1, 1, -1, 1, 1, -1, 0, 0, 0, 0, 1, 1, 1, 1, -1, -1, - 1, -1, 0, 0, 0, 0, 1, 1, -1, -1, -1, -1, 1, 1, 0, 0, 0, 0); and

$s_8$=(-1, 1, 1, -1, 1, -1, -1, 1, 0, 0, 0, 0, 1, -1, 1, -1, -1, 1, -1, 1, 0, 0, 0, 0, 1, 1, -1, -1, -1, - 1, 1, 1, 0, 0, 0, 0, 1, 1, 1, 1, -1, -1, -1, -1, 0, 0, 0, 0), wherein

$N \leq 8$, and $Q=48$.

8. The method according to any one of claims 1 to 6, wherein the transmitted waveform sequence set comprises:

$s_1$=(1, 1, 1, 1, 1, 1, 1, 1, 1, 1, 1, 1, 1, 1, 1, 1, 0, 0, 0, 0, 0, 0, 0, 1, -1, 1, -1, 1, -1, 1, -1, 1, - 1, 1, -1, 1, -1, 1, -1, 0, 0, 0, 0, 0, 0, 0, 0, 1, 1, -1, -1, 1, 1, -1, -1, 1, 1, -1, -1, 1, 1, -1, -1, 0, 0, 0, 0, 0, 0, 0, 0, 1, -1, -1, 1, 1, -1, -1, 1, 1, -1, -1, 1, 1, -1, -1, 1, 0, 0, 0, 0, 0, 0, 0, 0, 1, 1, 1, 1, -1, - 1, -1, -1, 1, 1, 1, 1, -1, -1, -1, -1, 0, 0, 0, 0, 0, 0, 0, 0, 1, -1, 1, -1, -1, 1, -1, 1, 1, -1, 1, -1, -1, 1, -1, 1, 0, 0, 0, 0, 0, 0, 0, 1, 1, -1, -1, -1, -1, 1, 1, 1, 1, -1, -1, -1, -1, 1, 1, 0, 0, 0, 0, 0, 0, 0, 0, 1, --> -1, -1, 1, -1, 1, 1, -1, 1, -1, -1, 1, -1, 1, 1, -1, 0, 0, 0, 0, 0, 0, 0, 0);

$s_2$=(1, -1, 1, -1, 1, -1, 1, -1, 1, -1, 1, -1, 1, -1, 1, -1, 0, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0, 0, 1, -1, -1, 1, 1, -1, -1, 1, 1, -1, -1, 1, 1, -1, -1, 1, 0, 0, 0, 0, 0, 0, 0, 0, 1, 1, -1, -1, 1, 1, -1, -1, 1, 1, -1, -1, 1, 1, -1, -1, 0, 0, 0, 0, 0, 0, 0, 0, 1, -1, 1, -1, -1, 1, -1, 1, 1, -1, 1, -1, -1, 1, -1, 1, 0, 0, 0, 0, 0, 0, 0, 0, 1, 1, 1, 1, -1, -1, -1, -1, 1, 1, 1, 1, -1, - 1, -1, -1, 0, 0, 0, 0, 0, 0, 0, 0, 1, -1, -1, 1, -1, 1, 1, -1, 1, -1, -1, 1, -1, 1, 1, -1, 0, 0, 0, 0, 0, 0, 0, 0, 1, 1, -1, -1, -1, -1, 1, 1, 1, 1, -1, -1, -1, -1, 1, 1, 0, 0, 0, 0, 0, 0, 0, 0);

$s_3$=(1, 1, -1, -1, 1, 1, -1, -1, 1, 1, -1, -1, 1, 1, -1, -1, 0, 0, 0, 0, 0, 0, 0, 0, 1, -1, -1, 1, 1, -1, -1, 1, 1, -1, -1, 1, 1, -1, -1, 1, 0, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0, 0, 1, -1, 1, -1, 1, -1, 1, -1, 1, -1, 1, -1, 1, -1, 1, -1, 0, 0, 0, 0, 0, 0, 0, 0, 1, 1, -1, -1, - 1, -1, 1, 1, 1, 1, -1, -1, -1, -1, 1, 1, 0, 0, 0, 0, 0, 0, 0, 0, 1, -1, -1, 1, -1, 1, 1, -1, 1, -1, -1, 1, -1, 1, 1, -1, 0, 0, 0, 0, 0, 0, 0, 0, 1, 1, 1, 1, -1, -1, -1, -1, 1, 1, 1, 1, -1, -1, -1, -1, 0, 0, 0, 0, 0, 0, 0, 0, 1, -1, 1, -1, -1, 1, -1, 1, 1, -1, 1, -1, -1, 1, -1, 1, 0, 0, 0, 0, 0, 0, 0, 0);

$s_4$=(1, -1, -1, 1, 1, -1, -1, 1, 1, -1, -1, 1, 1, -1, -1, 1, 0, 0, 0, 0, 0, 0, 0, 0, 1, 1, -1, -1, 1, 1, - 1, -1, 1, 1, -1, -1, 1, 1, -1, -1, 0, 0, 0, 0, 0, 0, 0, 0, 1, -1, 1, -1, 1, -1, 1, -1, 1, -1, 1, -1, 1, -1, 1, -1, 0, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0, 0, 1, -1, -1, 1, - 1, 1, 1, -1, 1, -1, -1, 1, -1, 1, 1, -1, 0, 0, 0, 0, 0, 0, 0, 0, 1, 1, -1, -1, -1, -1, 1, 1, 1, 1, -1, -1, -1, -1, 1, 1, 0, 0, 0, 0, 0, 0, 0, 0, 1, -1, 1, -1, -1, 1, -1, 1, 1, -1, 1, -1, -1, 1, -1, 1, 0, 0, 0, 0, 0, 0, 0, 0, 1, 1, 1, 1, -1, -1, -1, -1, 1, 1, 1, 1, -1, -1, -1, -1, 0, 0, 0, 0, 0, 0, 0, 0);

$s_5$=(1, 1, 1, 1, -1, -1, -1, -1, 1, 1, 1, 1, -1, -1, -1, -1, 0, 0, 0, 0, 0, 0, 0, 0, 1, -1, 1, -1, -1, 1, -1, 1, 1, -1, 1, -1, -1, 1, -1, 1, 0, 0, 0, 0, 0, 0, 0, 0, 1, 1, -1, -1, -1, -1, 1, 1, 1, 1, -1, -1, -1, -1, 1, 1, 0, 0, 0, 0, 0, 0, 0, 0, 1, -1, -1, 1, -1, 1, 1, -1, 1, -1, -1, 1, -1, 1, 1, -1, 0, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0, 0, 1, -1, 1, -1, 1, -1, 1, -1, 1, -1, 1, -1, 1, - 1, 1, -1, 0, 0, 0, 0, 0, 0, 0, 0, 1, 1, -1, -1, 1, 1, -1, -1, 1, 1, -1, -1, 1, 1, -1, -1, 0, 0, 0, 0, 0, 0, 0, 0, 1, -1, -1, 1, 1, -1, -1, 1, 1, -1, -1, 1, 1, -1, -1, 1, 0, 0, 0, 0, 0, 0, 0, 0);

$s_6$=(1, -1, 1, -1, -1, 1, -1, 1, 1, -1, 1, -1, -1, 1, -1, 1, 0, 0, 0, 0, 0, 0, 0, 0, 1, 1, 1, 1, -1, -1, -1, - 1, -1, 1, 1, 1, 1, -1, -1, -1, -1, 0, 0, 0, 0, 0, 0, 0, 0, 1, -1, -1, 1, -1, 1, 1, -1, 1, -1, -1, 1, -1, 1, 1, -1, 0, 0, 0, 0, 0, 0, 0, 0, 1, 1, -1, -1, -1, -1, 1, 1, 1, 1, -1, -1, -1, -1, 1, 1, 0, 0, 0, 0, 0, 0, 0, 0, 1, - 1, 1, -1, 1, -1, 1, -1, 1, -1, 1, -1, 1, -1, 1, -1, 0, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0, 0, 1, -1, -1, 1, 1, -1, -1, 1, 1, -1, -1, 1, 1, -1, -1, 1, 0, 0, 0, 0, 0, 0, 0, 0, 1, 1, -1, -1, 1, 1, -1, -1, 1, 1, -1, -1, 1, 1, -1, -1, 0, 0, 0, 0, 0, 0, 0, 0);

$s_7$=(1, 1, -1, -1, -1, -1, 1, 1, 1, 1, -1, -1, -1, -1, 1, 1, 0, 0, 0, 0, 0, 0, 0, 0, 1, -1, -1, 1, -1, 1, 1, -1, 1, -1, -1, 1, -1, 1, 1, -1, 0, 0, 0, 0, 0, 0, 0, 0, 1, 1, 1, 1, -1, -1, -1, -1, 1, 1, 1, 1, -1, -1, -1, -1, 0, 0, 0, 0, 0, 0, 0, 0, 1, -1, 1, -1, -1, 1, -1, 1, 1, -1, 1, -1, -1, 1, -1, 1, 0, 0, 0, 0, 0, 0, 0, 0, 1, 1, -1, -1, 1, 1, -1, -1, 1, 1, -1, -1, 1, 1, -1, -1, 0, 0, 0, 0, 0, 0, 0, 0, 1, -1, -1, 1, 1, -1, -1, 1, 1, -1, - --> 1, 1, 1, -1, -1, 1, 0, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0, 0, 1, -1, 1, -1, 1, -1, 1, -1, 1, -1, 1, 1, -1, 1, -1, 0, 0, 0, 0, 0, 0, 0, 0);

$s_8$=(1, -1, -1, 1, -1, 1, 1, -1, 1, -1, -1, 1, -1, 1, 1, -1, 0, 0, 0, 0, 0, 0, 0, 0, 1, 1, -1, -1, -1, - 1, 1, 1, 1, 1, -1, -1, -1, -1, 1, 1, 0, 0, 0, 0, 0, 0, 0, 0, 1, -1, 1, -1, -1, 1, -1, 1, 1, -1, 1, -1, -1, 1, - 1, 1, 0, 0, 0, 0, 0, 0, 0, 0, 1, 1, 1, 1, -1, -1, -1, -1, 1, 1, 1, 1, -1, -1, -1, -1,0,0,0,0,0,0,0,0, 1, -1, -1, 1, 1, -1, -1, 1, 1, -1, -1, 1, 1, -1, -1, 1, 0, 0, 0, 0, 0, 0, 0, 0, 1, 1, -1, -1, 1, 1, -1, -1, 1, 1, -1, -1, 1, 1, -1, -1, 0, 0, 0, 0, 0, 0, 0, 0, 1, -1, 1, -1, 1, -1, 1, -1, 1, -1, 1, -1, 1, -1, 1, -1, 0, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0, 0);

$s_9$=(1, 1, 1, 1, 1, 1, 1, 1, -1, -1, -1, -1, -1, -1, -1, -1, 0, 0, 0, 0, 0, 0, 0, 0, 1, -1, 1, -1, 1, -1, 1, -1, -1, 1, -1, 1, -1, 1, -1, 1, 0, 0, 0, 0, 0, 0, 0, 0, 1, 1, -1, -1, 1, 1, -1, -1, -1, -1, 1, 1, -1, -1, 1, 1, 0, 0, 0, 0, 0, 0, 0, 0, 1, -1, -1, 1, 1, -1, -1, 1, -1, 1, 1, -1, -1, 1, 1, -1, 0, 0, 0, 0, 0, 0, 0, 0, 1, 1, 1, 1, -1, -1, -1, -1, -1, -1, -1, -1, 1, 1, 1, 1, 0, 0, 0, 0, 0, 0, 0, 0, 1, -1, 1, -1, -1, 1, -1, 1, -1, 1, - 1, 1, 1, -1, 1, -1, 0, 0, 0, 0, 0, 0, 0, 0, 1, 1, -1, -1, -1, -1, 1, 1, -1, -1, 1, 1, 1, 1, -1, -1, 0, 0, 0, 0, 0, 0, 0, 0, 1, -1, -1, 1, -1, 1, 1, -1, -1, 1, 1, -1, 1, -1, -1, 1, 0, 0, 0, 0, 0, 0, 0, 0);

$s_{10}$=(1, -1, 1, -1, 1, -1, 1, -1, -1, 1, -1, 1, -1, 1, -1, 1, 0, 0, 0, 0, 0, 0, 0, 0, 1, 1, 1, 1, 1, 1, 1, 1, -1, -1, -1, -1, -1, -1, -1, -1, 0, 0, 0, 0, 0, 0, 0, 0, 1, -1, -1, 1, 1, -1, -1, 1, -1, 1, 1, -1, -1, 1, 1, -1, 0, 0, 0, 0, 0, 0, 0, 0, 1, 1, -1, -1, 1, 1, -1, -1, -1, -1, 1, 1, -1, -1, 1, 1, 0, 0, 0, 0, 0, 0, 0, 0, 1, - 1, 1, -1, -1, 1, -1, 1, -1, 1, -1, 1, 1, -1, 1, -1, 0, 0, 0, 0, 0, 0, 0, 0, 1, 1, 1, 1, -1, -1, -1, -1, -1, - 1, -1, -1, 1, 1, 1, 1, 0, 0, 0, 0, 0, 0, 0, 0, 1, -1, -1, 1, -1, 1, 1, -1, -1, 1, 1, -1, 1, -1, -1, 1, 0, 0, 0, 0, 0, 0, 0, 0, 1, 1, -1, -1, -1, -1, 1, 1, -1, -1, 1, 1, 1, 1, -1, -1, 0, 0, 0, 0, 0, 0, 0, 0);

$s_{11}$=(1, 1, -1, -1, 1, 1, -1, -1, -1, -1, 1, 1, -1, -1, 1, 1, 0, 0, 0, 0, 0, 0, 0, 0, 1, -1, -1, 1, 1, -1, -1, 1, -1, 1, 1, -1, -1, 1, 1, -1, 0, 0, 0, 0, 0, 0, 0, 0, 1, 1, 1, 1, 1, 1, 1, 1, -1, -1, -1, -1, -1, -1, -1, -1, 0, 0, 0, 0, 0, 0, 0, 0, 1, -1, 1, -1, 1, -1, 1, -1, -1, 1, -1, 1, -1, 1, -1, 1, 0, 0, 0, 0, 0, 0, 0, 0, 1, 1, -1, -1, -1, -1, 1, 1, -1, -1, 1, 1, 1, 1, -1, -1, 0, 0, 0, 0, 0, 0, 0, 0, 1, -1, -1, 1, -1, 1, 1, -1, -1, 1, 1, -1, 1, -1, -1, 1, 0, 0, 0, 0, 0, 0, 0, 0, 1, 1, 1, 1, -1, -1, -1, -1, -1, -1, -1, -1, 1, 1, 1, 1, 0, 0, 0, 0, 0, 0, 0, 0, 1, -1, 1, -1, -1, 1, -1, 1, -1, 1, -1, 1, 1, -1, 1, -1, 0, 0, 0, 0, 0, 0, 0, 0);

$s_{12}$=(1, -1, -1, 1, 1, -1, -1, 1, -1, 1, 1, -1, -1, 1, 1, -1, 0, 0, 0, 0, 0, 0, 0, 0, 1, 1, -1, -1, 1, 1, -1, -1, -1, -1, 1, 1, -1, -1, 1, 1, 0, 0, 0, 0, 0, 0, 0, 0, 1, -1, 1, -1, 1, -1, 1, -1, -1, 1, -1, 1, -1, 1,-1, 1, 0, 0, 0, 0, 0, 0, 0, 0, 1, 1, 1, 1, 1, 1, 1, 1, -1, -1, -1, -1, -1, -1, -1, -1, 0, 0, 0, 0, 0, 0, 0, 0, 1, -1, -1, 1, -1, 1, 1, -1, -1, 1, 1, -1, 1, -1, -1, 1, 0, 0, 0, 0, 0, 0, 0, 0, 1, 1, -1, -1, -1, -1, 1, 1, -1, - 1, 1, 1, 1, 1, -1, -1, 0, 0, 0, 0, 0, 0, 0, 0, 1, -1, 1, -1, -1, 1, -1, 1, -1, 1, -1, 1, 1, -1, 1, -1, 0, 0, 0, 0, 0, 0, 0, 0, 1, 1, 1, 1, -1, -1, -1, -1, -1, -1, -1, -1, 1, 1, 1, 1, 0, 0, 0, 0, 0, 0, 0, 0);

$s_{13}$=(1, 1, 1, 1, -1, -1, -1, -1, -1, -1, -1, -1, 1, 1, 1, 1, 0, 0, 0, 0, 0, 0, 0, 0, 1, -1, 1, -1, -1, 1, -1, 1, -1, 1, -1, 1, 1, -1, 1, -1, 0, 0, 0, 0, 0, 0, 0, 0, 1, 1, -1, -1, -1, -1, 1, 1, -1, -1, 1, 1, 1, 1, -1, -1, 0, 0, 0, 0, 0, 0, 0, 0, 1, -1, -1, 1, -1, 1, 1, -1, -1, 1, 1, -1, 1, -1, -1, 1, 0, 0, 0, 0, 0, 0, 0, 0, 1, 1, --> 1, 1, 1, 1, 1, 1, -1, -1, -1, -1, -1, -1, -1, -1, 0, 0, 0, 0, 0, 0, 0, 0, 1, -1, 1, -1, 1, -1, 1, -1, -1, 1, - 1, 1, -1, 1, -1, 1, 0, 0, 0, 0, 0, 0, 0, 0, 1, 1, -1, -1, 1, 1, -1, -1, -1, -1, 1, 1, -1, -1, 1, 1, 0, 0, 0, 0, 0, 0, 0, 0, 1, -1, -1, 1, 1, -1, -1, 1, -1, 1, 1, -1, -1, 1, 1, -1, 0, 0, 0, 0, 0, 0, 0, 0);

$s_{14}$=(1, -1, 1, -1, -1, 1, -1, 1, -1, 1, -1, 1, 1, -1, 1, -1, 0, 0, 0, 0, 0, 0, 0, 0, 1, 1, 1, 1, -1, -1, -1, -1, -1, -1, -1, -1, 1, 1, 1, 1, 0, 0, 0, 0, 0, 0, 0, 0, 1, -1, -1, 1, -1, 1, 1, -1, -1, 1, 1, -1, 1, -1, - 1, 1, 0, 0, 0, 0, 0, 0, 0, 0, 1, 1, -1, -1, -1, -1, 1, 1, -1, -1, 1, 1, 1, 1, -1, -1,0,0,0,0,0,0,0,0, 1, -1, 1, -1, 1, -1, 1, -1, -1, 1, -1, 1, -1, 1, -1, 1, 0, 0, 0, 0, 0, 0, 0, 0, 1, 1, 1, 1, 1, 1, 1, 1, -1, -1, - 1, -1, -1, -1, -1, -1, 0, 0, 0, 0, 0, 0, 0, 0, 1, -1, -1, 1, 1, -1, -1, 1, -1, 1, 1, -1, -1, 1, 1, -1, 0, 0, 0, 0, 0, 0, 0, 0, 1, 1, -1, -1, 1, 1, -1, -1, -1, -1, 1, 1, -1, -1, 1, 1, 0, 0, 0, 0, 0, 0, 0, 0);

$s_{15}$=(1, 1, -1, -1, -1, -1, 1, 1, -1, -1, 1, 1, 1, 1, -1, -1, 0, 0, 0, 0, 0, 0, 0, 0, 1, -1, -1, 1, -1, 1, 1, -1, -1, 1, 1, -1, 1, -1, -1, 1, 0, 0, 0, 0, 0, 0, 0, 0, 1, 1, 1, 1, -1, -1, -1, -1, -1, -1, -1, -1, 1, 1, 1, 1, 0, 0, 0, 0, 0, 0, 0, 0, 1, -1, 1, -1, -1, 1, -1, 1, -1, 1, -1, 1, 1, -1, 1, -1, 0, 0, 0, 0, 0, 0, 0, 0, 1, 1, -1, -1, 1, 1, -1, -1, -1, -1, 1, 1, -1, -1, 1, 1, 0, 0, 0, 0, 0, 0, 0, 0, 1, -1, -1, 1, 1, -1, -1, 1, -1, 1, 1, -1, -1, 1, 1, -1, 0, 0, 0, 0, 0, 0, 0, 0, 1, 1, 1, 1, 1, 1, 1, 1, -1, -1, -1, -1, -1, -1, -1, -1, 0, 0, 0, 0, 0, 0, 0, 0, 1, -1, 1, -1, 1, -1, 1, -1, -1, 1, -1, 1, -1, 1, -1, 1, 0, 0, 0, 0, 0, 0, 0, 0); and

$s_{16}$=(1, -1, -1, 1, -1, 1, 1, -1, -1, 1, 1, -1, 1, -1, -1, 1, 0, 0, 0, 0, 0, 0, 0, 0, 1, 1, -1, -1, -1, - 1, 1, 1, -1, -1, 1, 1, 1, 1, -1, -1, 0, 0, 0, 0, 0, 0, 0, 0, 1, -1, 1, -1, -1, 1, -1, 1, -1, 1, -1, 1, 1, -1, 1, -1, 0, 0, 0, 0, 0, 0, 0, 0, 1, 1, 1, 1, -1, -1, -1, -1, -1, -1, -1, -1, 1, 1, 1, 1, 0, 0, 0, 0, 0, 0, 0, 0, 1, - 1, -1, 1, 1, -1, -1, 1, -1, 1, 1, -1, -1, 1, 1, -1, 0, 0, 0, 0, 0, 0, 0, 0, 1, 1, -1, -1, 1, 1, -1, -1, -1, - 1, 1, 1, -1, -1, 1, 1, 0, 0, 0, 0, 0, 0, 0, 0, 1, -1, 1, -1, 1, -1, 1, -1, -1, 1, -1, 1, -1, 1, -1, 1, 0, 0, 0, 0, 0, 0, 0, 0, 1, 1, 1, 1, 1, 1, 1, 1, -1, -1, -1, -1, -1, -1, -1, -1, 0, 0, 0, 0, 0, 0, 0, 0), wherein N≤16, and Q=192.

**9.** The method according to any one of claims 1 to 6, wherein the transmitted waveform sequence set comprises:

$\boldsymbol{s_1}$ = (-1, -1, -1, 1, 1, -1, 1, 1, 0, 0, 0, 0, 0, 0, 0, 0, 1, 1, 1, -1, 1, -1, 1, 1, 0, 0, 0, 0, 0, 0, 0, 0, 1, -1, 1, 1, -1, -1, -1, 1, 0, 0, 0, 0, 0, 0, 0, 0, -1, 1, -1, -1, -1, -1, -1, 1);

$\boldsymbol{s_2}$ = (1, 1, 1, -1, 1, -1, 1, 1, 0, 0, 0, 0, 0, 0, 0, 0, -1, -1, -1, 1, 1, -1, 1, 1, 0, 0, 0, 0, 0, 0, 0, 0, -1, 1, -1, -1, -1, -1, -1, 1, 0, 0, 0, 0, 0, 0, 0, 0, 1, -1, 1, 1, -1, -1, -1, 1);

$\boldsymbol{s_3}$ = (1,1, -1, 1, -1, 1, 1, 1, 0, 0, 0, 0, 0, 0, 0, 0, -1, -1, 1, -1, -1, 1, 1, 1, 0, 0, 0, 0, 0, 0, 0, 0, -1, 1, 1, 1, 1, 1, -1, 1, 0, 0, 0, 0, 0, 0, 0, 0, 1, -1, -1, -1, 1, 1, -1, 1); and

$\boldsymbol{s_4}$ = (-1, -1, 1, -1, -1, 1, 1, 1, 0, 0, 0, 0, 0, 0, 0, 0, 1, 1, -1, 1, -1, 1, 1, 1, 0, 0, 0, 0, 0, 0, 0, 0, 1, -1, -1, -1, 1, 1, -1, 1, 0, 0, 0, 0, 0, 0, 0, 0, --> -1, 1, 1, 1, 1, 1, -1, 1), wherein N≤4, and Q=56.

**10.** The method according to any one of claims 1 to 6, wherein the transmitted waveform sequence set comprises:

$$s_1 = \begin{pmatrix} 1,1,-1,1,-1,1,-1,-1,1,1,0,0,0,0,0,0,0,0,0,0,1,1,-1,1,-1,1,-1,-1,1,1,0,0,0,0,0, \\ 0,0,0,0,0,1,1,-1,1,1,1,1,1,-1,-1,0,0,0,0,0,0,0,0,0,0,1,1,-1,1,1,1,1,1,-1,-1 \end{pmatrix}$$

$$s_2 = \begin{pmatrix} 1,1,-1,1,-1,1,-1,-1,1,1,0,0,0,0,0,0,0,0,0,0,-1,-1,1,-1,1,-1,1,1,-1,-1,0,0,0,0,0, \\ 0,0,0,0,0,1,1,-1,1,1,1,1,1,-1,-1,0,0,0,0,0,0,0,0,0,0,-1,-1,1,-1,-1,-1,-1,-1,1,1 \end{pmatrix}$$

$$s_3 = \begin{pmatrix} -1,-1,1,1,1,1,1,-1,1,1,0,0,0,0,0,0,0,0,0,0,-1,-1,1,1,1,1,1,-1,1,1,0,0,0,0,0,0, \\ 0,0,0,0,-1,-1,1,1,-1,1,-1,1,-1,-1,0,0,0,0,0,0,0,0,0,0,-1,-1,1,1,-1,1,-1,1,-1,-1 \end{pmatrix}$$

$$s_4 = \begin{pmatrix} -1,-1,1,1,1,1,1,-1,1,1,0,0,0,0,0,0,0,0,0,0,1,1,-1,-1,-1,-1,-1,1,-1,-1,0,0,0,0,0, \\ 0,0,0,0,0,-1,-1,1,1,-1,1,-1,1,-1,-1,0,0,0,0,0,0,0,0,0,0,1,1,-1,-1,1,-1,1,-1,1,1 \end{pmatrix},$$

wherein N≤4, and Q=70.

**11.** The method according to any one of claims 1 to 6, wherein the transmitted waveform sequence set comprises:

$$s_1 = \begin{pmatrix} 1,1,-1,-1,1,-1,1,-1,1,-1,-1,1,-1,-1,-1,-1,0,0,0,0,0,0,0,0,0,0,0,0,0,0,0,0,1,1,-1,-1,1,-1, \\ 1,-1,-1,1,1,-1,1,1,1,1,0,0,0,0,0,0,0,0,0,0,0,0,0,0,0,0,1,-1,-1,1,1,1,1,1,1,1,-1,-1,-1,1, \\ -1,1,0,0,0,0,0,0,0,0,0,0,0,0,0,0,0,0,1,-1,-1,1,1,1,1,1,-1,-1,1,1,1,-1,1,-1 \end{pmatrix}$$

$$s_2 = \begin{pmatrix} 1,1,-1,-1,1,-1,1,-1,-1,1,1,-1,1,1,1,1,0,0,0,0,0,0,0,0,0,0,0,0,0,0,0,0,1,1,-1,-1,1,-1,1, \\ -1,1,-1,-1,1,-1,-1,-1,-1,0,0,0,0,0,0,0,0,0,0,0,0,0,0,0,0,1,-1,-1,1,1,1,1,1,-1,-1,1,1,1, \\ -1,1,-1,0,0,0,0,0,0,0,0,0,0,0,0,0,0,0,0,1,-1,-1,1,1,1,1,1,1,1,-1,-1,-1,1,-1,1 \end{pmatrix}$$

$$s_3 = \begin{pmatrix} 1,1,1,1,1,-1,-1,1,1,-1,1,-1,-1,-1,1,1,0,0,0,0,0,0,0,0,0,0,0,0,0,0,0,0,1,1,1,1,1,-1,-1,1, \\ -1,1,-1,1,1,1,-1,-1,0,0,0,0,0,0,0,0,0,0,0,0,0,0,0,0,1,-1,1,-1,1,1,-1,-1,1,1,1,1,-1,1,1, \\ -1,0,0,0,0,0,0,0,0,0,0,0,0,0,0,0,0,1,-1,1,-1,1,1,-1,-1,-1,-1,-1,-1,1,-1,-1,1 \end{pmatrix}$$

$$s_4 = \begin{pmatrix} 1,1,1,1,1,-1,-1,1,-1,1,-1,1,1,1,-1,-1,0,0,0,0,0,0,0,0,0,0,0,0,0,0,0,0,1,1,1,1,1,-1,-1,1, \\ 1,-1,1,-1,-1,-1,1,1,0,0,0,0,0,0,0,0,0,0,0,0,0,0,0,0,1,-1,1,-1,1,1,-1,-1,-1,-1,-1,-1,1,-1, \\ -1,1,0,0,0,0,0,0,0,0,0,0,0,0,0,0,0,0,1,-1,1,-1,1,1,-1,-1,1,1,1,1,-1,1,1,-1 \end{pmatrix},$$

wherein
N≤4, and Q=112.

**12.** The method according to any one of claims 1 to 6, wherein the transmitted waveform sequence set comprises:

$$s_1 = \begin{pmatrix} 1,1,-1,1,-1,1,-1,-1,1,1,1,1,-1,1,1,1,1,1,-1,-1,0,0,0,0,0,0,0,0,0,0,0,0,0,0,0,0,0,0,0,0, \\ 1,1,-1,1,-1,1,-1,-1,1,1,1,1,-1,1,1,1,1,1,-1,-1,0,0,0,0,0,0,0,0,0,0,0,0,0,0,0,0,0,0,0,0, \\ 1,1,-1,1,-1,1,-1,-1,1,1,-1,-1,1,-1,-1,-1,-1,-1,1,1,0,0,0,0,0,0,0,0,0,0,0,0,0,0,0,0,0,0, \\ 0,0,1,1,-1,1,-1,1,-1,-1,1,1,-1,-1,1,-1,-1,-1,-1,-1,1,1 \end{pmatrix}$$

$$s_2 = \begin{pmatrix} 1,1,-1,1,-1,1,-1,-1,1,1,1,1,-1,1,1,1,1,1,-1,-1,0,0,0,0,0,0,0,0,0,0,0,0,0,0,0,0,0,0,0,0, \\ -1,-1,1,-1,1,-1,1,1,-1,-1,-1,-1,1,-1,-1,-1,-1,-1,1,1,0,0,0,0,0,0,0,0,0,0,0,0,0,0,0,0,0, \\ 0,0,0,1,1,-1,1,-1,1,-1,-1,1,1,-1,-1,1,-1,-1,-1,-1,-1,1,1,0,0,0,0,0,0,0,0,0,0,0,0,0,0,0, \\ 0,0,0,0,0,-1,-1,1,-1,1,-1,1,1,-1,-1,1,1,-1,1,1,1,1,1,-1,-1 \end{pmatrix}$$

$$s_3 = \begin{pmatrix} 1,1,-1,-1,-1,-1,-1,1,-1,-1,1,1,-1,-1,1,-1,1,-1,1,1,0,0,0,0,0,0,0,0,0,0,0,0,0,0,0,0,0,0,0, \\ 0,1,1,-1,-1,-1,-1,-1,1,-1,-1,1,1,-1,-1,1,-1,1,-1,1,1,0,0,0,0,0,0,0,0,0,0,0,0,0,0,0,0,0,0, \\ 0,0,1,1,-1,-1,-1,-1,-1,1,-1,-1,-1,-1,1,1,-1,1,-1,1,-1,-1,0,0,0,0,0,0,0,0,0,0,0,0,0,0,0,0, \\ 0,0,0,0,1,1,-1,-1,-1,-1,-1,1,-1,-1,-1,-1,1,1,-1,1,-1,1,-1,-1 \end{pmatrix}$$

$$s_4 = \begin{pmatrix} 1,1,-1,-1,-1,-1,-1,1,-1,-1,1,1,-1,-1,1,-1,1,-1,1,1,0,0,0,0,0,0,0,0,0,0,0,0,0,0,0,0,0,0,0, \\ 0,-1,-1,1,1,1,1,1,-1,1,1,-1,-1,1,1,-1,1,-1,1,-1,-1,0,0,0,0,0,0,0,0,0,0,0,0,0,0,0,0,0,0,0, \\ 0,1,1,-1,-1,-1,-1,-1,1,-1,-1,-1,-1,1,1,-1,1,-1,1,-1,-1,0,0,0,0,0,0,0,0,0,0,0,0,0,0,0,0,0, \\ 0,0,0,-1,-1,1,1,1,1,1,-1,1,1,1,1,-1,-1,1,-1,1,-1,1,1 \end{pmatrix},$$

wherein
$N \leq 4$, and $Q=140$.

**13.** An ultra-wideband-based sensing method, wherein the method comprises:

receiving, by a receiving end, Q pulse bursts from a transmitting end, wherein each pulse burst comprises N pulses, a $j^{th}$ pulse in an $i^{th}$ pulse burst in the Q pulse bursts corresponds to an $i^{th}$ element in a $j^{th}$ sequence in a transmitted waveform sequence set, i and j are positive integers, the transmitted waveform sequence set comprises N sequences, N is a positive integer, the transmitted waveform sequence set comprises a sequence having an aperiodic ZCZ, a sequence length of the sequence is Q, Q is a positive integer, $1 \leq i \leq Q$, and $1 \leq j \leq N$; and correlating, by the receiving end, the Q pulse bursts with a local sequence set, and determining information about a target within a detection range, wherein
the local sequence set is the same as the transmitted waveform sequence set, and the detection range is related to a size of the ZCZ and a repetition period of the pulse burst.

**14.** The method according to claim 13, wherein the detection range is a half of a product of the size of the ZCZ, the repetition period of the pulse burst, and the speed of light.

**15.** The method according to claim 13 or 14, wherein the information about the target comprises distance information of the target or speed information of the target.

**16.** The method according to any one of claims 13 to 15, wherein the transmitted waveform sequence set comprises P sequences, $P \geq N$, and P is a positive integer.

**17.** The method according to any one of claims 13 to 16, wherein the transmitted waveform sequence set is constructed based on a first matrix, a second matrix, and a third matrix, and the first matrix, the second matrix, and the third matrix are all Hadamard matrices.

**18.** The method according to claim 17, wherein an order of the first matrix is the same as an order of the second matrix; and the transmitted waveform sequence set is constructed by performing the following steps:

constructing, based on the first matrix and the third matrix, a sequence set having a sequence length of M(Z+C), wherein M, Z, and C are positive integers, M is the order of the first matrix and the second matrix, Z is an order of the third matrix, and C is a preset value; and
constructing, based on the second matrix and the sequence set having the sequence length of M(Z+C) through n iterations, a sequence set having a sequence length of $M^{n+1}(Z+C)$ as the transmitted waveform sequence set, wherein n is a positive integer, the sequence set having the sequence length of $M^{n+1}(Z+C)$ comprises $M\times Z$ sequences, $N\leq M\times Z$, and $Q=M^{n+1}(Z+C)$.

**19.** The method according to any one of claims 13 to 16, wherein the transmitted waveform sequence set is constructed based on a sequence family, the sequence family comprises a plurality of sequence sets, all of the sequence sets comprise a same quantity of sequences, and all of the sequences have a same sequence length;

for all sequences in any sequence set in the sequence family, a sum of values of aperiodic autocorrelation functions respectively corresponding to all the sequences at a delay $\tau$ equal to 0 is a product of the quantity of sequences and the sequence length, and a sum of values of the aperiodic autocorrelation functions respectively corresponding to all the sequences at the delay $\tau$ not equal to 0 is zero; and
for all sequence groups determined based on any two sequence sets in the sequence family, each sequence group comprises two sequences with a same sequence number, a sum of values of aperiodic cross-correlation functions respectively corresponding to all the sequence groups at the delay $\tau$ equal to 0 is zero, and a sum of values of the aperiodic cross-correlation functions respectively corresponding to all the sequence groups at the delay $\tau$ not equal to 0 is zero.

**20.** The method according to claim 19, wherein the transmitted waveform sequence set is constructed by performing the following step:
adding K zero elements between two sequences in each sequence set in the sequence family, to obtain a sequence in the transmitted waveform sequence set, wherein K is a positive integer.

**21.** The method according to any one of claims 13 to 20, wherein the transmitted waveform sequence set comprises:

$s_1$=(1, 1, 1, 1, 1, 1, 1, 1, 0, 0, 0, 0, -1, -1, 1, 1, -1, -1, 1, 1, 0, 0, 0, 0, -1, 1, -1, 1, -1, 1, -1, 1, 0, 0, 0, 0, -1, 1, 1, - 1, -1, 1, 1, -1, 0, 0, 0, 0);

$s_2$=(-1, -1, 1, 1, -1, -1, 1, 1, 0, 0, 0, 0, 1, 1, 1, 1, 1, 1, 1, 1, 0, 0, 0, 0, 1, -1, -1, 1, 1, -1, -1, --> 1, 0, 0, 0, 0, 1, -1, 1, -1, 1, -1, 1, -1, 0, 0, 0, 0);

$s_3$=(-1, 1, -1, 1, -1, 1, -1, 1, 0, 0, 0, 0, 1, -1, -1, 1, 1, -1, -1, 1, 0, 0, 0, 0, 1, 1, 1, 1, 1, 1, 1, 1, 0, 0, 0, 0, 1, 1, -1, -1, 1, 1, -1, -1, 0, 0, 0, 0);

$s_4$=(-1, 1, 1, -1, -1, 1, 1, -1, 0, 0, 0, 0, 1, -1, 1, -1, 1, -1, 1, -1, 0, 0, 0, 0, 1, 1, -1, -1, 1, 1,-1, -1, 0, 0, 0, 0, 1, 1, 1, 1, 1, 1, 1, 1, 0, 0, 0, 0);

$s_5$=(1, 1, 1, 1, -1, -1, -1, -1, 0, 0, 0, 0, -1, -1, 1, 1, 1, 1, -1, -1, 0, 0, 0, 0, -1, 1, -1, 1, 1, -1, 1, -1, 0, 0, 0, 0, -1, 1, 1, -1, 1, -1, -1, 1, 0, 0, 0, 0);

$s_6$=(-1, -1, 1, 1, 1, 1, -1, -1, 0, 0, 0, 0, 1, 1, 1, 1, -1, -1, -1, -1, 0, 0, 0, 0, 1, -1, -1, 1, -1, 1, 1, -1, 0, 0, 0, 0, 1, -1, 1, -1, -1, 1, -1, 1, 0, 0, 0, 0);

$s_7$=(-1, 1, -1, 1, 1, -1, 1, -1, 0, 0, 0, 0, 1, -1, -1, 1, -1, 1, 1, -1, 0, 0, 0, 0, 1, 1, 1, 1, -1, -1, - 1, -1, 0, 0, 0, 0, 1, 1, -1, -1, -1, -1, 1, 1, 0, 0, 0, 0); and

$s_8$=(-1, 1, 1, -1, 1, -1, -1, 1, 0, 0, 0, 0, 1, -1, 1, -1, -1, 1, -1, 1, 0, 0, 0, 0, 1, 1, -1, -1, -1, - 1, 1, 1, 0, 0, 0, 0, 1, 1, 1, 1, -1, -1, -1, -1, 0, 0, 0, 0), wherein N≤8, and Q=48.

**22.** The method according to any one of claims 13 to 20, wherein the transmitted waveform sequence set comprises:

$s_1$=(1, 1, 1, 1, 1, 1, 1, 1, 1, 1, 1, 1, 1, 1, 1, 1, 0, 0, 0, 0, 0, 0, 0, 1, -1, 1, -1, 1, -1, 1, -1, 1, - 1, 1, -1, 1, -1, 1, -1, 0, 0, 0, 0, 0, 0, 0, 0, 1, 1, -1, -1, 1, 1, -1, -1, 1, 1, -1, -1, 1, 1, -1, -1, 0, 0, 0, 0, 0, 0, 0, 0, 1, -1, -1, 1, 1, -1, -1, 1, 1, -1, -1, 1, 1, -1, -1, 1, 0, 0, 0, 0, 0, 0, 0, 1, 1, 1, 1, -1, - 1, -1, -1, 1, 1, 1, 1, -1, -1, -1, -1, 0, 0, 0, 0, 0, 0, 0, 1, -1, 1, -1, -1, 1, -1, 1, 1, -1, 1, -1, -1, 1, -1, 1, 0, 0, 0, 0, 0, 0, 0, 1, 1, -1, -1, -1, -1, 1, 1, 1, 1, -1, -1, -1, -1, 1, 1, 0, 0, 0, 0, 0, 0, 0, 0, 1, -1, -1, 1, -1, 1, 1, -1, 1, -1, -1, 1, -1, 1, 1, -1, 0, 0, 0, 0, 0, 0, 0);

$s_2$=(1, -1, 1, -1, 1, -1, 1, -1, 1, -1, 1, -1, 1, -1, 1, -1, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0, 0, 1, -1, -1, 1, 1, -1, -1, 1, 1, -1, -1, 1, 1, -1, -1, 1, 0, 0, 0, 0, 0, 0, 0, 1, 1, -1, -1, 1, 1, -1, -1, 1, 1, -1, -1, 1, 1, -1, -1, 0, 0, 0, 0, 0, 0, 0, 1, -1, 1, -1, -1, 1, -1, 1, 1, -1, 1, -1, -1, 1, -1, 1, 0, 0, 0, 0, 0, 0, 0, 1, 1, 1, 1, -1, -1, -1, -1, 1, 1, 1, 1, -1, - 1, -1, -1, 0, 0, 0, 0, 0, 0, 0, 1, -1, -1, 1, -1, 1, 1, -1, 1, -1, -1, 1, -1, 1, 1, -1, 0, 0, 0, 0, 0, 0, 0, 0, 1, 1, -1, -1, -1, -1, 1, 1, 1, 1, -1, -1, -1, -1, 1, 1, 0, 0, 0, 0, 0, 0, 0);

$s_3$=(1, 1, -1, -1, 1, 1, -1, -1, 1, 1, -1, -1, 1, 1, -1, -1, 0, 0, 0, 0, 0, 0, 0, 1, -1, -1, 1, 1, -1, -1, 1, 1, -1, -1, 1, 1, -1, -1, 1, 0, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0, 1, -1, 1, -1, 1, -1, 1, -1, 1, -1, 1, -1, 1, -1, 1, -1, 0, 0, 0, 0, 0, 0, 0, 1, 1, -1, -1, - 1, -1, 1, 1, 1, 1, -1, -1, -1, -1, 1, 1, 0, 0, 0, 0, 0, 0, 0, 1, -1, -1, 1, -1, 1, 1, -1, 1, -1, -1, 1, -1, 1, 1, -1, 0, 0, 0, 0, 0, 0, 0, 1, 1, 1, 1, -1, -1, -1, -1, 1, 1, 1, 1, -1, -1, -1, -1, 0, 0, 0, 0, 0, 0, 0, 0, 1, -1, 1, -1, -1, 1, -1, 1, 1, -1, 1, -1, -1, 1, -1, 1, 0, 0, 0, 0, 0, 0, 0);

$s_4$=(1, -1, -1, 1, 1, -1, -1, 1, 1, -1, -1, 1, 1, -1, -1, 1, 0, 0, 0, 0, 0, 0, 0, 1, 1, -1, -1, 1, 1, - --> 1, -1, 1, 1, -1, -1, 1, 1, -1, -1, 0, 0, 0, 0, 0, 0, 0, 0, 1, -1, 1, -1, 1, -1, 1, -1, 1, -1, 1, -1, 1, -1, 1, -1, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0, 1, -1, -1, 1, - 1, 1, 1, -1, 1, -1, -1, 1, -1, 1, 1, -1, 0, 0, 0, 0, 0, 0, 0, 1, 1, -1, -1, -1, -1, 1, 1, 1, 1, -1, -1, -1, -1, 1, 1, 0, 0, 0, 0, 0, 0, 0, 1, -1, 1, -1, -1, 1, -1, 1, 1, -1, 1, -1, -1, 1, -1, 1, 0, 0, 0, 0, 0, 0, 0, 0, 1, 1, 1, 1, -1, -1, -1, -1, 1, 1, 1, 1, -1, -1, -1, -1, 0, 0, 0, 0, 0, 0, 0);

$s_5$=(1, 1, 1, 1, -1, -1, -1, -1, 1, 1, 1, 1, -1, -1, -1, -1, 0, 0, 0, 0, 0, 0, 0, 1, -1, 1, -1, -1, 1, -1, 1, 1, -1, 1, -1, -1, 1, -1, 1, 0, 0, 0, 0, 0, 0, 0, 0, 1, 1, -1, -1, -1, -1, 1, 1, 1, 1, -1, -1, -1, -1, 1, 1, 0, 0, 0, 0, 0, 0, 0, 1, -1, -1, 1, -1, 1, 1, -1, 1, -1, -1, 1, -1, 1, 1, - 1, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0, 1, -1, 1, -1, 1, -1, 1, -1, 1, -1, 1, -1, 1, - 1, 1, -1, 0, 0, 0, 0, 0, 0, 0, 1, 1, -1, -1, 1, 1, -1, -1, 1, 1, -1, -1, 1, 1, -1, -1, 0, 0, 0, 0, 0, 0, 0, 0, 1, -1, -1, 1, 1, -1, -1, 1, 1, -1, -1, 1, 1, -1, -1, 1, 0, 0, 0, 0, 0, 0, 0);

$s_6$=(1, -1, 1, -1, -1, 1, -1, 1, 1, -1, 1, -1, -1, 1, -1, 1, 0, 0, 0, 0, 0, 0, 0, 1, 1, 1, 1, -1, -1, - 1, -1, 1, 1, 1, 1, -1, -1, -1, -1, 0, 0, 0, 0, 0, 0, 0, 0, 1, -1, -1, 1, -1, 1, 1, -1, 1, -1, -1, 1, -1, 1, 1, -1, 0, 0, 0, 0, 0, 0, 0, 1, 1, -1, -1, -1, -1, 1, 1, 1, 1, -1, -1, -1, -1, 1, 1, 0, 0, 0, 0, 0, 0, 0, 1, - 1, 1, -1, 1, -1, 1, -1, 1, -1, 1, -1, 1, -1, 1, -1, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0, 1, -1, -1, 1, 1, -1, -1, 1, 1, -1, -1, 1, 1, -1, -1, 1, 0, 0, 0, 0, 0, 0, 0, 0, 1, 1, -1, -1, 1, 1, -1, -1, 1, 1, -1, -1, 1, 1, -1, -1, 0, 0, 0, 0, 0, 0, 0);

$s_7$=(1, 1, -1, -1, -1, -1, 1, 1, 1, 1, -1, -1, -1, -1, 1, 1, 0, 0, 0, 0, 0, 0, 0, 1, -1, -1, 1, -1, 1, 1, -1, 1, -1, -1, 1, -1, 1, 1, -1, 0, 0, 0, 0, 0, 0, 0, 0, 1, 1, 1, 1, -1, -1, -1, -1, 1, 1, 1, 1, -1, -1, -1, -1, 0, 0, 0, 0, 0, 0, 0, 1, -1, 1, -1, -1, 1, -1, 1, 1, -1, 1, -1, -1, 1, -1, 1, 0, 0, 0, 0, 0, 0, 0, 1, 1, -1, -1, 1, 1, -1, -1, 1, 1, -1, -1, 1, 1, -1, -1, 0, 0, 0, 0, 0, 0, 0, 1, -1, -1, 1, 1, -1, -1, 1, 1, -1, - 1, 1, 1, -1, -1, 1, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0, 0, 1, -1, 1, -1, 1, -1, 1, -1, 1, -1, 1, -1, 1, -1, 1, -1, 0, 0, 0, 0, 0, 0, 0);

$s_8$=(1, -1, -1, 1, -1, 1, 1, -1, 1, -1, -1, 1, -1, 1, 1, -1, 0, 0, 0, 0, 0, 0, 0, 1, 1, -1, -1, -1, - 1, 1, 1, 1, 1, -1, -1, -1, -1, 1, 1, 0, 0, 0, 0, 0, 0, 0, 0, 1, -1, 1, -1, -1, 1, -1, 1, 1, -1, 1, -1, -1, 1, - 1, 1, 0, 0, 0, 0, 0, 0, 0, 1, 1, 1, 1, -1, -1, -1, -1, 1, 1, 1, 1, -1, -1, -1, -1, 0, 0, 0, 0, 0, 0, 0, 1, -1, -1, 1, 1, -1, -1, 1, 1, -1, -1, 1, 1, -1, -1, 1, 0, 0, 0, 0, 0, 0, 0, 1, 1, -1, -1, 1, 1, -1, -1, 1, 1, -1, -1, 0, 0, 0, 0, 0, 0, 0, 1, -1, 1, -1, 1, -1, 1, -1, 1, -1, 1, -1, 1, -1, 1, -1, 0, 0, 0, 0, 0, 0, 0, 0, 1, 1, 1, 1, 1, 1, 1, 1, 1, 1, 1, 1, 1, 1, 1, 1, 0, 0, 0, 0, 0, 0, 0);

$s_9$=(1, 1, 1, 1, 1, 1, 1, 1, -1, -1, -1, -1, -1, -1, -1, -1, 0, 0, 0, 0, 0, 0, 0, 0, 1, -1, 1, -1, 1, -1, 1, -1, -1, 1, -1, 1, -1, 1, -1, 1, 0, 0, 0, 0, 0, 0, 0, 0, 1, 1, -1, -1, 1, 1, -1, -1, -1, -1, 1, 1, -1, -1, 1, 1, 0, 0, 0, 0, 0, 0, 0, 0, 1, -1, -1, 1, 1, -1, -1, 1, -1, 1, 1, -1, -1, 1, 1, -1, 0, 0, 0, 0, 0, 0, 0, 0, 1, 1, 1, 1, -1, -1, -1, -1, -1, -1, -1, -1, 1, 1, 1, 1, 0, 0, 0, 0, 0, 0, 0, 0, 1, -1, 1, -1, -1, 1, -1, 1, -1, 1, - 1, 1, 1, -1, 1, -1, 0, 0, 0, 0, 0, 0, 0, 0, 1, 1, -1, -1, -1, -1, 1, 1, -1, -1, 1, 1, 1, 1, -1, -1, 0, 0, 0, 0, 0, 0, 0, 0, 1, -1, -1, 1, -1, 1, 1, -1, -1, 1, 1, -1, 1, -1, -1, 1, 0, 0, 0, 0, 0, 0, 0, 0);

$s_{10}$=(1, -1, 1, -1, 1, -1, 1, -1, -1, 1, -1, 1, -1, 1, -1, 1, 0, 0, 0, 0, 0, 0, 0, 0, 1, 1, 1, 1, 1, 1, 1, 1, -1, -1, -1, -1, -1, -1, -1, -1, 0, 0, 0, 0, 0, 0, 0, 0, 1, -1, -1, 1, 1, -1, -1, 1, -1, 1, 1, -1, -1, 1, 1, -1, 0, 0, 0, 0, 0, 0, 0, 0, 1, 1, -1, -1, 1, 1, -1, -1, -1, -1, 1, 1, -1, -1, 1, 1, 0, 0, 0, 0, 0, 0, 0, 0, 1, - 1, 1, -1, -1, 1, -1, 1, -1, 1, -1, 1, 1, -1, 1, -1, 0, 0, 0, 0, 0, 0, 0, 0, 1, 1, 1, 1, -1, -1, -1, -1, -1, - 1, -1, -1, 1, 1, 1, 1, 0, 0, 0, 0, 0, 0, 0, 0, 1, -1, -1, 1, -1, 1, 1, -1, -1, 1, 1, -1, 1, -1, -1, 1, 0, 0, 0, 0, 0, 0, 0, 0, 1, 1, -1, -1, -1, -1, 1, 1, -1, -1, 1, 1, 1, 1, -1, -1, 0, 0, 0, 0, 0, 0, 0, 0);

$s_{11}$=(1, 1, -1, -1, 1, 1, -1, -1, -1, -1, 1, 1, -1, -1, 1, 1, 0, 0, 0, 0, 0, 0, 0, 0, 1, -1, -1, 1, 1, -1, -1, 1, -1, 1, 1, -1, -1, 1, 1, -1, 0, 0, 0, 0, 0, 0, 0, 0, 1, 1, 1, 1, 1, 1, 1, 1, -1, -1, -1, -1, -1, -1, -1, -1, 0, 0, 0, 0, 0, 0, 0, 0, 1, -1, 1, -1, 1, -1, 1, -1, -1, 1, -1, 1, -1, 1, -1, 1, 0, 0, 0, 0, 0, 0, 0, 0, 1, 1, -1, -1, -1, -1, 1, 1, -1, -1, 1, 1, 1, 1, -1, -1, 0, 0, 0, 0, 0, 0, 0, 0, 1, -1, -1, 1, -1, 1, 1, -1, -1, 1, 1, -1, 1, -1, -1, 1, 0, 0, 0, 0, 0, 0, 0, 0, 1, 1, 1, 1, -1, -1, -1, -1, -1, -1, -1, -1, 1, 1, 1, 1, 0, 0, 0, 0, 0, 0, 0, 0, 1, -1, 1, -1, -1, 1, -1, 1, -1, 1, -1, 1, 1, -1, 1, -1, 0, 0, 0, 0, 0, 0, 0, 0);

$s_{12}$=(1, -1, -1, 1, 1, -1, -1, 1, -1, 1, 1, -1, -1, 1, 1, -1, 0, 0, 0, 0, 0, 0, 0, 0, 1, 1, -1, -1, 1, 1, -1, -1, -1, -1, 1, 1, -1, -1, 1, 1, 0, 0, 0, 0, 0, 0, 0, 0, 1, -1, 1, -1, 1, -1, 1, -1, -1, 1, -1, 1, -1, 1, - 1, 1, 0, 0, 0, 0, 0, 0, 0, 0, 1, 1, 1, 1, 1, 1, 1, 1, -1, -1, -1, -1, -1, -1, -1, -1, 0, 0, 0, 0, 0, 0, 0, 0, 1, -1, -1, 1, -1, 1, 1, -1, -1, 1, 1, -1, 1, -1, -1, 1, 0, 0, 0, 0, 0, 0, 0, 0, 1, 1, -1, -1, -1, -1, 1, 1, -1, - 1, 1, 1, 1, 1, -1, -1, 0, 0, 0, 0, 0, 0, 0, 0, 1, -1, 1, -1, -1, 1, -1, 1, -1, 1, -1, 1, 1, -1, 1, - 1, 0, 0, 0, 0, 0, 0, 0, 0, 1, 1, 1, 1, -1, -1, -1, -1, -1, -1, -1, -1, 1, 1, 1, 1, 0, 0, 0, 0, 0, 0, 0, 0);

$s_{13}$=(1, 1, 1, 1, -1, -1, -1, -1, -1, -1, -1, -1, 1, 1, 1, 1, 0, 0, 0, 0, 0, 0, 0, 0, 1, -1, 1, -1, -1, 1, -1, 1, -1, 1, -1, 1, 1, -1, 1, -1, 0, 0, 0, 0, 0, 0, 0, 0, 1, 1, -1, -1, -1, -1, 1, 1, -1, -1, 1, 1, 1, 1, -1, -1, 0, 0, 0, 0, 0, 0, 0, 0, 1, -1, -1, 1, -1, 1, 1, -1, -1, 1, 1, -1, 1, -1, -1, 1, 0, 0, 0, 0, 0, 0, 0, 0, 1, 1, 1, 1, 1, 1, 1, 1, -1, -1, -1, -1, -1, -1, -1, -1, 0, 0, 0, 0, 0, 0, 0, 0, 1, -1, 1, -1, 1, -1, 1, - 1, 1, -1, 1, -1, 1, 0, 0, 0, 0, 0, 0, 0, 0, 1, 1, -1, -1, 1, 1, -1, -1, -1, -1, 1, 1, -1, -1, 1, 1, 0, 0, 0, 0, 0, 0, 0, 0, 1, -1, -1, 1, 1, -1, -1, 1, -1, 1, 1, -1, -1, 1, 1, -1, 0, 0, 0, 0, 0, 0, 0, 0);

$s_{14}$=(1, -1, 1, -1, -1, 1, -1, 1, -1, 1, -1, 1, 1, -1, 1, -1, 0, 0, 0, 0, 0, 0, 0, 0, 1, 1, 1, 1, -1, -1, -1, -1, -1, -1, -1, -1, 1, 1, 1, 1, 0, 0, 0, 0, 0, 0, 0, 0, 1, -1, -1, 1, -1, 1, 1, -1, -1, 1, 1, -1, 1, -1, - 1, 1, 0, 0, 0, 0, 0, 0, 0, 0, 1, 1, -1, -1, -1, -1, 1, 1, -1, -1, 1, 1, 1, 1, -1, -1,0,0,0,0,0,0,0,0, 1, -1, 1, -1, 1, -1, 1, -1, -1, 1, -1, 1, -1, 1, -1, 1, 0, 0, 0, 0, 0, 0, 0, 0, 1, 1, 1, 1, 1, 1, 1, 1, -1, -1, - 1, -1, -1, -1, -1, -1, 0, 0, 0, 0, 0, 0, 0, 0, 1, -1, -1, 1, 1, -1, -1, 1, -1, 1, 1, -1, -1, 1, 1, -1, 0, 0, 0, 0, 0, 0, 0, 0, 1, 1, - 1, - 1, 1, 1, - 1, - 1, - 1, - 1, 1, 1, - 1, - 1, 1, 1, 0, 0, 0, 0, 0, 0, 0, 0);

$s_{15}$=(1, 1, -1, -1, -1, -1, 1, 1, -1, -1, 1, 1, 1, 1, -1, -1, 0, 0, 0, 0, 0, 0, 0, 0, 1, -1, -1, 1, -1, 1, 1, -1, -1, 1, 1, -1, 1, -1, -1, 1, 0, 0, 0, 0, 0, 0, 0, 0, 1, 1, 1, 1, -1, -1, -1, -1, -1, -1, -1, -1, 1, 1, 1, 1, 0, 0, 0, 0, 0, 0, 0, 0, 1, -1, 1, -1, -1, 1, -1, 1, -1, 1, -1, 1, 1, -1, 1, -1, 0, 0, 0, 0, 0, 0, 0, 0, 1, 1, -1, -1, 1, 1, -1, -1, -1, -1, 1, 1, -1, -1, 1, 1, 0, 0, 0, 0, 0, 0, 0, 0, 1, -1, -1, 1, 1, -1, -1, 1, -1, 1, 1, -1, -1, 1, 1, -1, 0, 0, 0, 0, 0, 0, 0, 0, 1, 1, 1, 1, 1, 1, 1, 1, -1, -1, -1, -1, -1, -1, -1, -1, 0, 0, 0, 0, 0, --> 0, 0, 0, 1, -1, 1, -1, 1, -1, 1, -1, -1, 1, -1, 1, -1, 1, -1, 1, 0, 0, 0, 0, 0, 0, 0, 0);

and

$s_{16}$=(1, -1, -1, 1, -1, 1, 1, -1, -1, 1, 1, -1, 1, -1, -1, 1, 0, 0, 0, 0, 0, 0, 0, 0, 1, 1, -1, -1, -1, - 1, 1, 1, -1, -1, 1, 1, 1, 1, -1, -1, 0, 0, 0, 0, 0, 0, 0, 0, 1, -1, 1, -1, -1, 1, -1, 1, 1, -1, 1, 1, -1, 1, -1, 0, 0, 0, 0, 0, 0, 0, 0, 1, 1, 1, 1, -1, -1, -1, -1, -1, -1, -1, -1, 1, 1, 1, 1, 0, 0, 0, 0, 0, 0, 0, 0, 1, - 1, -1, 1, 1, -1, -1, 1, -1, 1, 1, -1, -1, 1, 1, -1, 0, 0, 0, 0, 0, 0, 0, 0, 1, 1, -1, -1, 1, 1, -1, -1, -1, -1, - 1, 1, 1, -1, -1, 1, 1, 0, 0, 0, 0, 0, 0, 0, 0, 1, -1, 1, -1, 1, -1, 1, -1, -1, 1, -1, 1, -1, 1, -1, 1, 0, 0, 0, 0, 0, 0, 0, 0, 1, 1, 1, 1, 1, 1, 1, 1, -1, -1, -1, -1, -1, -1, -1, -1, 0, 0, 0, 0, 0, 0, 0, 0), wherein N≤16, and Q=192.

**23.** The method according to any one of claims 13 to 20, wherein the transmitted waveform sequence set comprises:

$s_1$ = (-1, -1, -1, 1, 1, -1, 1, 1, 0, 0, 0, 0, 0, 0, 0, 0, 1, 1, 1, -1, 1, -1, 1, 1, 0, 0, 0, 0, 0, 0, 0, 0, 1, -1, 1, 1, -1, -1, -1, 1, 0, 0, 0, 0, 0, 0, 0, 0, -1, 1, -1, -1, -1, -1, -1, 1);

$s_2$ = (1, 1, 1, -1, 1, -1, 1, 1, 0, 0, 0, 0, 0, 0, 0, 0, -1, -1, -1, 1, 1, -1, 1, 1, 0, 0, 0, 0, 0, 0, 0, 0, -1, 1, -1, -1, -1, -1, -1, 1, 0, 0, 0, 0, 0, 0, 0, 0, 1, -1, 1, 1, -1, -1, -1, 1);

$s_3$ = (1, 1, -1, 1, -1, 1, 1, 1, 0, 0, 0, 0, 0, 0, 0, 0, -1, -1, 1, -1, -1, 1, 1, 1, 0, 0, 0, 0, 0, 0, 0, 0, -1, 1, 1, 1, 1, 1, -1, 1, 0, 0, 0, 0, 0, 0, 0, 0, 1, -1, -1, -1, 1, 1, -1, 1); and

$s_4$ = (-1, -1, 1, -1, -1, 1, 1, 1, 0, 0, 0, 0, 0, 0, 0, 0,1, 1, -1, 1, -1, 1, 1, 1, 0, 0, 0, 0, 0, 0, 0, 0, 1, -1, -1, -1, 1, 1, -1, 1, 0, 0, 0, 0, 0, 0, 0, 0, -1, 1, 1, 1, 1, 1, -1, 1), wherein N≤4, and Q=56.

**24.** The method according to any one of claims 13 to 20, wherein the transmitted waveform sequence set comprises:

$$s_1 = \begin{pmatrix} 1,1,-1,1,-1,1,-1,-1,1,1,0,0,0,0,0,0,0,0,0,0,1,1,-1,1,-1,1,-1,-1,1,1,0,0,0,0,0, \\ 0,0,0,0,0,1,1,-1,1,1,1,1,1,-1,-1,0,0,0,0,0,0,0,0,0,0,1,1,-1,1,1,1,1,1,-1,-1 \end{pmatrix}$$

$$s_2 = \begin{pmatrix} 1,1,-1,1,-1,1,-1,-1,1,1,0,0,0,0,0,0,0,0,0,0,-1,-1,1,-1,1,-1,1,1,-1,-1,0,0,0,0,0, \\ 0,0,0,0,0,1,1,-1,1,1,1,1,1,-1,-1,0,0,0,0,0,0,0,0,0,0,-1,-1,1,-1,-1,-1,-1,-1,1,1 \end{pmatrix}$$

$$s_3 = \begin{pmatrix} -1,-1,1,1,1,1,1,-1,1,1,0,0,0,0,0,0,0,0,0,0,-1,-1,1,1,1,1,1,-1,1,1,0,0,0,0,0,0, \\ 0,0,0,0,-1,-1,1,1,-1,1,-1,1,-1,-1,0,0,0,0,0,0,0,0,0,0,-1,-1,1,1,-1,1,-1,1,-1,-1 \end{pmatrix}$$

$$s_4 = \begin{pmatrix} -1,-1,1,1,1,1,1,-1,1,1,0,0,0,0,0,0,0,0,0,0,1,1,-1,-1,-1,-1,-1,1,-1,-1,0,0,0,0,0, \\ 0,0,0,0,0,-1,-1,1,1,-1,1,-1,1,-1,-1,0,0,0,0,0,0,0,0,0,0,1,1,-1,-1,1,-1,1,-1,1,1 \end{pmatrix},$$

wherein N≤4, and Q=70.

**25.** The method according to any one of claims 13 to 20, wherein the transmitted waveform sequence set comprises:

$$s_1 = \begin{pmatrix} 1,1,-1,-1,1,-1,1,-1,1,-1,-1,1,-1,-1,-1,-1,0,0,0,0,0,0,0,0,0,0,0,0,0,0,0,0,1,1,-1,-1,1,-1, \\ 1,-1,-1,1,1,-1,1,1,1,1,0,0,0,0,0,0,0,0,0,0,0,0,0,0,0,0,1,-1,-1,1,1,1,1,1,1,1,-1,-1,-1,1, \\ -1,1,0,0,0,0,0,0,0,0,0,0,0,0,0,0,0,0,1,-1,-1,1,1,1,1,1,-1,-1,1,1,1,-1,1,-1 \end{pmatrix}$$

$$s_2 = \begin{pmatrix} 1,1,-1,-1,1,-1,1,-1,-1,1,1,-1,1,1,1,1,0,0,0,0,0,0,0,0,0,0,0,0,0,0,0,0,1,1,-1,-1,1,-1,1, \\ -1,1,-1,-1,1,-1,-1,-1,-1,0,0,0,0,0,0,0,0,0,0,0,0,0,0,0,0,1,-1,-1,1,1,1,1,1,-1,-1,1,1,1, \\ -1,1,-1,0,0,0,0,0,0,0,0,0,0,0,0,0,0,0,0,1,-1,-1,1,1,1,1,1,1,1,-1,-1,-1,1,-1,1 \end{pmatrix}$$

$$s_3 = \begin{pmatrix} 1,1,1,1,1,-1,-1,1,1,-1,1,-1,-1,-1,1,1,0,0,0,0,0,0,0,0,0,0,0,0,0,0,0,0,1,1,1,1,1,-1,-1,1, \\ -1,1,-1,1,1,1,-1,-1,0,0,0,0,0,0,0,0,0,0,0,0,0,0,0,0,1,-1,1,-1,1,1,-1,-1,1,1,1,1,-1,1,1, \\ -1,0,0,0,0,0,0,0,0,0,0,0,0,0,0,0,0,1,-1,1,-1,1,1,-1,-1,-1,-1,-1,-1,1,-1,-1,1 \end{pmatrix}$$

$$s_4 = \begin{pmatrix} 1,1,1,1,1,-1,-1,1,-1,1,-1,1,1,1,-1,-1,0,0,0,0,0,0,0,0,0,0,0,0,0,0,0,0,1,1,1,1,1,-1,-1,1, \\ 1,-1,1,-1,-1,-1,1,1,0,0,0,0,0,0,0,0,0,0,0,0,0,0,0,0,1,-1,1,-1,1,1,-1,-1,-1,-1,-1,-1,1,-1, \\ -1,1,0,0,0,0,0,0,0,0,0,0,0,0,0,0,0,0,1,-1,1,-1,1,1,-1,-1,1,1,1,1,-1,1,1,-1 \end{pmatrix},$$

wherein
N≤4, and Q=112.

**26.** The method according to any one of claims 13 to 20, wherein the transmitted waveform sequence set comprises:

$$s_1 = \begin{pmatrix} 1,1,-1,1,-1,1,-1,-1,1,1,1,1,-1,1,1,1,1,-1,-1,0,0,0,0,0,0,0,0,0,0,0,0,0,0,0,0,0,0,0,0, \\ 1,1,-1,1,-1,1,-1,-1,1,1,1,1,-1,1,1,1,1,-1,-1,0,0,0,0,0,0,0,0,0,0,0,0,0,0,0,0,0,0,0,0, \\ 1,1,-1,1,-1,1,-1,-1,1,1,-1,-1,1,-1,-1,-1,-1,-1,1,1,0,0,0,0,0,0,0,0,0,0,0,0,0,0,0,0,0,0, \\ 0,0,1,1,-1,1,-1,1,-1,-1,1,1,-1,-1,1,-1,-1,-1,-1,-1,1,1 \end{pmatrix}$$

$$s_2 = \begin{pmatrix} 1,1,-1,1,-1,1,-1,-1,1,1,1,1,-1,1,1,1,1,-1,-1,0,0,0,0,0,0,0,0,0,0,0,0,0,0,0,0,0,0,0,0, \\ -1,-1,1,-1,1,-1,1,1,-1,-1,-1,-1,1,-1,-1,-1,-1,-1,1,1,0,0,0,0,0,0,0,0,0,0,0,0,0,0,0,0,0, \\ 0,0,0,1,1,-1,1,-1,1,-1,-1,1,1,-1,-1,1,-1,-1,-1,-1,-1,1,1,0,0,0,0,0,0,0,0,0,0,0,0,0,0,0, \\ 0,0,0,0,0,-1,-1,1,-1,1,-1,1,1,-1,-1,1,1,-1,1,1,1,1,1,-1,-1 \end{pmatrix}$$

$$s_3 = \begin{pmatrix} 1,1,-1,-1,-1,-1,-1,1,-1,-1,1,1,-1,-1,1,-1,1,-1,1,1,0,0,0,0,0,0,0,0,0,0,0,0,0,0,0,0,0,0,0, \\ 0,1,1,-1,-1,-1,-1,-1,1,-1,-1,1,1,-1,-1,1,-1,1,-1,1,1,0,0,0,0,0,0,0,0,0,0,0,0,0,0,0,0,0,0, \\ 0,0,1,1,-1,-1,-1,-1,-1,1,-1,-1,-1,-1,1,1,-1,1,-1,1,-1,-1,0,0,0,0,0,0,0,0,0,0,0,0,0,0,0,0, \\ 0,0,0,0,1,1,-1,-1,-1,-1,-1,1,-1,-1,-1,-1,1,1,-1,1,-1,1,-1,-1 \end{pmatrix}$$

$$s_4 = \begin{pmatrix} 1,1,-1,-1,-1,-1,-1,1,-1,-1,1,1,-1,-1,1,-1,1,-1,1,1,0,0,0,0,0,0,0,0,0,0,0,0,0,0,0,0,0,0,0, \\ 0,-1,-1,1,1,1,1,1,-1,1,1,-1,-1,1,1,-1,1,-1,1,-1,-1,0,0,0,0,0,0,0,0,0,0,0,0,0,0,0,0,0,0,0, \\ 0,1,1,-1,-1,-1,-1,-1,1,-1,-1,-1,-1,1,1,-1,1,-1,1,-1,-1,0,0,0,0,0,0,0,0,0,0,0,0,0,0,0,0,0, \\ 0,0,0,-1,-1,1,1,1,1,1,-1,1,1,1,1,-1,-1,1,-1,1,-1,1,1 \end{pmatrix},$$

wherein
N≤4, and Q=140.

**27.** A communication apparatus, wherein the apparatus comprises one or more functional units, and the one or more functional units are configured to perform the method according to any one of claims 1 to 12 or the method according to any one of claims 13 to 26.

**28.** A communication apparatus, comprising a processor, wherein the processor is coupled to a memory, and the processor is configured to execute computer instructions stored in the memory, to enable the communication apparatus to perform the method according to any one of claims 1 to 12 or the method according to any one of claims 13 to 26.

**29.** A computer-readable storage medium, wherein the storage medium stores a computer program or instructions, and when the computer program or the instructions are executed by a communication apparatus, the method according to any one of claims 1 to 12 or the method according to any one of claims 13 to 26 is implemented.

**30.** A communication system, wherein the system comprises a transmitting end and a receiving end, the transmitting end performs the method according to any one of claims 1 to 12, and the receiving end performs the method according to any one of claims 13 to 26.

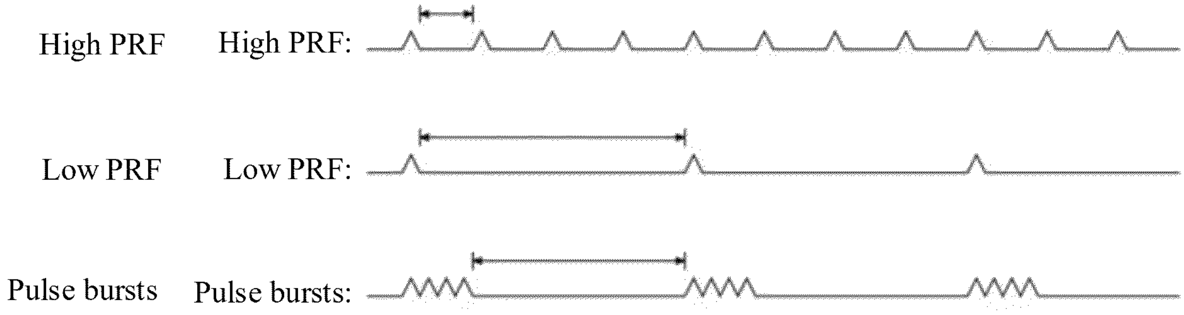


FIG. 1

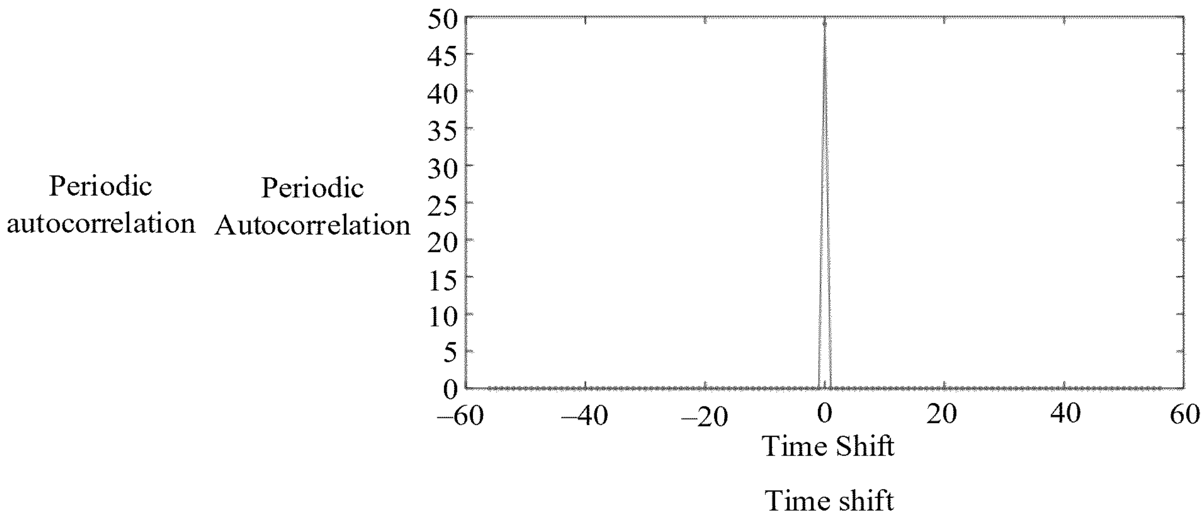


FIG. 2

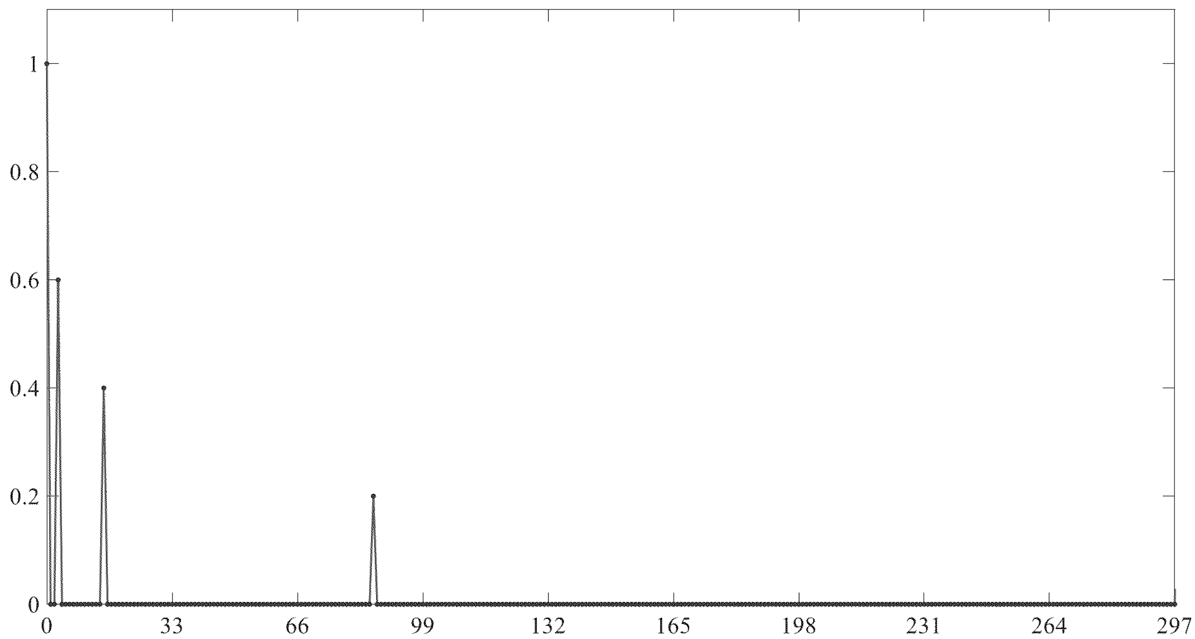


FIG. 3

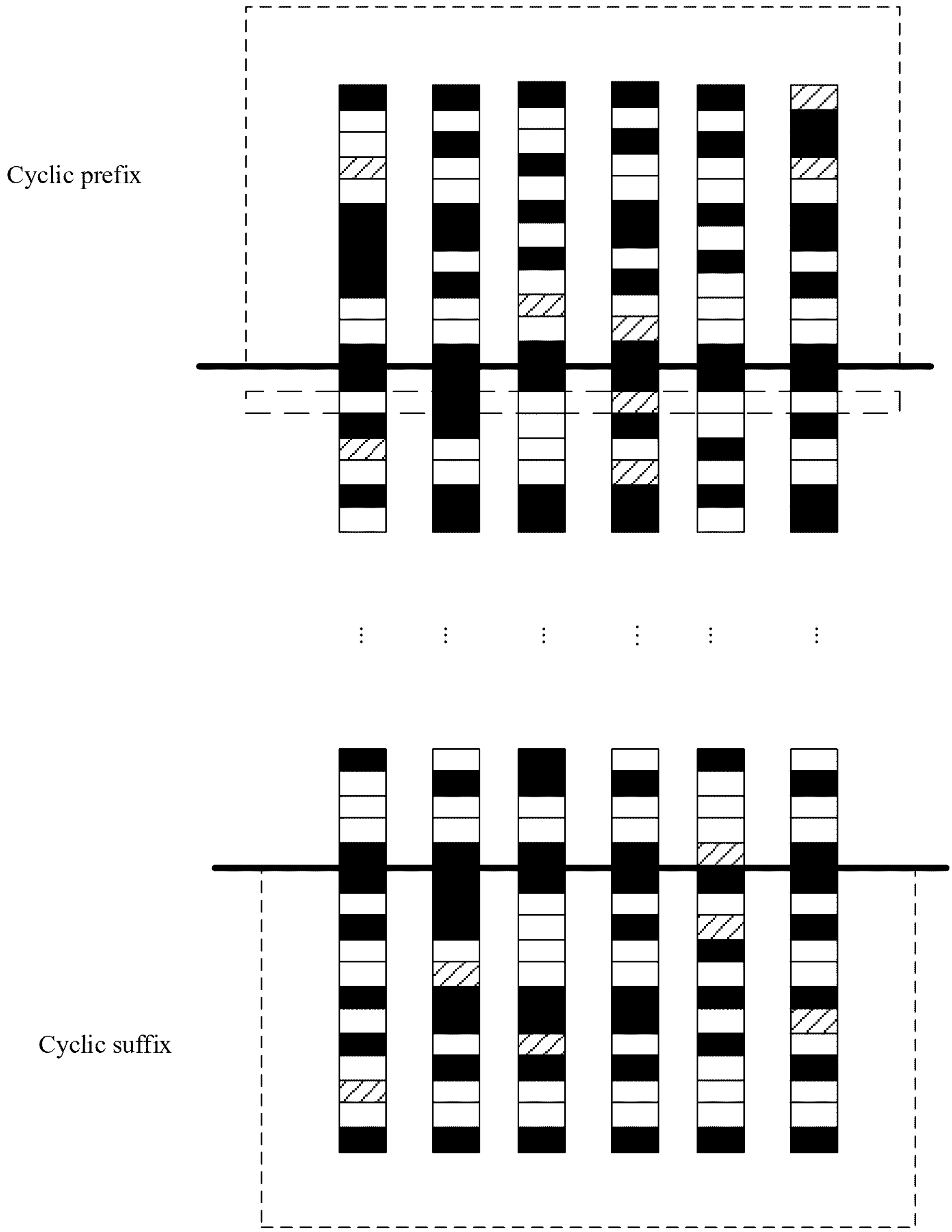


FIG. 4

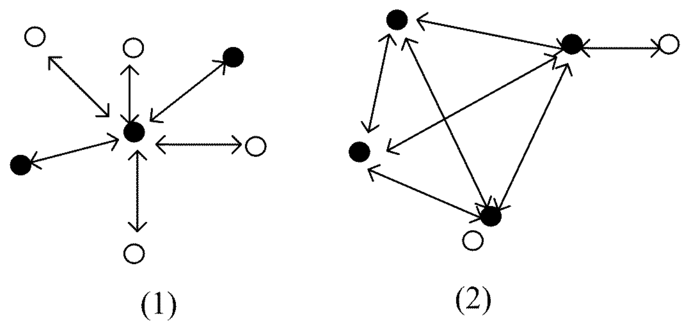
(1)
(2)

FIG. 5

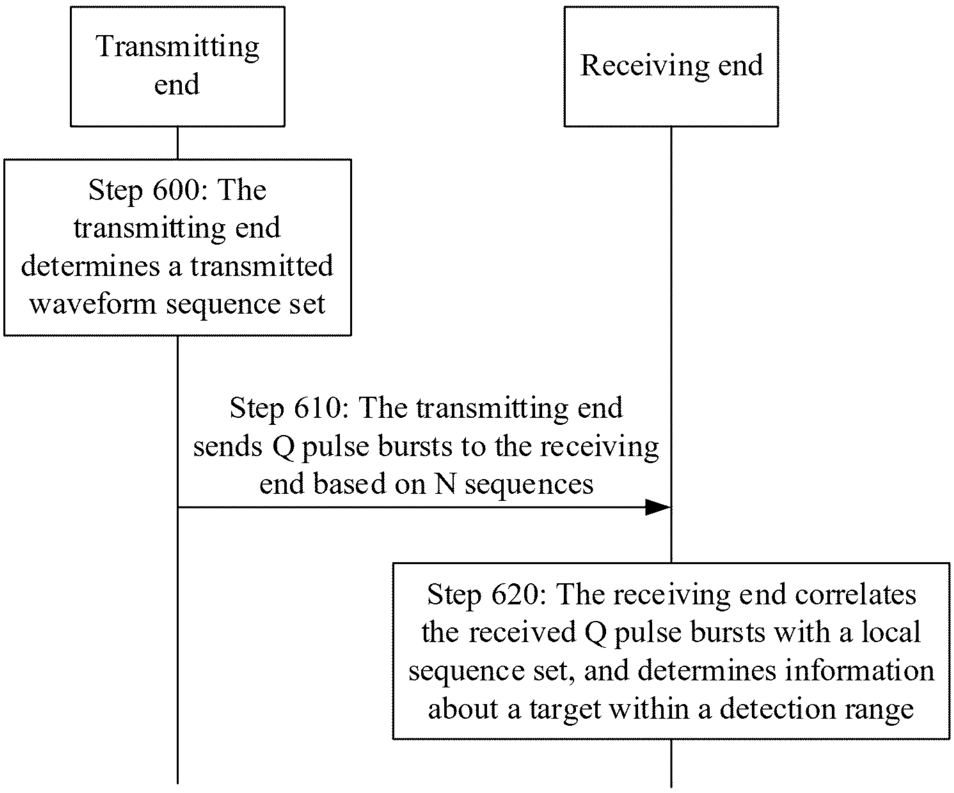
Transmitting end
Receiving end
Step 600: The transmitting end determines a transmitted waveform sequence set
Step 610: The transmitting end sends Q pulse bursts to the receiving end based on N sequences
Step 620: The receiving end correlates the received Q pulse bursts with a local sequence set, and determines information about a target within a detection range

FIG. 6

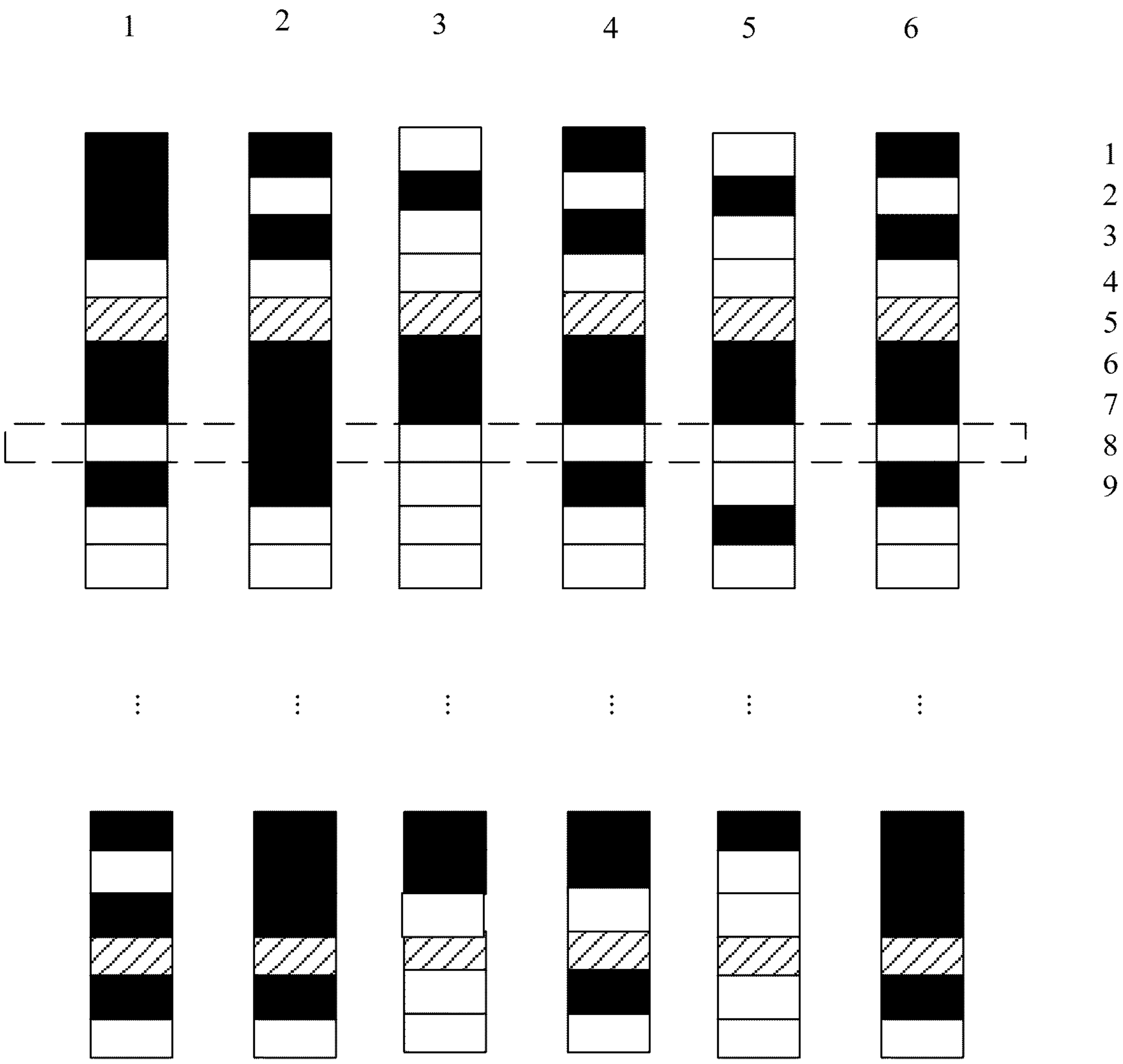


FIG. 7

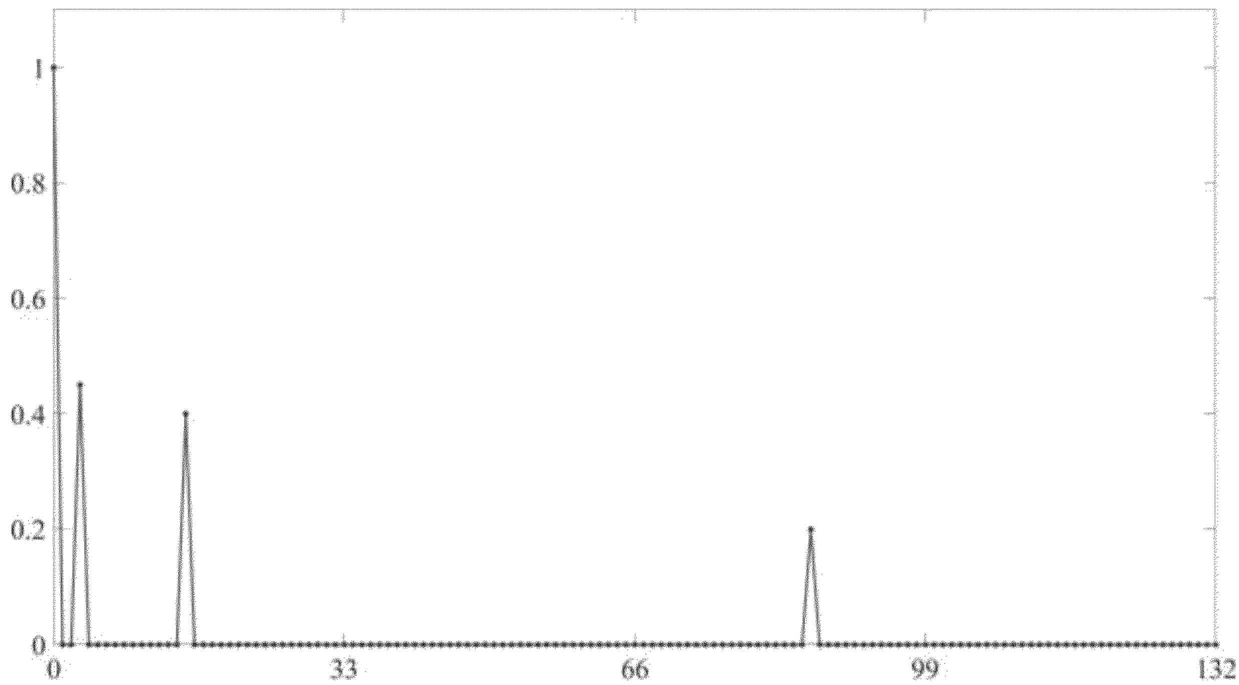


FIG. 8

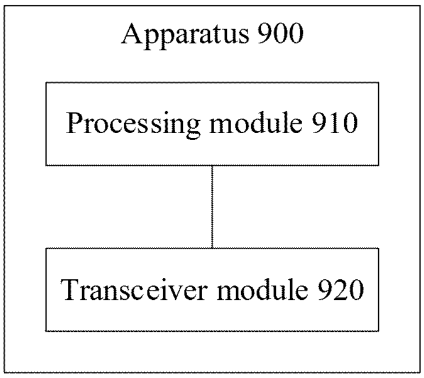


FIG. 9

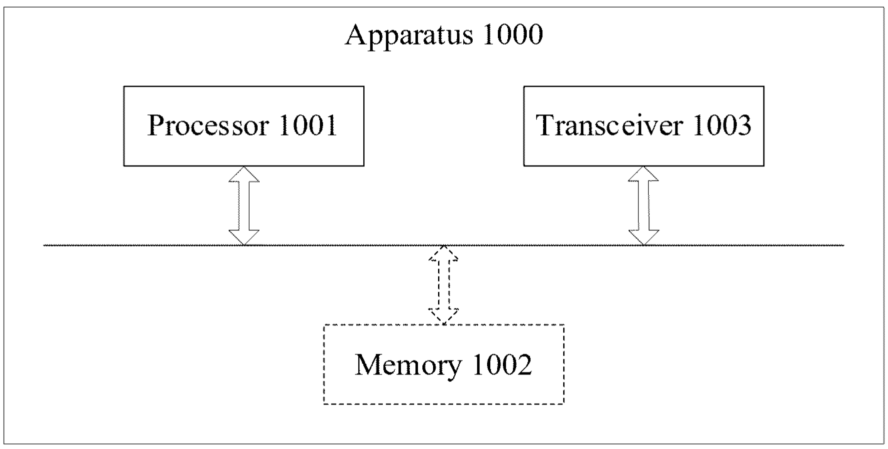


FIG. 10

**INTERNATIONAL SEARCH REPORT**

International application No. **PCT/CN2023/103487**

**A. CLASSIFICATION OF SUBJECT MATTER**

H04J13/00(2011.01)i

According to International Patent Classification (IPC) or to both national classification and IPC

**B. FIELDS SEARCHED**

Minimum documentation searched (classification system followed by classification symbols)

IPC:H04J

Documentation searched other than minimum documentation to the extent that such documents are included in the fields searched

Electronic data base consulted during the international search (name of data base and, where practicable, search terms used)

CNTXT, CNABS, DWPI, VEN, WOTXT, USTXT, EPTXT, CJFD, CNKI, IEEE: 超宽带, 序列集, 脉冲, 零相关, 矩阵, UWB, sequence set, pulse, zero correlation, matrix

**C. DOCUMENTS CONSIDERED TO BE RELEVANT**

| Category* | Citation of document, with indication, where appropriate, of the relevant passages | Relevant to claim No. |
|---|---|---|
| A | CN 102510300 A (BEIHANG UNIVERSITY) 20 June 2012 (2012-06-20)<br>description, paragraphs [0036]-[0044], and figures 1-6 | 1-30 |
| A | CN 105142212 A (JIANGSU ZHONGXING WEITONG INFORMATION TECHNOLOGY CO., LTD.) 09 December 2015 (2015-12-09)<br>description, paragraphs [0040]-[0073], and figures 1-4 | 1-30 |
| A | CN 113447918 A (HUAWEI TECHNOLOGIES CO., LTD.) 28 September 2021 (2021-09-28)<br>entire document | 1-30 |
| A | WO 2007079574 A1 (UNIVERSITY OF VICTORIA INNOVATION AND DEVELOPMENTCORPORATION et al.) 19 July 2007 (2007-07-19)<br>entire document | 1-30 |
| A | 张文婷 等 (ZHANG, Wenting et al.). "基于ZCZ序列的DS-UWB的自适应同步 (An Adaptation Algorithm of Synchronization Scheme Based on the Zero Correlation Zone Sequences for DS-UWB)"<br>*中国电子科学研究院学报 (Journal of China Academy of Electronics and Information Technology),* Vol. 05, No. 06, 31 December 2010 (2010-12-31),<br>entire document | 1-30 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **01 September 2023** | **20 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/103487**

| Patent document cited in search report | | | Publication date (day/month/year) | Patent family member(s) | | | Publication date (day/month/year) |
|---|---|---|---|---|---|---|---|
| CN | 102510300 | A | 20 June 2012 | None | | | |
| CN | 105142212 | A | 09 December 2015 | CN | 05142212 | B | 16 November 2018 |
| CN | 113447918 | A | 28 September 2021 | None | | | |
| WO | 2007079574 | A1 | 19 July 2007 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202211217062